# EUROPEAN PATENT APPLICATION

(11) **EP 4 582 917 A1**
(43) Date of publication of application: **09.07.2025**
(21) Application number: 23867259.6
(22) Date of filing: 01.09.2023
(51) Int. Cl.: G06F 3/0481

(54) **SERVICE WIDGET MANAGEMENT METHOD AND ELECTRONIC DEVICE**

(30) Priority: 19.09.2022 CN 202211138826
(71) Applicant: Huawei Technologies Co., Ltd., Shenzhen, Guangdong 518129 (CN)
(72) Inventor: PENG, Yuzhuo, Shenzhen, Guangdong 518129 (CN); WANG, Hongjun, Shenzhen, Guangdong 518129 (CN); YANG, Zhiyan, Shenzhen, Guangdong 518129 (CN); QIN, Yi, Shenzhen, Guangdong 518129 (CN)
(74) Representative: Maiwald GmbH
(86) International application number: PCT/CN2023/116502
(87) International publication number: WO 2024/060968

(57) **Abstract**

Embodiments of this application provide a service card management method. The method is applied to an electronic device, and includes: The electronic device displays a service card on a screen of the electronic device in response to a first operation of a user, where there is a correspondence between the service card and the first operation. The electronic device displays the service card at a target location in response to an operation of determining the target location by the user, where the target location includes a desktop of the electronic device. In response to an operation of sharing the service card to a second electronic device by the user, the second electronic device displays a first prompt box on a screen of the second electronic device. When the user receives the service card by using the first prompt box, the service card is displayed on the screen of the second electronic device, and interaction between the electronic devices can be further implemented by using the service card. The method provides a plurality of manners of triggering the service card, and can implement interaction between a plurality of devices by using the service card, thereby improving user experience.

## Description

This application claims priority to Chinese Patent Application No. 202211138826.5, filed with the China National Intellectual Property Administration on September 19, 2022 and entitled "SERVICE CARD MANAGEMENT METHOD AND ELECTRONIC DEVICE", which is incorporated herein by reference in its entirety.

### TECHNICAL FIELD

Embodiments of this application relate to the terminal display field, and more specifically, to a service card management method and an electronic device.

### BACKGROUND

With development of terminal technologies and increasing demands of users for experience of using electronic devices, application of service cards in the electronic devices becomes popular. However, a current service card usage manner is single, and application scenarios are limited, which cannot meet user's requirements for user experience.

Therefore, a service card management method needs to be urgently provided, to enrich usage manners and application scenarios of service cards and improve user experience.

### SUMMARY

This application provides a service card management method and an electronic device. The method provides a plurality of manners of triggering and adding a service card, so that sharing of the service card between a plurality of devices can be implemented, and interaction between the plurality of devices can be implemented by using the service card. This enhances degree of activity and a social attribute of the service card, and improves user experience.

According to a first aspect, a service card management method is provided, where the method is applied to an electronic device; and the method includes: The electronic device displays a first service card on a screen of the electronic device in response to an operation of touching and holding a first control on a current page of the electronic device by a user, where the first service card is used to display content corresponding to the first control, and is further used to provide, for the user, an operation entry of the content corresponding to the first control; and the electronic device displays the first service card at a target location in response to a second operation of the user, where the second operation is an operation of determining the target location, and the target location includes a desktop of the electronic device.

Optionally, the first control includes any one of the following controls: a large title, a small title, a tab, a subtab, a subtitle, a list, a banner advertisement, and a blank area of a page. In addition, the first control may include another control. This is not limited in this application.

Optionally, the operation entry of the content corresponding to the first control may be: Add to favorites, Share, Add to desktop, Use across devices, or the like.

Optionally, if the target location is the desktop, the second operation may be tapping a control "Add to desktop"; or if the target location is another device, the second operation may be tapping a share control. In addition, the target location may be another location, and the second operation may be an operation corresponding to adding to another location. This is not limited in this application.

In this embodiment of this application, the user can trigger, by touching and holding a control or the like, initiation of a service card related to the control; and after the service card is initiated, the user can further add the service card to the target location. In this solution, there are various types of controls, and different controls correspond to different service cards, so that more triggering manners and adding manners of the service cards are provided for the user, making the triggering manners and the adding manners of the service cards more flexible and convenient. This can improve user experience.

With reference to the first aspect, in a possible implementation, the first service card is associated with a first icon, and that the electronic device displays the first service card at a target location in response to a second operation of the user includes: The electronic device displays the first service card on the desktop of the electronic device in response to an operation of tapping the first icon by the user.

Optionally, the first icon may be a push pin.

In this embodiment of this application, after the user initiates, by touching and holding a control or the like, a service card related to the control, the user can quickly add the service card to the desktop in a manner of tapping an icon associated with the service card, making a triggering manner and an adding manner of the service card more flexible and convenient. This can improve user experience.

With reference to the first aspect, in a possible implementation, the first service card is associated with a first selection card, and that the electronic device displays the first service card at a target location in response to a second operation of the user includes: The electronic device shares the first service card to a second electronic device in response to an operation of tapping a share control on the first selection card by the user.

In this embodiment of this application, after the user initiates, by touching and holding a control or the like, a service card related to the control, the user can quickly share the service card to another electronic device by tapping a share control associated with the service card or the like, to use the service card across devices. This can further improve user experience.

According to a second aspect, a service card management method is provided, where the method is applied to an electronic device, and the electronic device displays an application page; and the method includes: The electronic device displays one or more second service cards on a screen of the electronic device in response to a third operation of a user, where the one or more second service cards are all service cards on the application page, or the one or more second service cards are all service cards of an application, and the third operation includes a first gesture operation; the electronic device determines one or more target service cards based on an operation of selecting the one or more target service cards from the one or more second service cards by the user; and the electronic device displays the one or more target service cards at a target location in response to a second operation of the user, where the second operation is an operation of determining the target location, and the target location includes a desktop of the electronic device.

Optionally, the first gesture operation includes any one or more of the following gesture operations: shaking the electronic device, a gesture of sliding down with two fingers on the screen of the electronic device, a gesture of sliding up with two fingers on the screen of the electronic device, and a gesture of sliding sideways on the screen of the electronic device. In addition, the first gesture operation may include another gesture operation, for example, may be a gesture operation determined based on a user input, or may be a gesture operation automatically determined by a system. This is not limited in this application.

Optionally, if the target location is the desktop, the second operation may be tapping a control "Add to desktop"; or if the target location is another device, the second operation may be tapping a share control. In addition, the target location may be another location, and the second operation may be an operation corresponding to adding to another location. This is not limited in this application.

In this embodiment of this application, the user can trigger, by using a specific gesture or the like, initiation of all service cards on a current page or in a current application, and after the service card is initiated, the user can further add one or more initiated service cards to the target location. In this solution, more triggering manners and adding manners of the service card are provided for the user, making the triggering manners and the adding manners of the service card more flexible and convenient. This can improve user experience.

With reference to the second aspect, in a possible implementation, the one or more target service cards are associated with a second icon, and that the electronic device displays the one or more target service cards at a target location in response to a second operation of the user includes: The electronic device displays the one or more target service cards on the desktop of the electronic device in response to an operation of tapping the second icon by the user.

Optionally, the second icon may be a push pin.

In this embodiment of this application, after the user initiates all service cards on the current page or in the current application, the user can quickly add one or more service cards in the initiated service cards to the desktop in a manner of tapping an icon associated with the service card, making a triggering manner and an adding manner of the service card more flexible and convenient. This can improve user experience.

With reference to the second aspect, in a possible implementation, the one or more target service cards are associated with a second selection card; and that the electronic device displays the one or more target service cards at a target location in response to a second operation of the user includes: The electronic device shares the one or more target service cards to a second electronic device in response to an operation of tapping a share control on the second selection card by the user.

In this embodiment of this application, after initiating all service cards on the current page or in the current application, the user can quickly share one or more service cards in the initiated service cards to another electronic device in a manner of tapping a share control associated with the service card, to use the service card across devices. This further improves user experience.

According to a third aspect, a service card management method is provided, where the method is applied to an electronic device, and a first card is displayed on a current page of the electronic device; and the method includes: The electronic device displays a third service card on a screen of the electronic device in response to an operation of touching and holding the first card by a user, where a service provided by the third service card is the same as or partially the same as a service provided by the first card; and the electronic device displays the third service card at a target location in response to a second operation of the user, where the second operation is an operation of determining the target location, and the target location includes a desktop of the electronic device.

Optionally, the first card may be a message notification card displayed in a notification bar, and correspondingly the third service card may be a message notification service card displayed on the desktop of the electronic device. Both the message notification card and the message notification service card can provide a message viewing service. The message notification service card may further provide a message reply service or the like.

Optionally, the first card may be a music control card displayed in a control center, and correspondingly the third service card may be a music control service card displayed on the desktop of the electronic device. Both the music control card and the music control service card can provide services such as music switching and music pause.

Optionally, if the target location is the desktop, the second operation may be tapping a control "Add to desktop"; or if the target location is another device, the second operation may be tapping a share control. In addition, the target location may be another location, and the second operation may be an operation corresponding to adding to another location. This is not limited in this application.

In this embodiment of this application, service card conversion between different scenarios can be implemented. This improves user experience.

With reference to the third aspect, in a possible implementation, the third service card is associated with a third icon, and that the electronic device displays the third service card at a target location in response to a second operation of the user includes: The electronic device displays the third service card on the desktop of the electronic device in response to an operation of tapping the third icon by the user.

Optionally, the third icon may be a push pin.

With reference to the third aspect, in a possible implementation, the third service card is associated with a third selection card, and that the electronic device displays the third service card at a target location in response to a second operation of the user includes: The electronic device shares the third service card to a second electronic device in response to an operation of tapping a share control on the third selection card by the user.

According to a fourth aspect, a service card management method is provided, where the method is applied to an electronic device, a display screen of the electronic device is on a page of a first application, and the first application is performing a data recording function; and the method includes: The electronic device displays a fourth service card on a current page of the electronic device in response to an operation of switching the first application by the user to run in a background, where the fourth service card is used to display, in real time, data recorded by the first application.

In an example, the first application is a clock application, and a data recording function that is being performed by the clock application may be a function such as counting seconds with a stopwatch or countdown.

In another example, the first application is a sports and health application, and a data recording function that is being performed by the sports and health application may be a function such as sports step counting, sports time recording, or sports mileage recording.

Optionally, when a plurality of first applications are switched to the background, a plurality of fourth service cards corresponding to the plurality of first applications may be simultaneously or not simultaneously displayed on a screen of the electronic device.

Non-simultaneous display may be a display manner such as display at an equal time interval or display in an overlapping and alternating manner. This is not limited in this application.

In this embodiment of this application, a real-time data recording status of one or more applications running in the background can be displayed on a current page of the electronic device in a form of a service card. In this way, when using another function of the electronic device, the user can also timely view the real-time data recording status of the one or more applications running in the background, without a need to specially start a corresponding application or stay on an application interface. This can further improve user experience.

With reference to the fourth aspect, in a possible implementation, the fourth service card is associated with a fourth selection card; and the method further includes: The electronic device shares the fourth service card to a second electronic device in response to an operation of tapping a share control on the fourth selection card by the user.

According to a fifth aspect, a service card management method is provided, where a fifth service card is displayed on a screen of an electronic device; and the method includes: In response to an operation of sharing the fifth service card to a second electronic device by a user by using the electronic device, the second electronic device displays a first prompt box on a screen of the second electronic device, where the first prompt box includes a first reminder, the first reminder is used to remind the user that the fifth service card is received from the electronic device, the first prompt box further includes a first selection bar, and the first selection bar includes a deny control and a receive control; and the second electronic device displays the fifth service card on the screen of the second electronic device in response to an operation of tapping the receive control by the user.

An operation method for sharing the fifth service card with the second electronic device by using the electronic device is the same as the sharing manner in the first aspect to the fourth aspect. For brevity, details are not described herein again.

In this embodiment of this application, sharing of a service card between different electronic devices can be implemented, so that a status of the user and the like can be shared between the different electronic devices, and a sense of familiarity experience between users can be improved. This further improves user experience.

With reference to the fifth aspect, in a possible implementation, the method further includes: When detecting that an application associated with the fifth service card is not installed on the second electronic device, the second electronic device displays a second reminder on the screen of the second electronic device, where the second reminder is located in the first prompt box, and the second reminder is used to remind the user that the application associated with the fifth service card needs to be installed to use the fifth service card.

In an example, if the fifth service card is a MeeTime message, the application associated with the fifth service card is MeeTime. When it is detected that a MeeTime application is not installed on the second electronic device, the second reminder is displayed in the first prompt box. The second reminder may be, for example, "To use this service card, you need to install an application: MeeTime".

With reference to the fifth aspect, in a possible implementation, the displaying the fifth service card on the screen of the second electronic device in response to an operation of tapping the receive control by the user includes: In response to the operation of tapping the receive control by the user, the second electronic device installs the application associated with the fifth service card, and displays the fifth service card on the screen of the second electronic device.

In an example, if the application associated with the fifth service card is a MeeTime application, and the MeeTime application is not installed on the second electronic device, after the user taps the receive control, the second electronic device installs the MeeTime application, and displays the fifth service card on the screen of the second electronic device after the installation is completed.

Optionally, when sharing the fifth service card with the second electronic device, the electronic device carries and shares an installation package of the application associated with the fifth service card.

Optionally, a service provided by the fifth service card may be provided after different services are assembled. In other words, the fifth service card may be associated with a plurality of applications.

In this embodiment of this application, a service provided by a service card shared between a plurality of electronic devices may be provided after different services are assembled. In addition, when an application associated with the service card is not installed at a receive end, one-tap installation may be performed by using the receive control, and the user does not need to separately install the application. This improves operation convenience, and can avoid a case in which the service card cannot be normally used due to an application version, to further improve user experience.

With reference to the fifth aspect, in a possible implementation, the fifth service card shared by the electronic device to the second electronic device carries data related to the fifth service card.

In an example, when the fifth service card is a card related to sports and health, the data related to the fifth service card may be, for example, data such as a quantity of sports steps, heart rate monitoring, and blood pressure.

In this embodiment of this application, mutual health monitoring between different users can be implemented by using a service card. For example, a child can view a health status of a parent by using the service card, so that a sense of familiarity experience between users can be improved. This further improves user experience.

With reference to the fifth aspect, in a possible implementation, that the electronic device shares the fifth service card to the second electronic device includes: The electronic device sends the fifth service card to the second electronic device through a social platform in a form of a link or a file.

In this embodiment of this application, sharing of a service card between different electronic devices can be implemented in a plurality of manners. This further improves user experience.

With reference to the fifth aspect, in a possible implementation, the fifth service card is associated with an edit control; and the method further includes: The second electronic device displays the fifth service card in a to-be-edited state on the screen of the second electronic device in response to an operation of tapping the edit control by the user; and the second electronic device displays a sixth service card on the screen of the second electronic device in response to an editing operation of the user on the fifth service card, where the sixth service card is obtained based on the fifth service card.

Optionally, the sixth service card includes all content of the fifth service card.

In an example, the content of the fifth service card is "Weather today." The content of the fifth service card is edited on the screen of the second electronic device to obtain the sixth service card, where content of the sixth service card may be "Weather today: Sunny".

In this embodiment of this application, collaborative work between different electronic devices can be implemented by using a service card, so that working efficiency and convenience can be improved. This further improves user experience.

With reference to the fifth aspect, in a possible implementation, the method further includes: displaying a first effect on the screen of the second electronic device in response to a fourth operation performed by the user on the fifth service card on the screen of the electronic device, where the fourth operation is an operation of triggering a first function of the fifth service card, and the first effect is an effect corresponding to the first function.

In an example, the fourth operation is an operation of double tapping the fifth service card by the user, and correspondingly the first effect is displaying a dynamic heart pattern on the screen of the second electronic device.

In this embodiment of this application, application data of a plurality of electronic devices can be combined to form a complete service card, so that interaction between the devices can be implemented by using the service card. This further improves user experience.

With reference to the fifth aspect, in a possible implementation, the fifth service card includes one or more services.

Optionally, the one or more services are services provided by different applications.

In this embodiment of this application, a plurality of services of a same application or different applications can be combined into one service card, so that the user can conveniently view or operate a plurality of application functions by using the service card. This improves use convenience and user experience.

With reference to the first aspect, the second aspect, the third aspect, the fourth aspect, or the fifth aspect, in a possible implementation, the method further includes: setting a custom list, where the custom list includes a plurality of marks corresponding to a plurality of service cards; and implementing switching between the plurality of service cards by tapping the plurality of marks.

In this embodiment of this application, different service cards or even service cards of different applications can be combined for display, so that the user can simultaneously view content of a plurality of service cards. This further improves user experience.

According to a sixth aspect, an electronic device is provided, where the electronic device includes a memory and a processor, the memory is configured to store computer program code, and the processor is configured to execute the computer program code stored in the memory, to implement the method according to the first aspect or any one of the possible implementations of the first aspect, or implement the method according to the second aspect or any one of the possible implementations of the second aspect, or implement the method according to the third aspect or any one of the possible implementations of the third aspect, or implement the method according to the fourth aspect or any one of the possible implementations of the fourth aspect, or implement the method according to the fifth aspect or any one of the possible implementations of the fifth aspect.

According to a seventh aspect, a chip is provided, where the chip stores instructions; and when the instructions are run on a device, the chip is enabled to perform the method according to the first aspect or any one of the possible implementations of the first aspect, or the chip is enabled to perform the method according to the second aspect or any one of the possible implementations of the second aspect, or perform the method according to the second aspect or any one of the possible implementations of the second aspect, or perform the method according to the third aspect or any one of the possible implementations of the third aspect, or perform the method according to the fourth aspect or any one of the possible implementations of the fourth aspect, or perform the method according to the fifth aspect or any one of the possible implementations of the fifth aspect.

According to an eighth aspect, a computer-readable storage medium is provided, where the computer-readable storage medium stores a computer program or instructions; and when the computer program or the instructions are executed, the method according to the first aspect or any one of the possible implementations of the first aspect is implemented, or the method according to the second aspect or any one of the possible implementations of the second aspect is implemented, or the method according to the third aspect or any one of the possible implementations of the third aspect is implemented, or the method according to the fourth aspect or any one of the possible implementations of the fourth aspect is implemented, or the method according to the fifth aspect or any one of the possible implementations of the fifth aspect is implemented.

### BRIEF DESCRIPTION OF DRAWINGS

FIG. 1 is a diagram of a structure of an electronic device according to an embodiment of this application;
FIG. 2 is a block diagram of a software structure of an electronic device according to an embodiment of this application;
FIG. 3 is a diagram of a display interface for triggering and adding a service card in a conventional technology;
FIG. 4(a) to FIG. 4(c) are a diagram of an interface for triggering a service card by using a small title according to an embodiment of this application;
FIG. 5(a) to FIG. 5(c) are a diagram of an interface for triggering a service card by using a large title according to an embodiment of this application;
FIG. 6(a) to FIG. 6(c) are a diagram of an interface for triggering a service card by using a tab according to an embodiment of this application;
FIG. 7(a) to FIG. 7(c) are a diagram of an interface for triggering a service card by using a subtitle according to an embodiment of this application;
FIG. 8(a) and FIG. 8(b) are a diagram of an interface for triggering a service card by using a banner advertisement according to an embodiment of this application;
FIG. 9(a) to FIG. 9(c) are a diagram of an interface for triggering a service card by using a list according to an embodiment of this application;
FIG. 10(a) to FIG. 10(c) are a diagram of an interface for triggering a service card on a current page by using a gesture according to an embodiment of this application;
FIG. 11(a) to FIG. 11(c) are a diagram of another interface for triggering a service card on a current page by using a gesture according to an embodiment of this application;
FIG. 12(a) to FIG. 12(c) are a diagram of an interface for triggering a service card in a current application by using a gesture according to an embodiment of this application;
FIG. 13(a) to FIG. 13(c) are a diagram of another interface for triggering a service card in a current application by using a gesture according to an embodiment of this application;
FIG. 14(a) to FIG. 14(c) are a diagram of still another interface for triggering a service card in a current application by using a gesture according to an embodiment of this application;
FIG. 15(a) to FIG. 15(c) are a diagram of yet another interface for triggering a service card in a current application by using a gesture according to an embodiment of this application;
FIG. 16(a) to FIG. 16(c) are a diagram of an interface for service card conversion between different scenarios according to an embodiment of this application;
FIG. 17(a) to FIG. 17(c) are a diagram of another interface for service card conversion between different scenarios according to an embodiment of this application;
FIG. 18(a) and FIG. 18(b) are a diagram of another interface for service card conversion between different scenarios according to an embodiment of this application;
FIG. 19(a) to FIG. 19(c) are a diagram of another interface for service card conversion between different scenarios according to an embodiment of this application;
FIG. 20(a) and FIG. 20(b) are a diagram of another interface for service card conversion between different scenarios according to an embodiment of this application;
FIG. 21(a) to FIG. 21(c) are a diagram of another interface for service card conversion between different scenarios according to an embodiment of this application;
FIG. 22(a) to FIG. 22(f) are a diagram of a display interface for sharing a service card between electronic devices according to an embodiment of this application;
FIG. 23(a) to FIG. 23(e) are a diagram of another display interface for sharing a service card between electronic devices according to an embodiment of this application;
FIG. 24(a) to FIG. 24(e) are a diagram of another display interface for sharing a service card between electronic devices according to an embodiment of this application;
FIG. 25(a) to FIG. 25(e) are a diagram of another display interface for sharing a service card between electronic devices according to an embodiment of this application;
FIG. 26(a) to FIG. 26(e) are a diagram of another display interface for sharing a service card between electronic devices according to an embodiment of this application;
FIG. 27(a) to FIG. 27(e) are a diagram of another display interface for sharing a service card between electronic devices according to an embodiment of this application;
FIG. 28(a) to FIG. 28(e) are a diagram of another display interface for sharing a service card between electronic devices according to an embodiment of this application;
FIG. 29(a) and FIG. 29(b) are a diagram of another display interface for sharing a service card between electronic devices according to an embodiment of this application;
FIG. 30(a) to FIG. 30(c) are a diagram of a display interface for implementing switching between a plurality of service cards according to an embodiment of this application;
FIG. 31 is a schematic flowchart of a service card management method according to an embodiment of this application;
FIG. 32 is a schematic flowchart of a method for triggering a service card by touching and holding a control according to an embodiment of this application;
FIG. 33 is a schematic flowchart of a method for triggering a service card on a current page or in a current application according to an embodiment of this application;
FIG. 34 is a schematic flowchart of a method for service card conversion between different scenarios according to an embodiment of this application;
FIG. 35 is a schematic flowchart of another method for service card conversion between different scenarios according to an embodiment of this application;
FIG. 36 is a schematic flowchart of a method for sharing a service card between electronic devices according to an embodiment of this application;
FIG. 37 is a schematic flowchart of a method for collaborative work between electronic devices by using a service card according to an embodiment of this application;
FIG. 38 is a schematic flowchart of a method for interaction between electronic devices by using a service card according to an embodiment of this application; and
FIG. 39 is a schematic flowchart of a method for implementing switching between a plurality of service cards according to an embodiment of this application.

### DESCRIPTION OF EMBODIMENTS

The following describes technical solutions of this application with reference to accompanying drawings. It is clear that the described embodiments are merely some but not all of embodiments of this application.

The following describes the technical solutions in embodiments of this application with reference to the accompanying drawings in embodiments of this application. In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in descriptions of embodiments of this application, "a plurality of" means two or more than two.

The terms "first" and "second" mentioned below are merely intended for a purpose of description, and shall not be understood as an indication or implication of relative importance or implicit indication of the quantity of indicated technical features. Therefore, a feature limited by "first" or "second" may explicitly or implicitly include one or more features. In descriptions of embodiments, unless otherwise specified, "a plurality of" means two or more.

A method provided in embodiments of this application may be applied to an electronic device such as a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

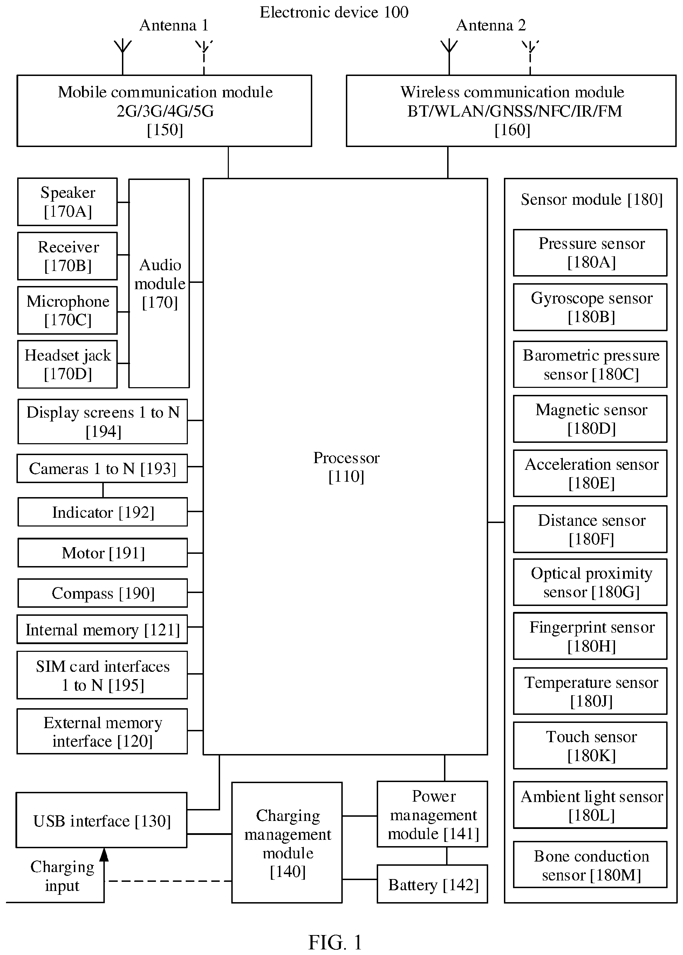

For example, FIG. 1 is a diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or a combination of some components, or splits from some components, or a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to: perform audio communication, and sample, quantize, and encode an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display screen 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display screen 194 through the DSI interface, to implement a display function of the electronic device 100.

The GPIO interface may be configured by software. The GPIO interface may be configured for a control signal or a data signal. In some embodiments, the GPIO interface may be configured to connect the processor 110 to the camera 193, the display screen 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to exchange data between the electronic device 100 and a peripheral device, or may be configured to connect to a headset for playing audio through the headset. The interface may be further configured to connect to another electronic device, for example, an AR device.

It may be understood that an interface connection relationship between the modules illustrated in embodiments of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display screen 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to: transmit and receive an electromagnetic wave signal. Each antenna in the electronic device 100 may be used to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules in the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video on the display screen 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display screen 194, the application processor, and the like. The GPU is a microprocessor for image processing, and is connected to the display screen 194 and the application processor. The GPU is configured to: perform mathematical and geometric computation, and render an image. The processor 110 may include one or more GPUs, which execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N display screens 194, where N is a positive integer greater than 1.

The electronic device 100 may implement a photographing function through the ISP, the camera 193, the video codec, the GPU, the display screen 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation or the like on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a transmission mode between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be configured to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications and data processing of the electronic device 100. The internal memory 121 may include a program storage area and a data storage area. The program storage area may store an operating system, an application necessary to at least one function (for example, a voice playing function or an image playing function), and the like. The data storage area may store data (such as audio data and an address book) and the like that are created during use of the electronic device 100. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to: encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display screen 194. There are a plurality of types of pressure sensors 180A, such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The electronic device 100 determines pressure intensity based on the change in the capacitance. When a touch operation is performed on the display screen 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to a first pressure threshold is performed on an SMS message application icon, an instruction for creating a new SMS message is executed.

The gyroscope sensor 180B may be configured to determine a moving posture of the electronic device 100. In some embodiments, an angular velocity of the electronic device 100 around three axes (namely, axes x, y, and z) may be determined through the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may be further used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall effect sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light-emitting diode (LED) and an optical detector, for example, a photodiode. The light-emitting diode may be an infrared light emitting diode. The electronic device 100 emits infrared light by using the light-emitting diode. The electronic device 100 detects infrared reflected light from a nearby object through the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display screen 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may implement fingerprint unlock, application access lock, fingerprint photographing, fingerprint-based call answering, and the like by using a feature of the collected fingerprint.

The temperature sensor 180J is configured to detect a temperature. In some embodiments, the electronic device 100 executes a temperature processing strategy through the temperature detected by the temperature sensor 180J. For example, when the temperature reported by the temperature sensor 180J exceeds a threshold, the electronic device 100 lowers performance of a processor located near the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown due to a low temperature.

The touch sensor 180K is also referred to as a "touch panel". The touch sensor 180K may be disposed on the display screen 194, and the touch sensor 180K and the display screen 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided on the display screen 194. In some other embodiments, the touch sensor 180K may alternatively be disposed on a surface of the electronic device 100 at a location different from that of the display screen 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may alternatively be disposed in a headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display screen 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as calling and data communication. In some embodiments, the electronic device 100 uses an embedded-SIM (embedded-SIM, eSIM) card, namely, an embedded-SIM card. The eSIM card may be embedded into the electronic device 100, and cannot be separated from the electronic device 100.

It should be understood that a calling card in embodiments of this application includes but is not limited to a SIM card, an eSIM card, a universal subscriber identity module (universal subscriber identity module, USIM) card, a universal integrated circuit card (universal integrated circuit card, UICC), and the like.

A software system of the electronic device 100 may use a layered architecture, an event-driven architecture, a microkernel architecture, a micro service architecture, or a cloud architecture. In embodiments of this application, an Android system with a layered architecture is used as an example to describe a software structure of the electronic device 100.

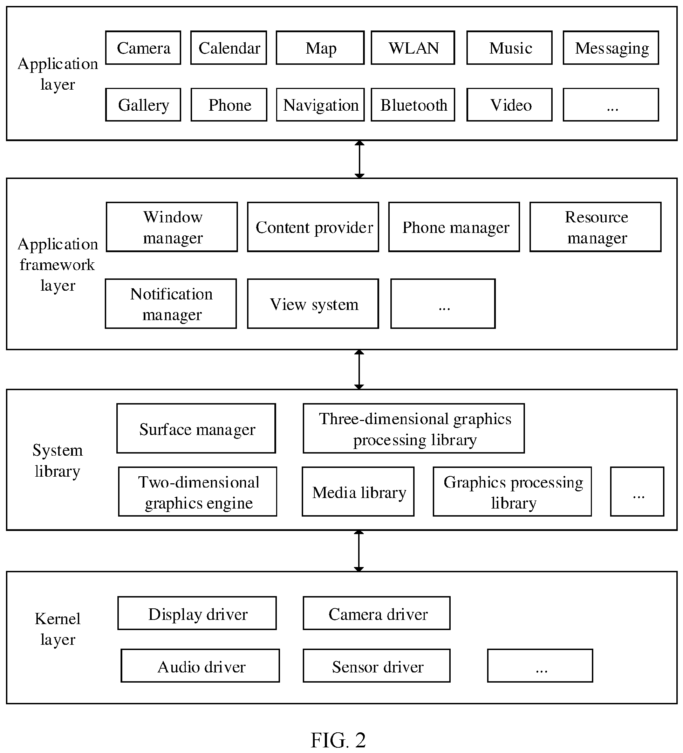

FIG. 2 is a block diagram of the software structure of the electronic device 100 in this embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, the application package may include applications such as Camera, Gallery, Calendar, Call, Map, Navigation, WLAN, Bluetooth, Music, Video, and Messaging.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be used to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert tone is made, the electronic device vibrates, or an indicator blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer are run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a two-dimensional graphics engine (for example, SGL).

The surface manager is configured to manage a display subsystem and provide fusion of 2D and 3D layers for a plurality of applications.

The media library supports play and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for 2D drawing.

The kernel layer is a layer between hardware and software. The kernel layer includes at least a display driver, a camera driver, an audio driver, and a sensor driver.

It should be understood that the technical solutions in embodiments of this application may be applied to systems such as Android, iOS, and HarmonyOS.

The technical solutions in embodiments of this application may be applied to an electronic device with a screen. For example, the technical solutions may be applied to an electronic device such as a mobile phone, a foldable screen, or a tablet. A main application scenario may be triggering a service (feature ability, FA) card at any time, and adding an FA card by dragging or the like.

The electronic device in embodiments of this application may be a television, a desktop computer, or a notebook computer, or may be a portable electronic device, for example, a mobile phone, a tablet computer, a camera, a camcorder, or a video recorder, or may be another electronic device having a screen display function, an electronic device in a 5G network, an electronic device in a future evolved public land mobile network (public land mobile network, PLMN), or the like. This is not limited in this application.

Currently, in order to provide better use experience for a user during use of an application of an electronic device, a service card in a system of the electronic device can easily implement one-step direct access of an application service, that is, the user can view data content corresponding to the application and perform a corresponding operation without entering the application.

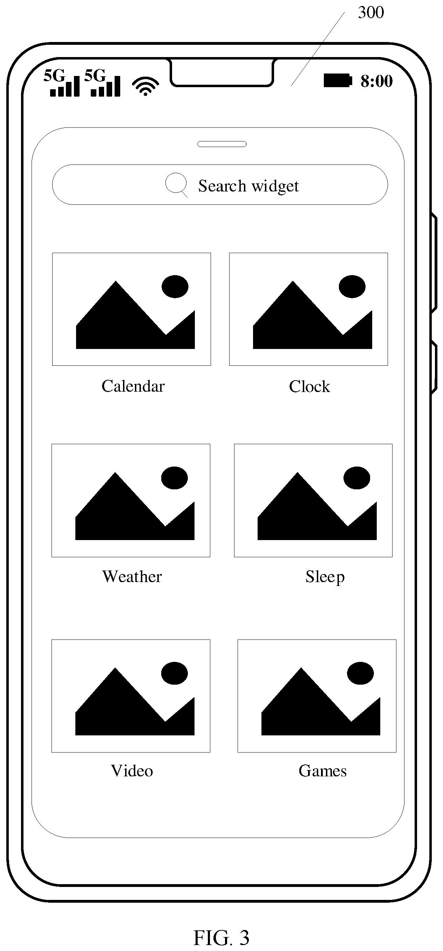

FIG. 3 is a diagram of a display interface for triggering and adding a service card in a conventional technology. As shown in FIG. 3, an iOS system is installed on an electronic device 300, and a user slides side on a display interface of the electronic device 300 to enter a widget management page. A widget search entry is displayed at the top of the management page, and six widgets are displayed on the management page: Calendar, Clock, Weather, Sleep, Video, and Games. The user may view corresponding application content on the management page by using the six widgets, and may further enter an operation interface of a corresponding application by using the widgets, to implement a further operation on the application. When the management page does not display a widget corresponding to an application that the user wants to use, the user may search for a widget that the user wants to use through a search function at the top of the page, and after the widget is successfully found, the user may view the widget and perform a corresponding operation.

In another conventional technology, an MIMU widget may provide a thumbnail of an application that is not installed; and when the user adds content corresponding to the thumbnail to a desktop, the user is prompted to download the application.

Therefore, in an existing service card management manner, each service card corresponds to only one application, can be displayed only on a desktop, and needs to be added from a fixed library. A triggering manner and an adding manner are simple. In addition, in an existing solution, sharing and interaction functions of service cards between devices cannot be implemented, affecting user experience.

In view of this, this application provides a service card management method and an electronic device. The method provides a plurality of service card triggering manners and a plurality of service card adding manners. In addition, the method can implement sharing of a service card between a plurality of electronic devices and interaction between the plurality of electronic devices by using the service card, so that a degree of activity and a social attribute of the service card can be enhanced. This improves user experience.

Terms used in the following embodiments are merely intended to describe specific embodiments, but are not intended to limit this application. The terms "one", "a", "the", "the foregoing", and "this" of singular forms used in this specification and the appended claims of this application are also intended to include expressions such as "one or more", unless otherwise specified in the context clearly. It should be further understood that in the following embodiments of this application, "at least one" and "one or more" refer to one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiments. Therefore, statements such as "an embodiment", "some embodiments", "another embodiment", "some other embodiments", and the like that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

To understand the solutions of this application more clearly, the following first describes related terms in embodiments of this application.

### 1. Service (feature ability, FA) card

The FA card is a bearer form of a service in HarmonyOS (HarmonyOS). The FA card can easily implement one-step direct access to the service, so that the user can view data content related to an application and perform a corresponding operation on the application based on the data content without entering the application.

The FA card is implemented through an atomic service. The atomic service has an independent entry and is an installation-free user application form that can provide one or more convenient services for the user.

### 2. Page level, component level, and atomic level

In embodiments of this application, parts that are of display content of an application and that may be used as a trigger control are classified into a page level, a component level, and an atomic level. The atomic level is an indivisible space, a component-level space is constituted by a plurality of atomic-level spaces, and a page-level space is constituted by a plurality of component-level spaces. In embodiments of this application, the page level may be, for example, a title, a tab, or a subtab; the component level may be, for example, a banner advertisement, a card, a subtitle, or a search result; and the atomic level may be, for example, a list or a grid (grid).

### 3. Tab and subtab

A tab (module-tab, Tab) is also referred to as a selection card. The tab means that different pieces of content are overlapped in a same layout and only one piece of content is visible on an application interface at a time. For example, there is a selection card (including options: Home, Hits, Zone, Education, and Me) at the bottom of Home of a video application, and the selection card is a tab. In addition, the tab further includes a subtab. For example, when the video application is on a display interface of Home, there is another selection card (including options: Kids, Animation & Comic, Games, Variety show, and Live broadcast) at the top of the page, and the selection card is a subtab.

### 4. Title and subtitle

The subtitle can also be referred to as a subheading. To make a piece of news or an article more readable and more attractive, a title is usually combined with a subtitle. The titles are classified into large titles and small titles. For example, after the video application is started, options "Music" and "Karaoke" are displayed at the top of the page, where both "Music" and "Karaoke" are displayed as large titles; and options "Recommendation" and "Featured" are displayed below the title "Music", where both "Recommendation" and "Featured" are displayed as small titles. A recommendation page is entered from Home of the video application. Three pieces of sub-content respectively marked with recommended series 1, recommended series 2, and recommended series 3 are distributed on the recommendation page. The recommended series 1, the recommended series 2, and the recommended series 3 are all displayed as subtitles.

### 5. Semi-modal

The semi-modal is a manner of presenting content. The semi-modal is featured by appearing from the bottom of an interface: swiping upward to display more content, and pulling downward to turn off. The semi-modal gives the user a sense of a lightweight operation that comes when called upon and leaves when done.

In some embodiments, the user can trigger and manage a service card in an application by using a control.

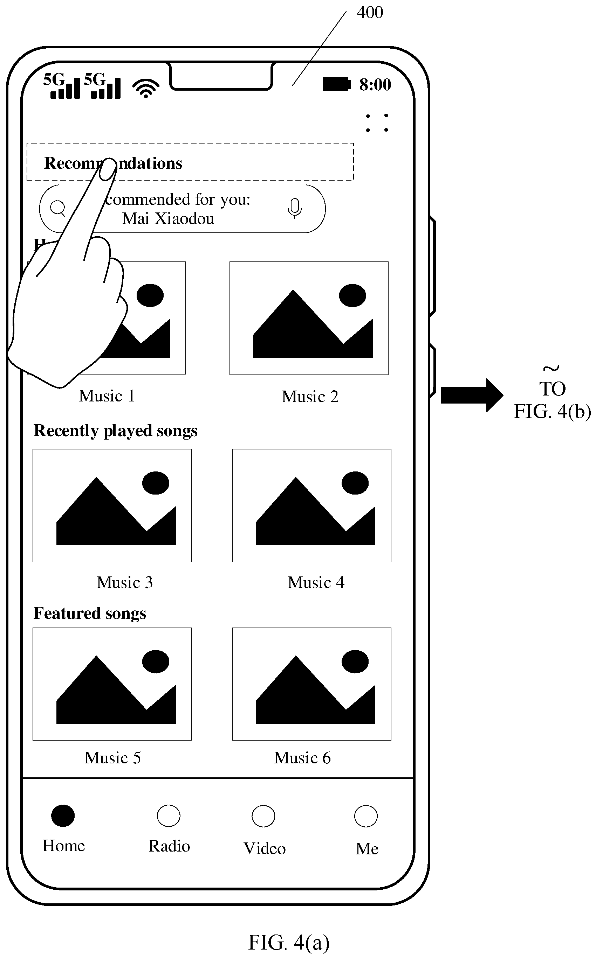

For example, with reference to FIG. 4(a) to FIG. 9(c), the following describes diagrams of display interfaces for triggering a service card by using a control and managing the service card according to an embodiment of this application.

For example, FIG. 4(a) to FIG. 4(c) are a diagram of an interface for managing a service card according to an embodiment of this application. This example is a scenario in which the service card is triggered by using a small title.

As shown in FIG. 4(a) to FIG. 4(c), a display interface of an electronic device 400 is an interface of a Huawei music application, and tabs at the bottom of the Huawei music application include options: Home, Radio, Video, and Me. Currently, the application interface is on Home, and large titles of Home are "Music" and "Karaoke". More specifically, the application interface is on a recommendation interface of Home (below the title "Music", which is not shown in the figure), and a small title of the page is Recommendation. There are three subtitles distributed below the small title: Hot songs (Music 1 and Music 2 are displayed in this category), Recently played songs (Music 3 and Music 4 are displayed in this category), and Featured songs (Music 5 and Music 6 are displayed in this category).

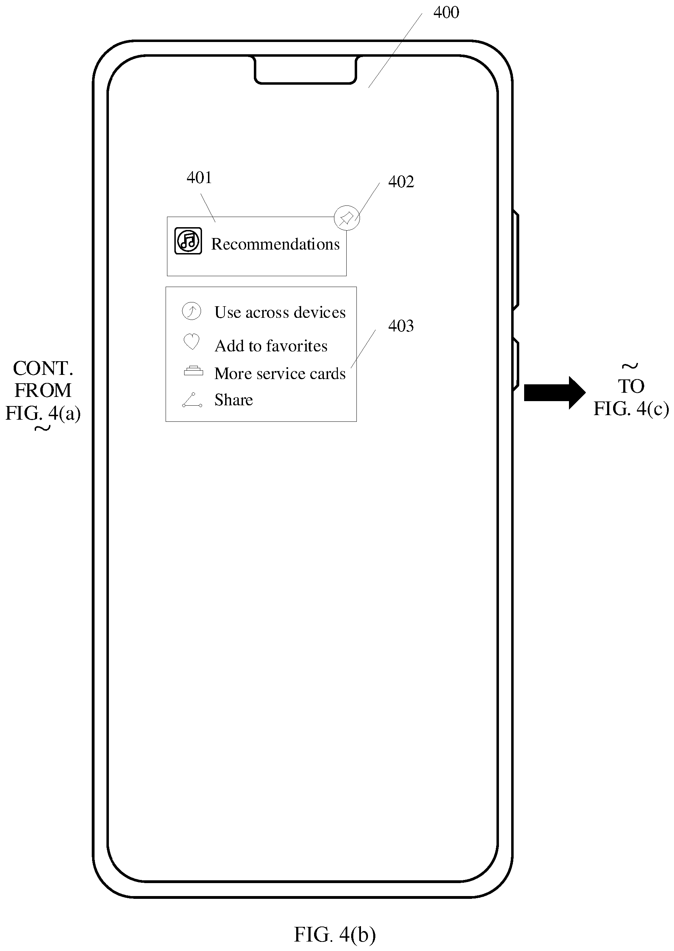

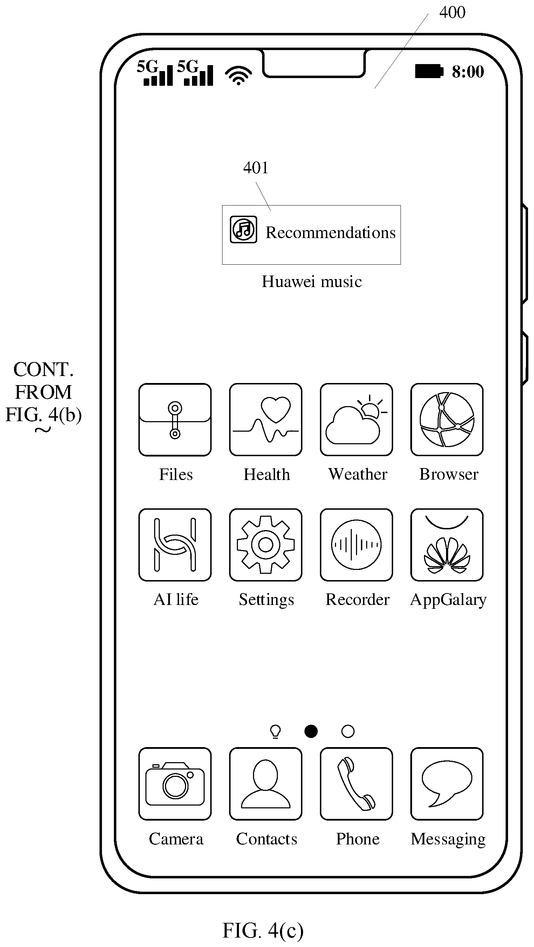

When a user wants to display a service card associated with the small title "Recommendation", the user may touch and hold the small title (as shown in FIG. 4(a)). In this case, the service card 401 corresponding to the small title is displayed on a card panel (as shown in FIG. 4(b)). The service card 401 located on the card panel is associated with a push pin control 402 and an option box 403. The user can pin the service card 401 to a blank location of a desktop of the electronic device 400 by tapping the push pin control 402 (as shown in FIG. 4(c)).

Optionally, the service card 401 added to the desktop includes a text. The text is recommendation and the text is from the small title "Recommendation". In addition, an icon of the Huawei music application is displayed before the text, and an application name "Huawei music" is displayed below the service card 401.

Optionally, the service card 401 added to the desktop includes a text and an image. The text is recommendation, the image is from an image provided by the small title "Recommendation", and the text is from the small title "Recommendation". In addition, an icon of the Huawei music application is displayed before the text, and an application name "Huawei music" is displayed below the service card 401.

It should be understood that a generation rule of the service card 401 may be default, or may be specified based on a user input, or may be automatically selected by a system. This is not limited in this application.

It should be further understood that a size of the service card 401 is not limited in the solutions of this application. For example, the size of the service card 401 may be determined based on a size of a placeable location in a target placement location, or may be determined based on a situation in which the user uses the electronic device 400. This is not limited in this application.

Optionally, the user may further manage the service card 401 by tapping a related option in the option box 403. For example, the user may tap an option of adding to favorites to add the service card 401 to a favorites list. When the service card 401 needs to be used subsequently, the user may directly view the favorites list and perform a further operation, without a need to specially start a corresponding application.

Optionally, after the service card 401 is initiated, an option "Add to desktop" is displayed in the option box 403. The user can directly tap the option "Add to desktop", to add the service card 401 to a blank area of the desktop.

It should be understood that the push pin in this embodiment of this application may be replaced with another icon having a same function. This is not limited in this application. In addition, if the push pin appears in another embodiment of this application, a same explanation is also applicable. A unified description is provided herein. For brevity, when the push pin appears again, details are not described again.

It should be understood that, in this embodiment of this application, an example in which the application is Huawei music is used for description. However, this does not constitute any limitation on this application. When the foregoing application is replaced with another application, the solutions in this embodiment of this application are still effective.

Optionally, content displayed on the service card and obtained through triggering is not necessarily the same as content corresponding to a corresponding control on an original page. For example, the content displayed on the service card and obtained through triggering may be popular content in content below the control on the original page, or may be content that is below the control on the original page and that is set based on a user input, or may be content that is below the control on the original page and that is automatically and randomly displayed by a system. This is not limited in this application. In addition, a service card obtained through triggering in another embodiment provided in this application is also applicable to this explanation. For brevity, when the service card appears again in the following, details are not described again.

In this embodiment of this application, the user can trigger, by using the small title of the application page as a control, initiation of the service card related to the small title; and after the service card is initiated, the user can add the service card to a location such as the desktop by using a push pin, selecting an option, or the like. In this solution, a new triggering manner and a new adding manner of the service card are provided for the user, making the triggering manner and the adding manner of the service card more flexible and convenient. This can improve user experience.

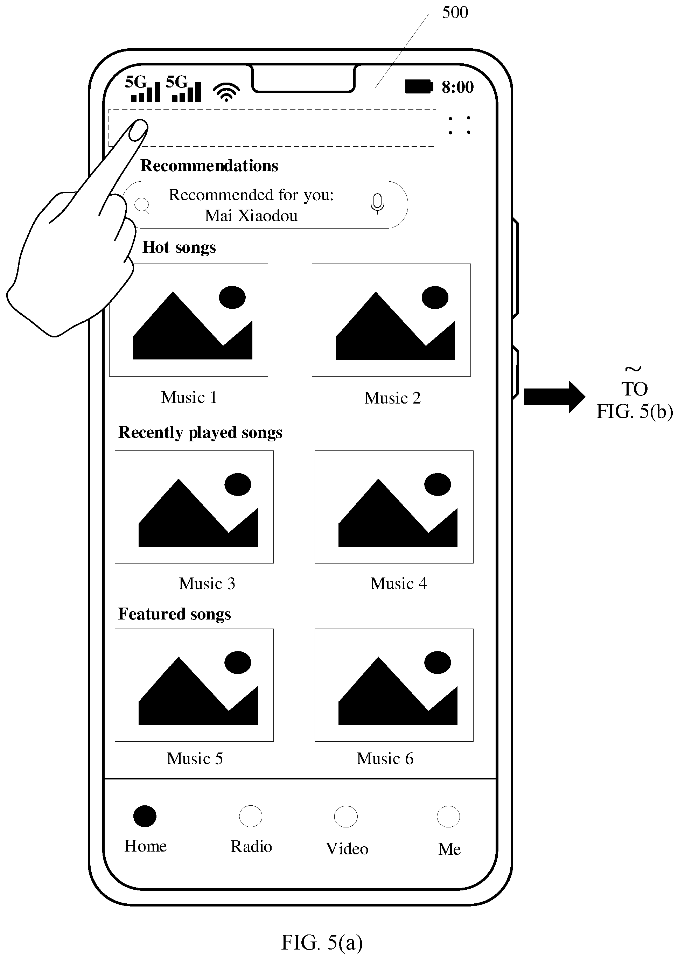

For example, FIG. 5(a) to FIG. 5(c) are a diagram of another interface for managing a service card according to an embodiment of this application. This example is a scenario in which the service card is triggered by using a large title.

As shown in FIG. 5(a) to FIG. 5(c), a display interface of an electronic device 500 is an interface of a Huawei music application, and tabs at the bottom of the Huawei music application include options: Home, Radio, Video, and Me. Currently, the application interface is on Home, and large titles of Home are "Music" and "Karaoke". More specifically, the application interface is on a recommendation interface of Home (below the title "Music", which is not shown in the figure), and a small title of the page is Recommendation. There are three subtitles distributed below the small title: Hot songs (Music 1 and Music 2 are displayed in this category), Recently played songs (Music 3 and Music 4 are displayed in this category), and Featured songs (Music 5 and Music 6 are displayed in this category).

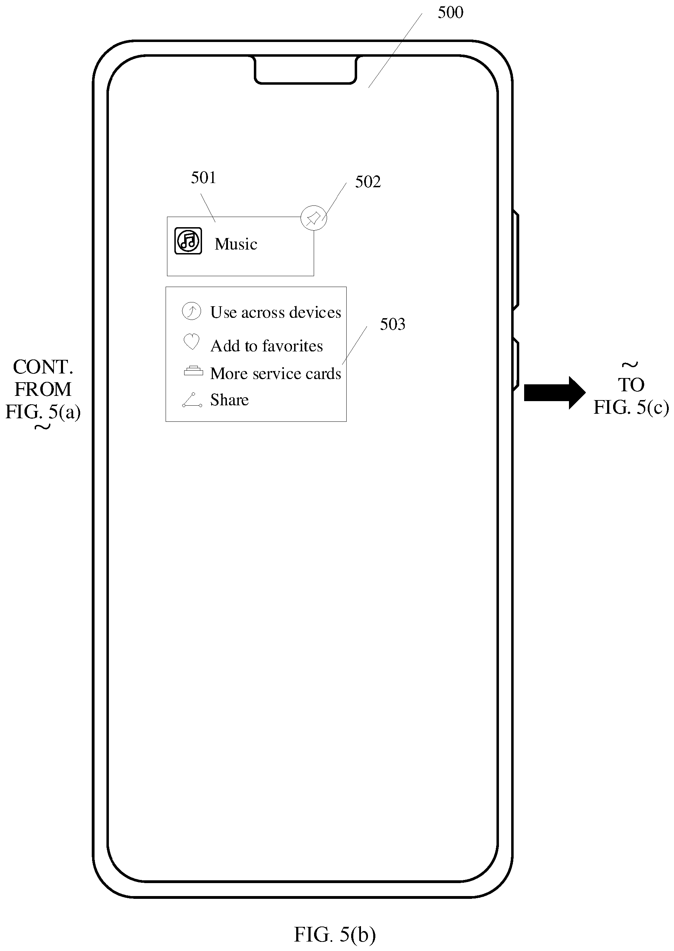

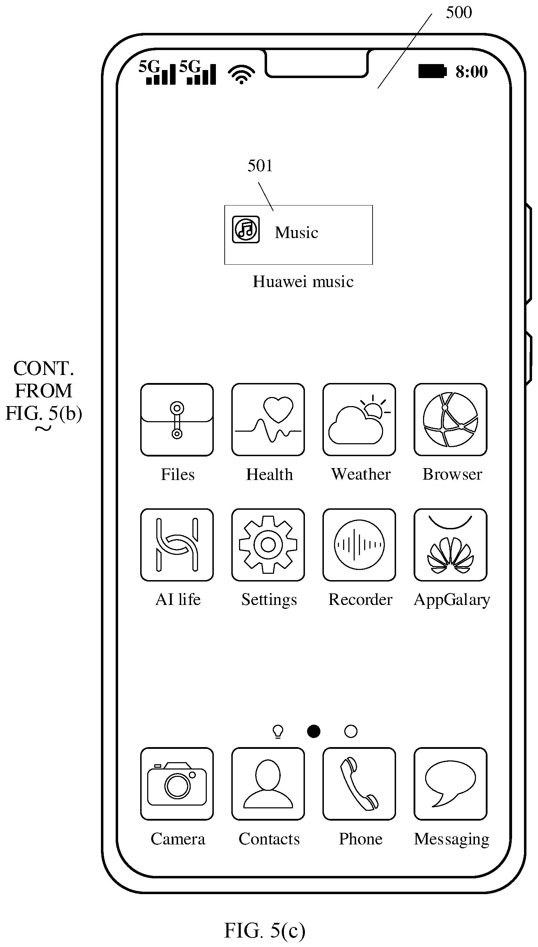

When a user wants to display a service card associated with the large title (music) corresponding to the page, the user may touch and hold a blank area at the top of the page (as shown in FIG. 5(a)). In this case, the service card 501 associated with the large title (music) corresponding to the page is displayed on a card panel (as shown in FIG. 5(b)). The service card 501 located on the card panel is associated with a push pin control 502 and an option box 503. The user can pin the service card 501 to a blank location of a desktop of the electronic device 500 by tapping the push pin control 502 (as shown in FIG. 5(c)).

Optionally, the service card 501 added to the desktop includes a text. The text is music and the text is from the large title "Music" corresponding to the page. In addition, an icon of the Huawei music application is displayed before the text, and an application name "Huawei music" is displayed below the service card.

Optionally, the service card 501 added to the desktop includes a text and an image. The text is music, the image is from an image provided by the large title "Music" corresponding to the page, and the text is from the large title "Music" corresponding to the page. In addition, an icon of the Huawei music application is displayed before the text, and an application name "Huawei music" is displayed below the service card 501.

It should be understood that a generation rule of the service card 501 may be default, or may be specified based on a user input, or may be automatically selected by a system. This is not limited in this application.

It should be further understood that a size of the service card 501 is not limited in the solutions of this application. For example, the size of the service card 501 may be determined based on a size of a placeable location in a target placement location, or may be determined based on a situation in which the user uses the electronic device 500. This is not limited in this application.

Optionally, the user may further manage the service card 501 by tapping a related option in the option box 503. For example, the user may tap an option of adding to favorites to add the service card 501 to a favorites list. When the service card 501 needs to be used subsequently, the user may directly view the favorites list and perform a further operation, without a need to specially start a corresponding application.

Optionally, after the service card 501 is initiated, an option "Add to desktop" is displayed in the option box 503. The user can directly tap the option "Add to desktop", to add the service card 501 to a blank area of the desktop.

It should be understood that, in this embodiment of this application, an example in which the application is Huawei music is used for description. However, this does not constitute any limitation on this application. When the foregoing application is replaced with another application, the solution in this embodiment of this application are still effective.

In this embodiment of this application, the user can trigger, by using the blank area of the application page as a control, initiation of the service card related to the large title corresponding to the page; and after the service card is initiated, the user can add the service card to a location such as the desktop by using a push pin, selecting an option, or the like. In this solution, a new triggering manner and a new adding manner of the service card are provided for the user, making the triggering manner and the adding manner of the service card more flexible and convenient. This can improve user experience.

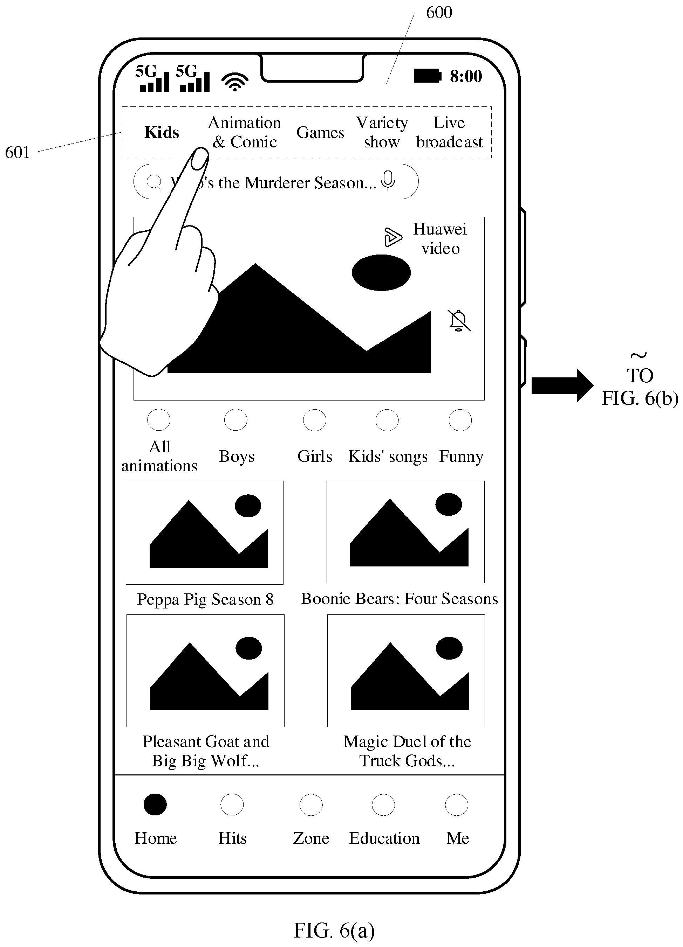

For example, FIG. 6(a) to FIG. 6(c) are a diagram of another interface for managing a service card according to an embodiment of this application. This example is a scenario in which the service card is triggered by using a tab.

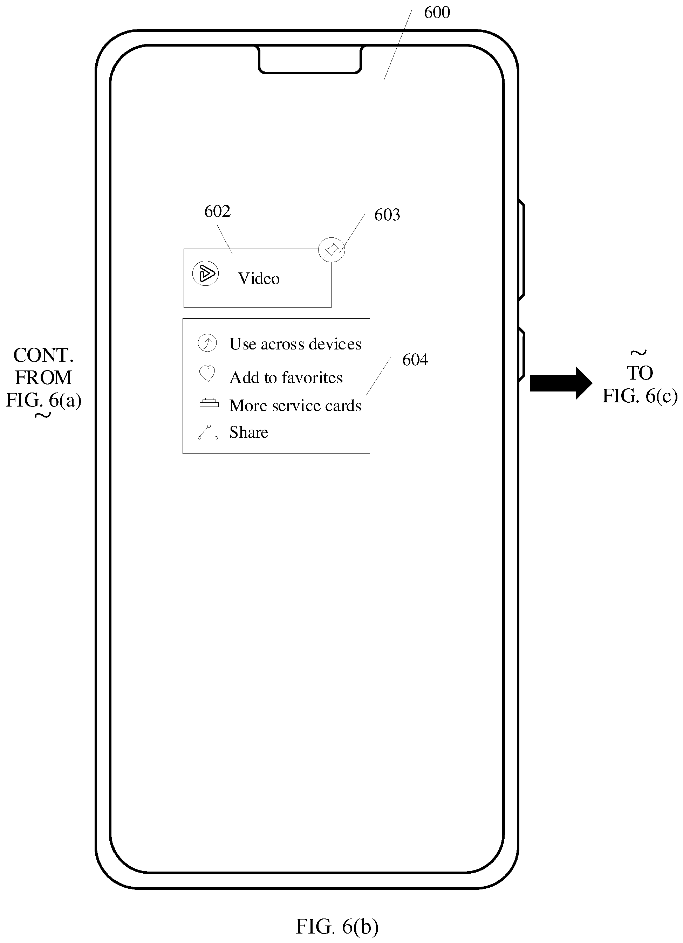

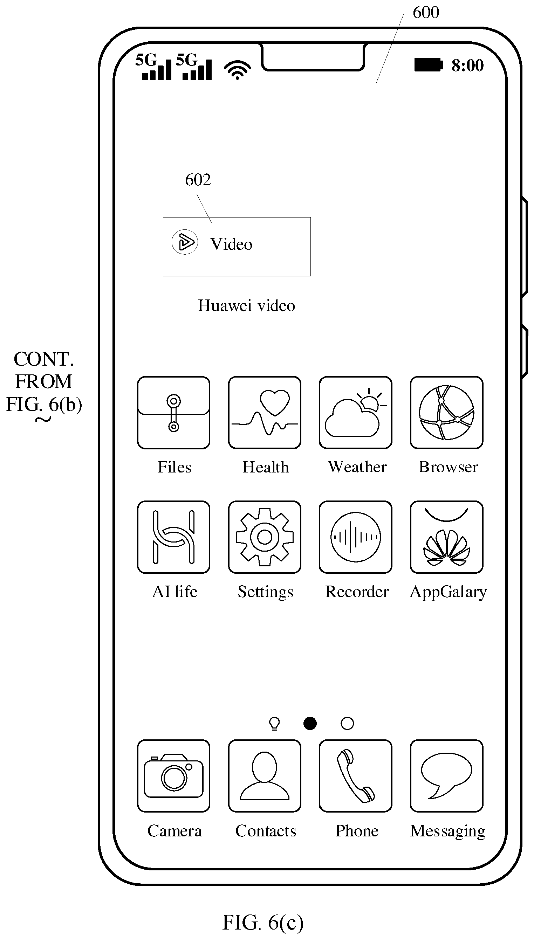

As shown in FIG. 6(a) to FIG. 6(c), a display interface of an electronic device 600 is Home of a Huawei video application, a tab 601 is displayed at the top of the display interface, and the tab 601 includes options: Kids, Animation & Comic, Games, Variety show, and Live broadcast. When a user wants to generate a service card associated with the tab 601, the user may touch and hold the tab 601 at the top of the page (as shown in FIG. 6(a)). In this case, the service card 602 associated with the tab 601 is displayed on a card panel (as shown in FIG. 6(b)). The service card 602 located on the card panel is associated with a push pin control 603 and an option box 604. The user can pin the service card 602 to a blank location of a desktop of the electronic device 600 by tapping the push pin control 603 (as shown in FIG. 6(c)).

Optionally, the service card 602 added to the desktop includes a text. The text is video and the text is from the tab 601 corresponding to the page. In addition, an icon of the Huawei video application is displayed before the text, and an application name "Huawei video" is displayed below the service card 602.

Optionally, the service card 602 added to the desktop includes a text and an image. The text is video, the image is from an image provided by the tab 601, and the text is from the tab 601. In addition, an icon of the Huawei video application is displayed before the text, and an application name "Huawei video" is displayed below the service card 602.

It should be understood that a generation rule of the service card 602 may be default, or may be specified based on a user input, or may be automatically selected by a system. This is not limited in this application.

It should be further understood that a size of the service card 602 is not limited in the solutions of this application. For example, the size of the service card 602 may be determined based on a size of a placeable location in a target placement location, or may be determined based on a situation in which the user uses the electronic device 600. This is not limited in this application.

Optionally, the user may further manage the service card 602 by tapping a related option in the option box 604. For example, the user may tap an option of adding to favorites to add the service card 602 to a favorites list. When the service card 602 needs to be used subsequently, the user may directly view the favorites list and perform a further operation, without a need to specially start a corresponding application.

Optionally, after the service card 602 is initiated, an option "Add to desktop" is displayed in the option box 604. The user can directly tap the option "Add to desktop", to add the service card 602 to a blank area of the desktop.

It should be understood that, in this embodiment of this application, an example in which the application is Huawei video is used for description. However, this does not constitute any limitation on this application. When the foregoing application is replaced with another application, the solutions in this embodiment of this application are still effective.

In this embodiment of this application, the user can trigger, by using the tab of the application page as a control, initiation of the service card associated with the tab; and after the service card is initiated, the user can add the service card to a location such as the desktop by using a push pin, selecting an option, or the like. In this solution, a new triggering manner and a new adding manner of the service card are provided for the user, making the triggering manner and the adding manner of the service card more flexible and convenient. This can improve user experience.

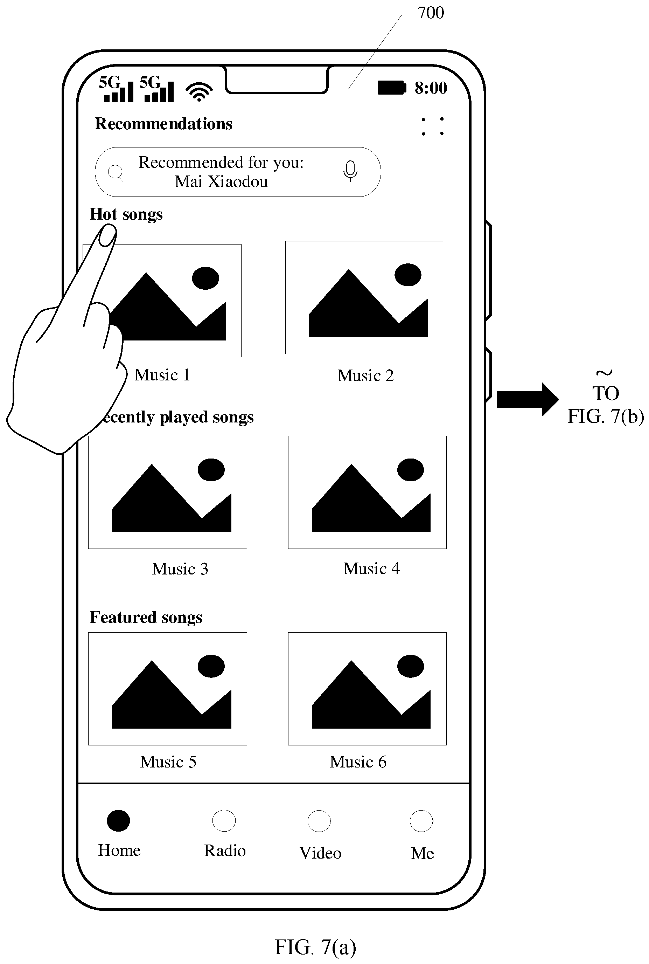

For example, FIG. 7(a) to FIG. 7(c) are a diagram of another interface for managing a service card according to an embodiment of this application. This example is a scenario in which the service card is triggered by using a subtitle.

As shown in FIG. 7(a) to FIG. 7(c), a display interface of an electronic device 700 is an interface of a Huawei music application, and tabs at the bottom of the Huawei music application include options: Home, Radio, Video, and Me. Currently, the application interface is on Home. More specifically, the application interface is on a recommendation interface of Home (below the large title "Music", which is not shown in the figure), and a small title of the page is Recommendation. There are three subtitles distributed below the small title: Hot songs (Music 1 and Music 2 are displayed in this category), Recently played songs (Music 3 and Music 4 are displayed in this category), and Featured songs (Music 5 and Music 6 are displayed in this category).

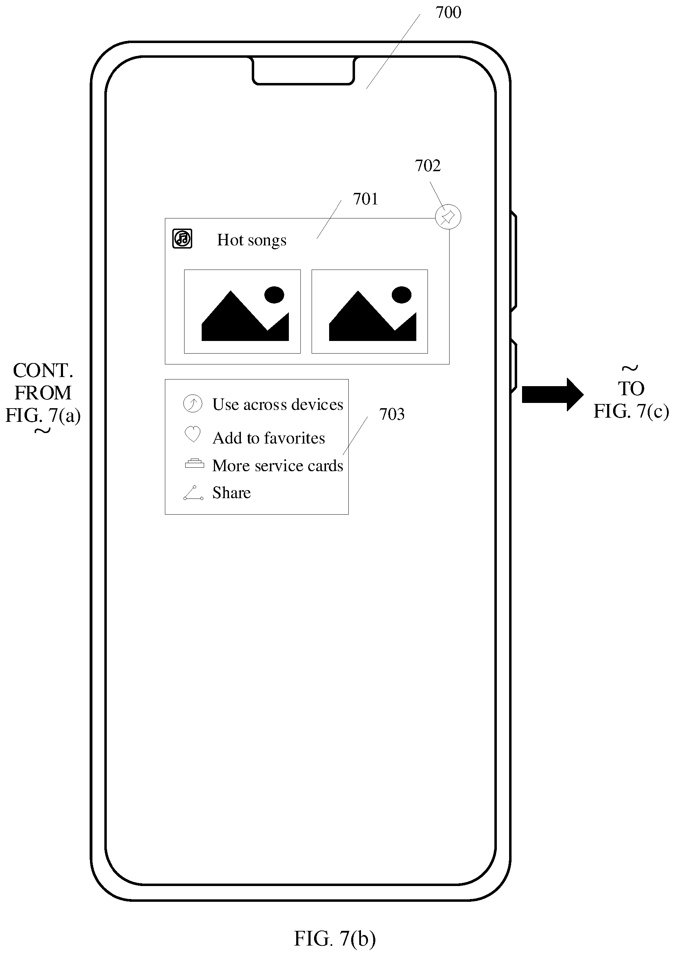

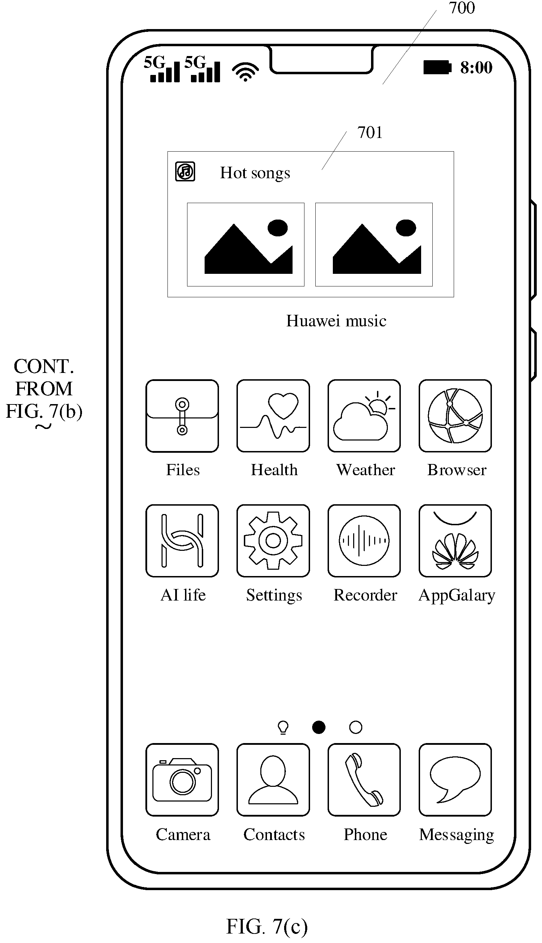

When a user wants to display a service card associated with the subtitle "Hot songs", the user may touch and hold the subtitle (as shown in FIG. 7(a)). In this case, the service card 701 corresponding to the subtitle is displayed on a card panel (as shown in FIG. 7(b)). The service card 701 located on the card panel is associated with a push pin control 702 and an option box 703. The user can pin the service card 701 to a blank location of a desktop of the electronic device 700 by tapping the push pin control 702 (as shown in FIG. 7(c)).

Optionally, the service card 701 added to the desktop includes a text. The text is hot songs and the text is from the subtitle "Hot songs". In addition, an icon of the Huawei music application is displayed before the text, and an application name "Huawei music" is displayed below the service card 701.

Optionally, the service card 701 added to the desktop includes a text and an image. The text is hot songs, the image is from an image provided by the subtitle "Hot songs", and the text is from the subtitle "Hot songs". In addition, an icon of a Huawei music application is displayed before the text, and an application name "Huawei music" is displayed below the service card 701.

It should be understood that a generation rule of the service card 701 may be default, or may be specified based on a user input, or may be automatically selected by a system. This is not limited in this application.

It should be further understood that a size of the service card 701 is not limited in the solutions of this application. For example, the size of the service card 701 may be determined based on a size of a placeable location in a target placement location, or may be determined based on a situation in which the user uses the electronic device 700. This is not limited in this application.

Optionally, the user may further manage the service card 701 by tapping a related option in the option box 703. For example, the user may tap an option of adding to favorites to add the service card 701 to a favorites list. When the service card 701 needs to be used subsequently, the user may directly view the favorites list and perform a further operation, without a need to specially start a corresponding application.

Optionally, after the service card 701 is initiated, an option "Add to desktop" is displayed in the option box 703. The user can directly tap the option "Add to desktop", to add the service card 701 to a blank area of the desktop.

It should be understood that, in this embodiment of this application, an example in which the application is Huawei music is used for description. However, this does not constitute any limitation on this application. When the foregoing application is replaced with another application, the solutions in this embodiment of this application are still effective.

It should be understood that the tab includes a plurality of titles, and a relationship among the large title, the small title, and the subtitle may be as follows: The large title includes the small title, and the small title includes the subtitle.

In this embodiment of this application, the user can trigger, by using the subtitle of the application page as a control, initiation of the service card related to the subtitle; and after the service card is initiated, the user can add the service card to a location such as the desktop by using a push pin, selecting an option, or the like. In this solution, a new triggering manner and a new adding manner of the service card are provided for the user, making the triggering manner and the adding manner of the service card more flexible and convenient. This can improve user experience.

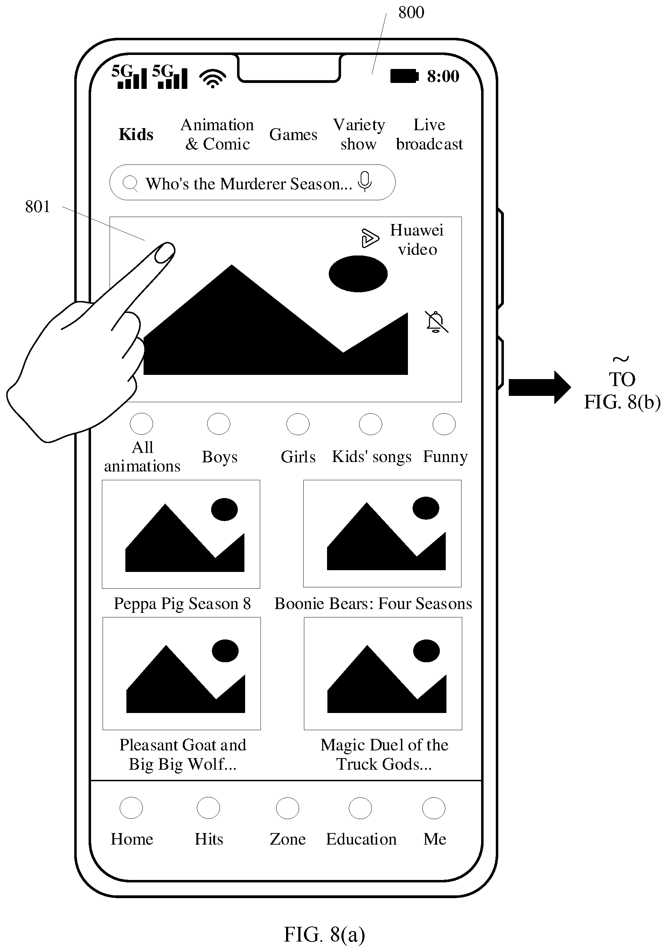

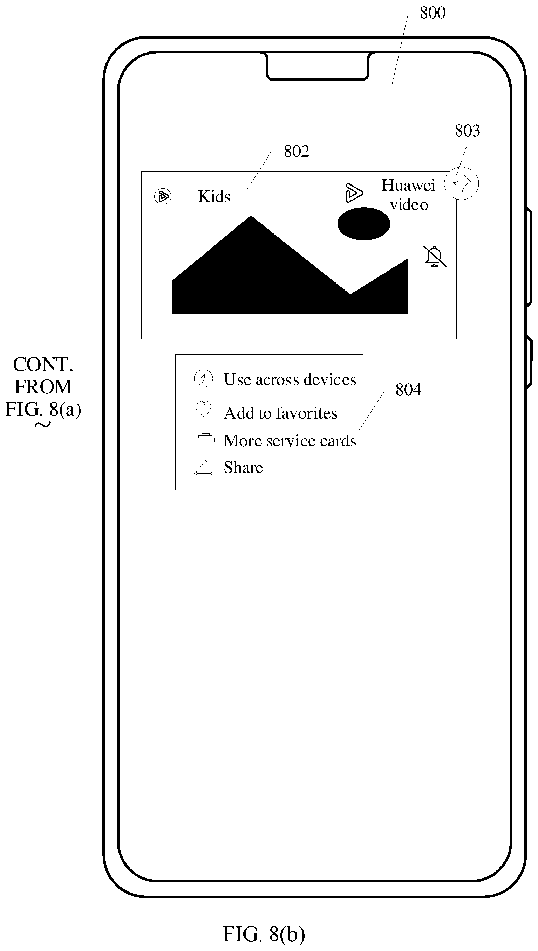

For example, FIG. 8(a) and FIG. 8(b) are a diagram of another interface for managing a service card according to an embodiment of this application. This example is a scenario in which the service card is triggered by using a banner (banner) advertisement.

As shown in FIG. 8(a) and FIG. 8(b), a display interface of an electronic device 800 is Home of a Huawei video application, and displayed content is content below a title "Kids". When a user wants to generate a service card associated with a banner advertisement 801 on this page, the user may touch and hold the banner advertisement 801 (as shown in FIG. 8(a)). In this case, the service card 802 associated with the banner advertisement 801 is displayed on a card panel (as shown in FIG. 8(b)). The service card 802 located on the card panel is associated with a push pin control 803 and an option box 804. The user can pin the service card 802 to a blank location of a desktop of the electronic device 800 by tapping the push pin control 803.

Optionally, the service card 802 added to the desktop includes a text. The text is kids and the text is from the banner advertisement 801. In addition, an icon of the Huawei video application is displayed before the text, and an application name "Huawei video" is displayed below the service card 802.

Optionally, the service card 802 added to the desktop includes a text and an image. The text is kids, the image is from an image provided by the banner advertisement 801, and the text is from the banner advertisement 801. In addition, an icon of the Huawei video application is displayed before the text, and an application name "Huawei video" is displayed below the service card 802.

It should be understood that a generation rule of the service card 802 may be default, or may be specified based on a user input, or may be automatically selected by a system. This is not limited in this application.

It should be further understood that a size of the service card 802 is not limited in the solutions of this application. For example, the size of the service card 802 may be determined based on a size of a placeable location in a target placement location, or may be determined based on a situation in which the user uses the electronic device 800. This is not limited in this application.

Optionally, the user may further manage the service card 802 by tapping a related option in the option box 804. For example, the user may tap an option of adding to favorites to add the service card 802 to a favorites list. When the service card 802 needs to be used subsequently, the user may directly view the favorites list and perform a further operation, without a need to specially start a corresponding application.

Optionally, after the service card 802 is initiated, an option "Add to desktop" is displayed in the option box 804. The user can directly tap the option "Add to desktop", to add the service card 802 to a blank area of the desktop.

It should be understood that, in this embodiment of this application, an example in which the application is Huawei video is used for description. However, this does not constitute any limitation on this application. When the foregoing application is replaced with another application, the solutions in this embodiment of this application are still effective.

In this embodiment of this application, the user can trigger, by using the banner advertisement of the application page as a control, initiation of the service card related to the banner advertisement, and after the service card is initiated, the user can add the service card to a location such as the desktop by using a push pin, selecting an option, or the like. In this solution, a new triggering manner and a new adding manner of the service card are provided for the user, making the triggering manner and the adding manner of the service card more flexible and convenient. This can improve user experience.

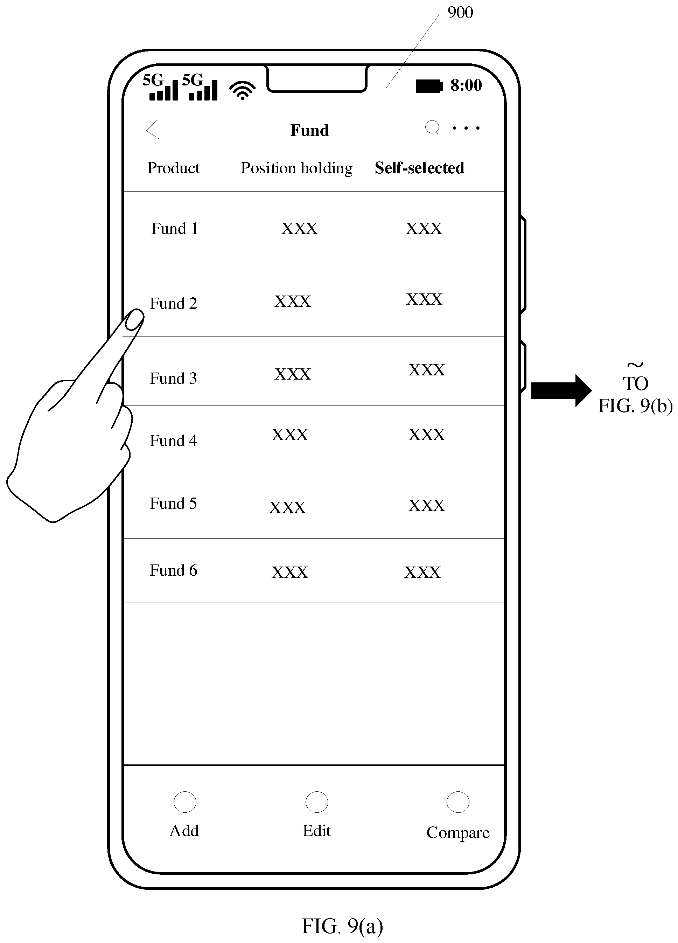

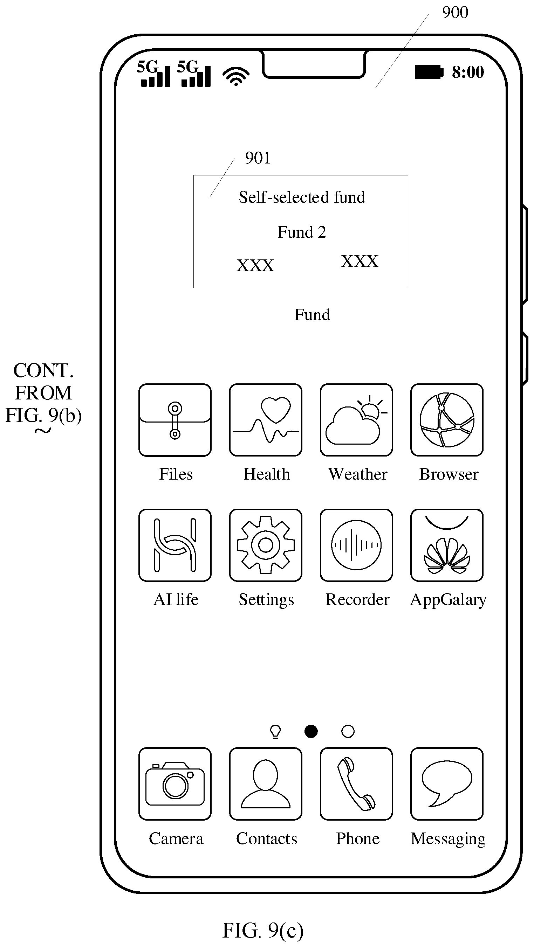

For example, FIG. 9(a) to FIG. 9(c) are a diagram of another interface for managing a service card according to an embodiment of this application. This example is a scenario in which the service card is triggered by using a list.

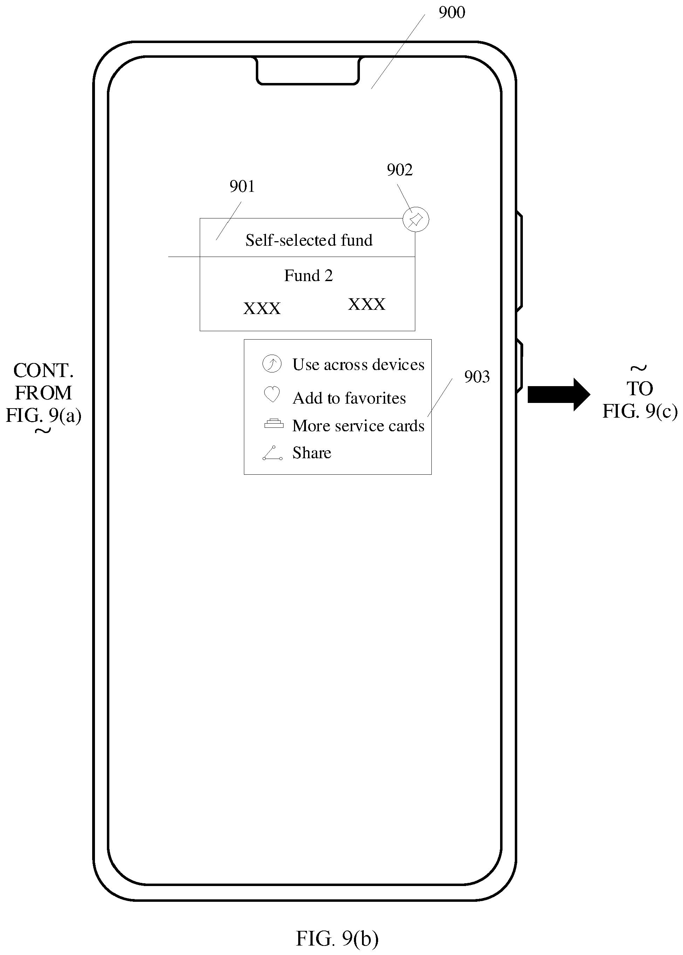

As shown in FIG. 9(a) to FIG. 9(c), a display interface of an electronic device 900 is a display interface of a fund application, a title "Fund" is displayed at the top of the page, and three subtitles "Product", "Position holding", and "Self-selected" are displayed under the title. Currently, the display interface is a page of the subtitle "Self-selected", and data of six self-selected funds (which are a fund 1, a fund 2, a fund 3, a fund 4, a fund 5, and a fund 6) is displayed under the subtitle "Self-selected". When a user wants to generate a service card associated with the fund 2, the user may touch and hold a control "Fund 2" (as shown in FIG. 9(a)). In this case, the service card 901 associated with the fund 2 is displayed on a card panel (as shown in FIG. 9(b)). The service card 901 located on the card panel is associated with a push pin control 902 and an option box 903. The user can pin the service card 901 to a blank location of a desktop of the electronic device 900 by tapping the push pin control 902.

Optionally, the service card 901 added to the desktop includes a text. The text is from the control "Fund 2", and an application name "Fund" is displayed below the service card 901.

It should be understood that a generation rule of the service card 901 may be default, or may be specified based on a user input, or may be automatically selected by a system. This is not limited in this application.

It should be further understood that a size of the service card 901 is not limited in the solutions of this application. For example, the size of the service card 901 may be determined based on a size of a placeable location in a target placement location, or may be determined based on a situation in which the user uses the electronic device 900. This is not limited in this application.

Optionally, the user may further manage the service card 901 by tapping a related option in the option box 903. For example, the user may tap an option of adding to favorites to add the service card 901 to a favorites list. When the service card 901 needs to be used subsequently, the user may directly view the favorites list and perform a further operation, without a need to specially start a corresponding application.

Optionally, after the service card 901 is initiated, an option "Add to desktop" is displayed in the option box 903. The user can directly tap the option "Add to desktop", to add the service card 901 to a blank area of the desktop.

It should be understood that, in this embodiment of this application, an example in which the application is a fund is used for description. However, this does not constitute any limitation on this application. When the foregoing application is replaced with another application, the solutions in this embodiment of this application are still effective.

It should be understood that the embodiments shown in FIG. 4(a) to FIG. 9(c) are merely examples for description. According to a similar method, the user may further trigger, by using another control, a service card associated with the control or a shortcut key set by a system. This is not limited in this application.

In this embodiment of this application, the user can trigger, by using the list of the application page as a control, initiation of the service card associated with the list; and after the service card is initiated, the user can add the service card to a location such as the desktop by using a push pin, selecting an option, or the like. In this solution, a new triggering manner and a new adding manner of the service card are provided for the user, making the triggering manner and the adding manner of the service card more flexible and convenient. This can improve user experience.

In some embodiments, the user can trigger (filter) and manage a service card on a current page or in a current application, for example, by using a specific gesture.

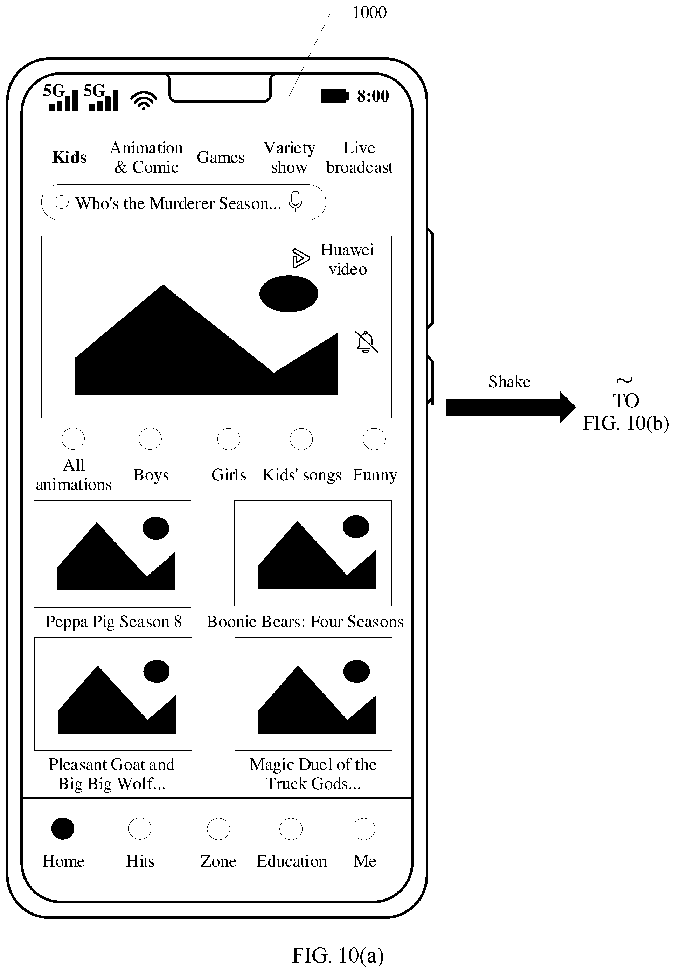

For example, with reference to FIG. 10(a) to FIG. 15(c), the following describes diagrams of display interfaces for triggering (filtering) and managing a service card on a current page or in a current application according to an embodiment of this application.

For example, FIG. 10(a) to FIG. 10(c) are a diagram of another interface for managing a service card according to an embodiment of this application. This example is a scenario in which the service card on the current page is triggered by using a shake gesture.

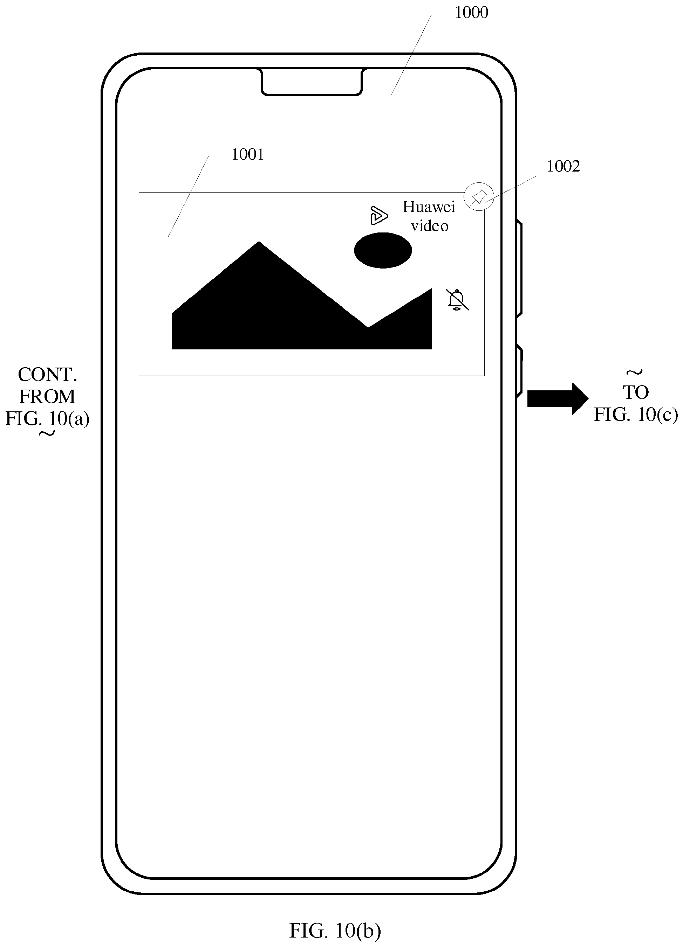

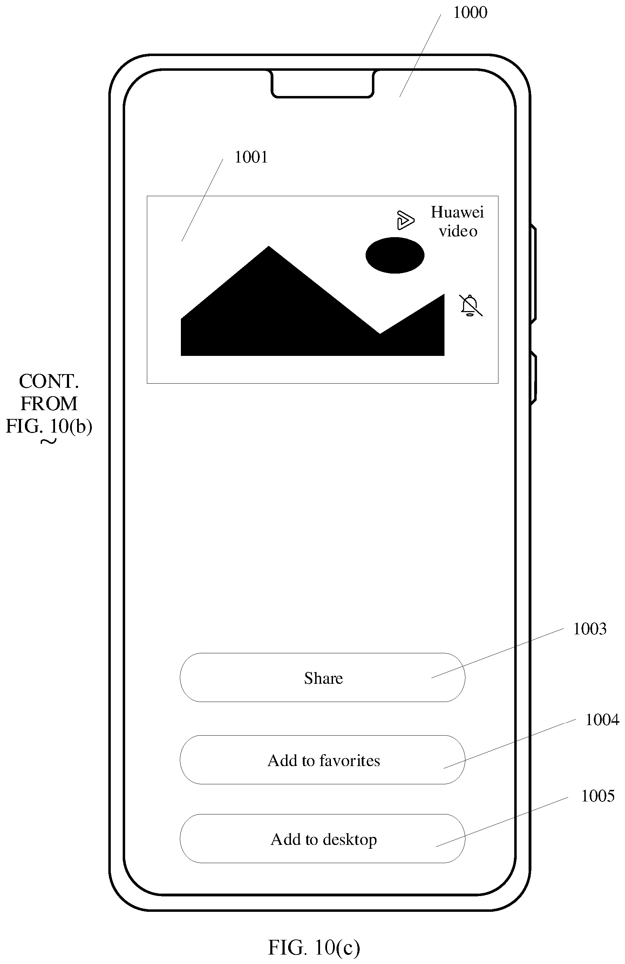

As shown in FIG. 10(a) to FIG. 10(c), a display interface of an electronic device 1000 is Home of a video application, tabs at the top of the display interface include title options: Kids, Animation & Comic, Games, Variety show, and Live broadcast, and content below the title "Kids" is displayed on a current page (as shown in FIG. 10(a)). In this interface state, a user does not know specific service cards. When the user wants the display interface of the electronic device 1000 to display all service cards on the current page (that is, filter the service cards on the current page), the user may shake a mobile phone to display all the service cards on the current page on a card panel (as shown in FIG. 10(b)). It can be learned from FIG. 10(b) that a service card on an interface shown in FIG. 10(a) includes only a service card 1001, and the service card 1001 located on the card panel is associated with a push pin control 1002. After the user taps the service card 1001, the electronic device 1000 displays an interface shown in FIG. 10(c). A control 1003, a control 1004, and a control 1005 are displayed below the interface. The user can share the service card 1001 by tapping the control 1003. The user can also add the service card 1001 to favorites by tapping the control 1004. The user can also add the service card 1001 to a desktop by tapping the control 1005.

Optionally, the user may pin the service card 1001 on the desktop of the electronic device 1000 by directly tapping the push pin control 1002 shown in FIG. 10(b).

Optionally, a form of adding the service card 1001 to the desktop is not limited. The form may be default, or may be determined based on a user input, or may be automatically determined by a system. This is not limited in this application.

It should be further understood that a size of the service card 1001 is not limited in the solutions of this application. For example, the size of the service card 1001 may be determined based on a size of a placeable location in a target placement location, or may be determined based on a situation in which the user uses the electronic device 1000. This is not limited in this application.

It should be understood that, in this embodiment of this application, an example in which the application is Huawei video is used for description. However, this does not constitute any limitation on this application. When the foregoing application is replaced with another application, the solutions in this embodiment of this application are still effective.

It should be understood that, in this embodiment of this application, triggering (filtering) the service card on the current page by using the shake gesture is merely an example for description. The user may also trigger (filter) the service card on the current page by using another gesture or another method. This is not limited in this application.

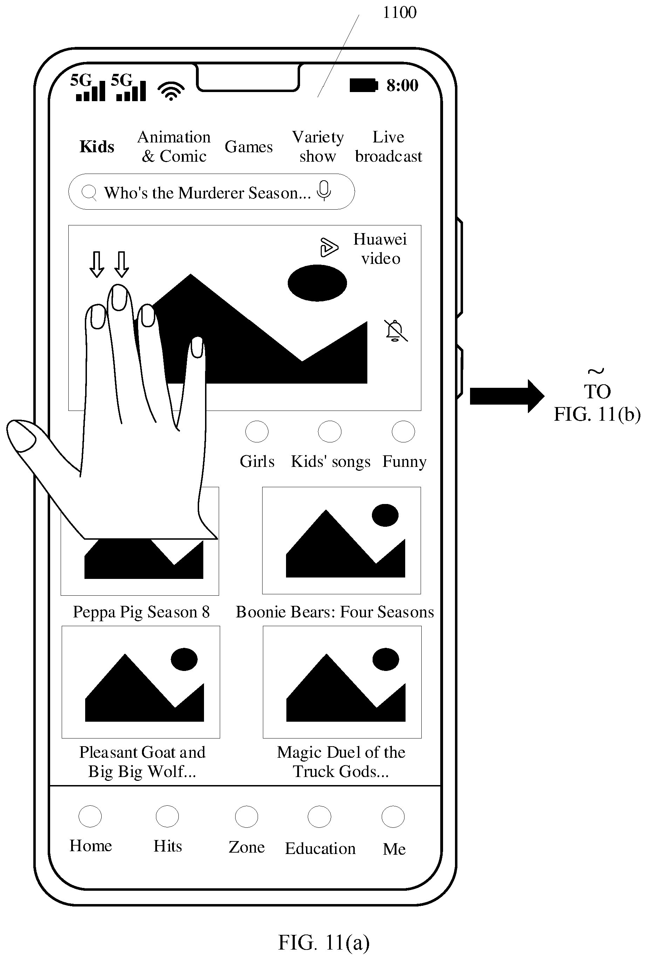

For example, in parallel with the embodiment shown in FIG. 10(a) to FIG. 10(c), FIG. 11(a) to FIG. 11(c) are a diagram of another interface for managing a service card according to an embodiment of this application. This example is a scenario in which the service card on the current page is triggered (filtered) by using a gesture of sliding down with two fingers.

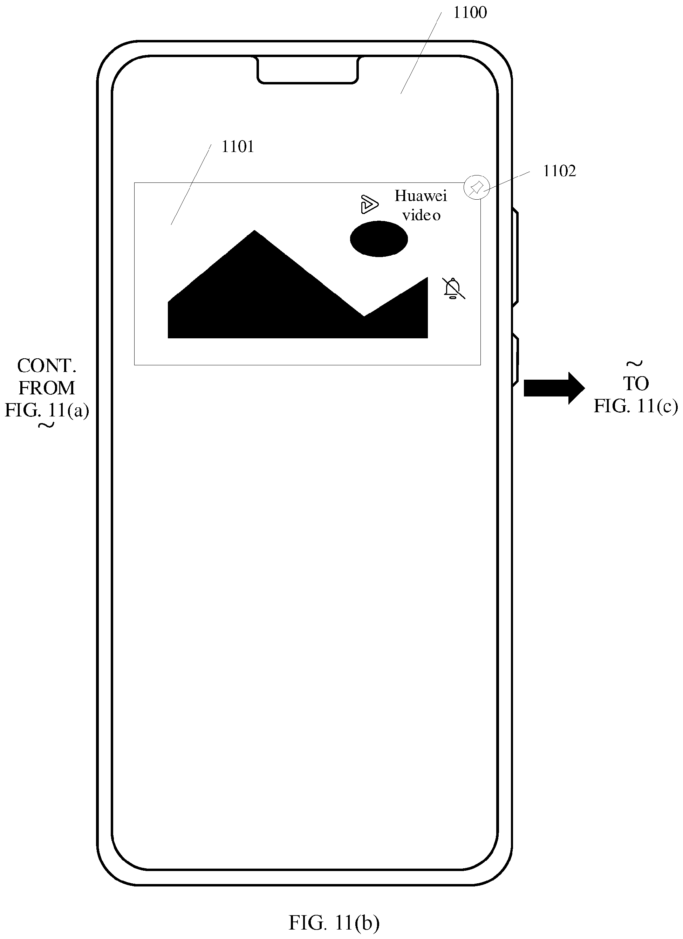

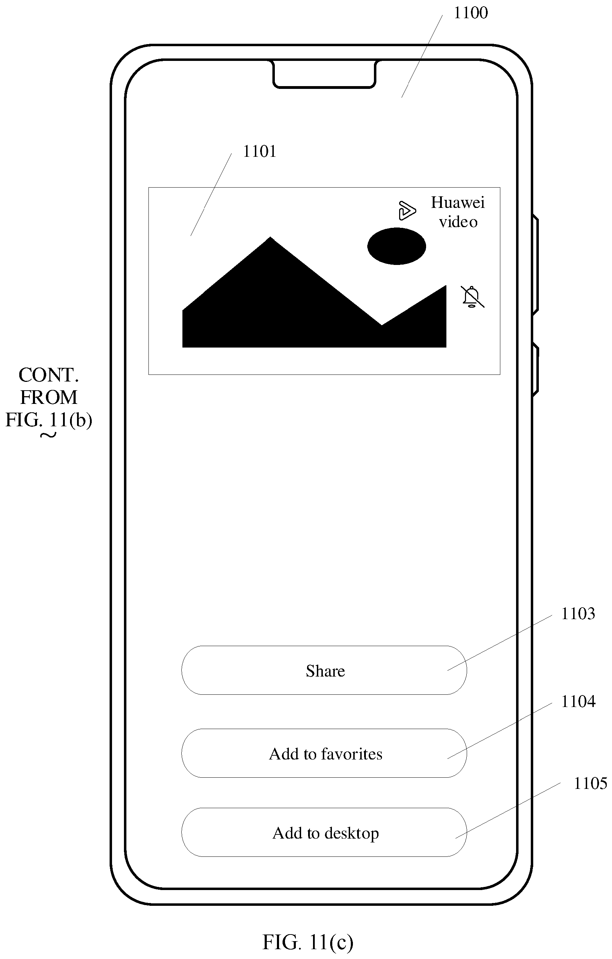

As shown in FIG. 11(a) to FIG. 11(c), a display interface of an electronic device 1100 is Home of a video application, tabs at the top of the display interface include title options: Kids, Animation & Comic, Games, Variety show, and Live broadcast, and content below the title "Kids" is displayed on a current page (as shown in FIG. 11(a)). In this interface state, a user does not know specific service cards. When the user wants the display interface of the electronic device 1100 to display all service cards on the current page (that is, filter the service cards on the current page), the user may slide two fingers down on a screen of the electronic device 1100, so that all the service cards on the current page are displayed on a card panel (as shown in FIG. 11(b)). It can be learned from FIG. 11(b) that a service card on an interface shown in FIG. 11(a) includes only a service card 1101, and the service card 1101 located on the card panel is associated with a push pin control 1102. After the user taps the service card 1101, the electronic device 1100 displays an interface shown in FIG. 11(c). A control 1103, a control 1104, and a control 1105 are displayed below the interface. The user can share the service card 1101 by tapping the control 1103. The user can also add the service card 1101 to favorites by tapping the control 1104. The user can also add the service card 1101 to a desktop by tapping the control 1105.

Optionally, the user may pin the service card 1101 on the desktop of the electronic device 1100 by directly tapping the push pin control 1102 shown in FIG. 11(b).

Optionally, a form of adding the service card 1101 to the desktop is not limited. The form may be default, or may be determined based on a user input, or may be automatically determined by a system. This is not limited in this application.

It should be further understood that a size of the service card 1101 is not limited in the solutions of this application. For example, the size of the service card 1101 may be determined based on a size of a placeable location in a target placement location, or may be determined based on a situation in which the user uses the electronic device 1100. This is not limited in this application.

It should be understood that, in this embodiment of this application, an example in which the application is Huawei video is used for description. However, this does not constitute any limitation on this application. When the foregoing application is replaced with another application, the solutions in this embodiment of this application are still effective.

It should be understood that, in this embodiment of this application, triggering the service card on the current page by using the gesture of sliding down with two fingers is merely an example for description. The user may also trigger the service card on the current page by using another gesture or another method. This is not limited in this application.

In this embodiment of this application, the user can use a specific gesture or the like to trigger all the service cards on the current page of the application (filter all the service cards on the current page of the application), and select a target service card to perform a subsequent operation. This provides a new triggering manner and a new adding manner of the service card for the user, and can further improve user experience.

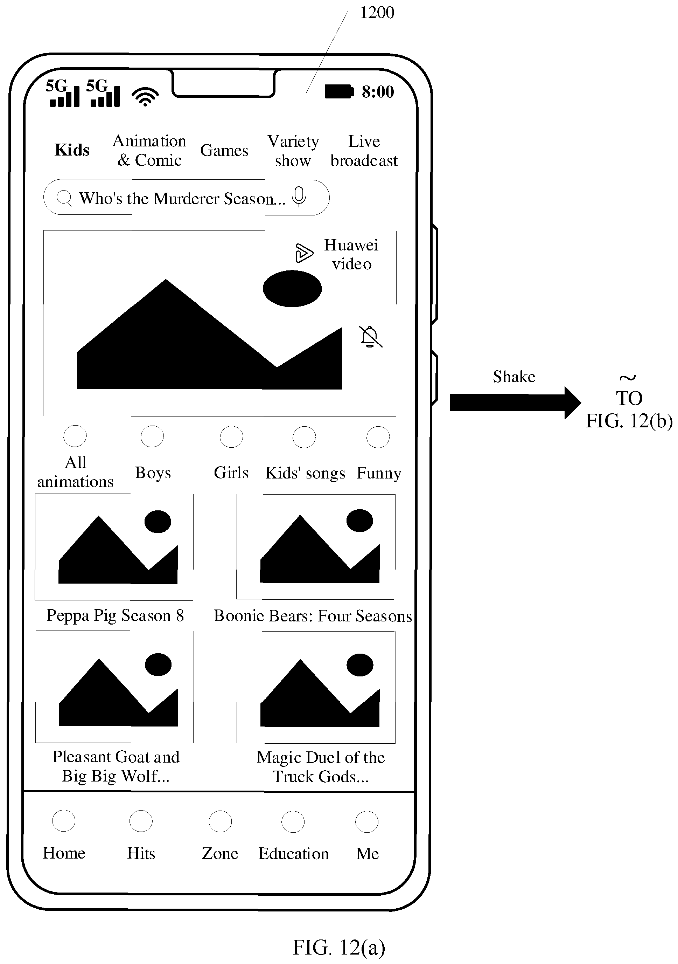

For example, FIG. 12(a) to FIG. 12(c) are a diagram of another interface for managing a service card according to an embodiment of this application. This example is a scenario in which all service cards in a current application are triggered (filtered) by shaking an electronic device (a shake gesture).

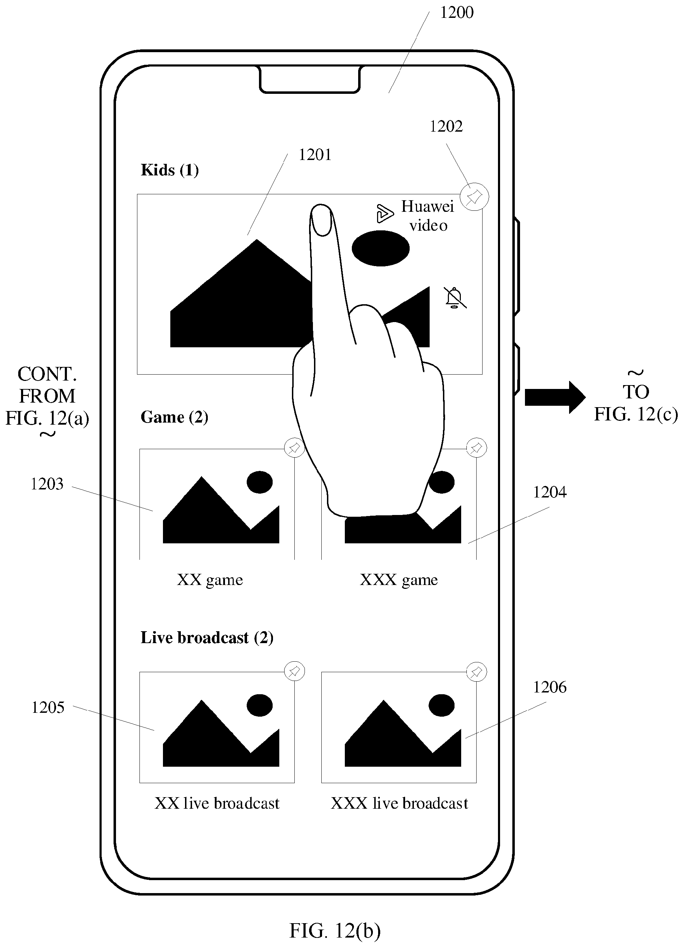

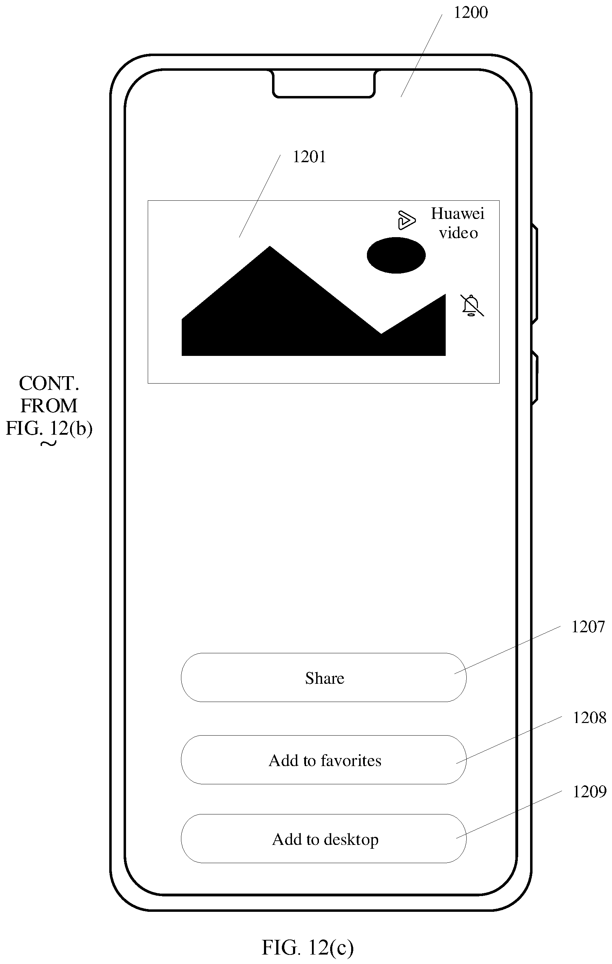

As shown in FIG. 12(a) to FIG. 12(c), a display interface of an electronic device 1200 is Home of a video application, tabs at the top of the display interface include title options: Kids, Animation & Comic, Games, Variety show, and Live broadcast, and content below the title "Kids" is displayed on a current page (as shown in FIG. 12(a)). In this interface state, a user does not know specific service cards in the current application. When the user wants the display interface of the electronic device 1200 to display all service cards in the current application (that is, filter the service cards in the current application), the user may shake the electronic device 1200, so that all the service cards in the current application are displayed on a card panel (as shown in FIG. 12(b)). It can be learned from FIG. 12(b) that the current application has a plurality of service cards, and five service cards can be seen on an interface shown in FIG. 12(b). The five service cards are a service card 1201 (associated with a push pin control 1202) below the title "Kids", a service card 1203 below the title "Games", a service card 1204 below the title "Games", a service card 1205 below the title "Live broadcast", and a service card 1206 below the title "Live broadcast". Each service card is associated with a push pin control. When the user wants to use the service card 1201, the user taps the service card 1201, so that the electronic device 1200 displays an interface shown in FIG. 12(c). A control 1207, a control 1208, and a control 1209 are displayed below the interface. The user can share the service card 1201 by tapping the control 1207. The user can also add the service card 1201 to favorites by tapping the control 1208. The user can also add the service card 1201 to a desktop of the electronic device 1200 by tapping the control 1209.

Optionally, the user may pin the service card 1201 on the desktop of the electronic device 1200 by directly tapping the push pin control 1202 shown in FIG. 12(b).

Optionally, a form of adding the service card 1201 to the desktop is not limited. The form may be default, or may be determined based on a user input, or may be automatically determined by a system. This is not limited in this application.

It should be further understood that a size and an arrangement manner of each service card are not limited in the solutions of this application. For example, the size of each service card may be determined based on a size of a placeable location in a target placement location, and the arrangement manner of each service card may be determined based on a priority; or the size and the arrangement manner may be determined based on a case in which the user is using the electronic device 1200. This is not limited in this application.

It should be understood that, in this embodiment of this application, an example in which the application is Huawei video is used for description. However, this does not constitute any limitation on this application. When the foregoing application is replaced with another application, the solutions in this embodiment of this application are still effective.

It should be understood that, in this embodiment of this application, filtering the service card in the current application by using the shake gesture is merely an example for description. The user may also filter the service card in the current application by using another gesture or another method. This is not limited in this application.

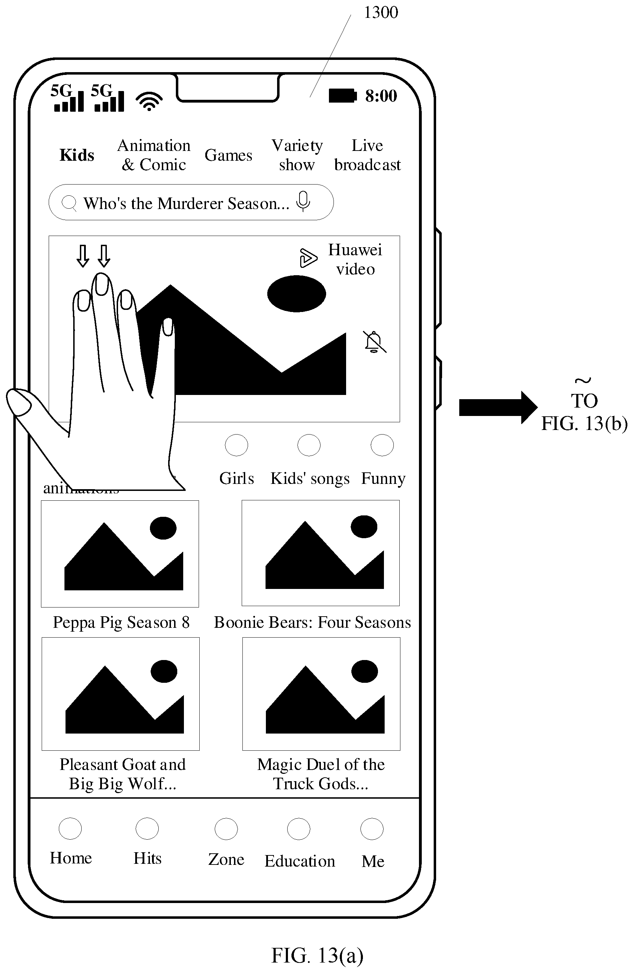

For example, in parallel with the embodiment shown in FIG. 12(a) to FIG. 12(c), FIG. 13(a) to FIG. 13(c) are a diagram of another interface for managing a service card according to an embodiment of this application. This example is a scenario in which all service cards in a current application are filtered by using a gesture of sliding down with two fingers.

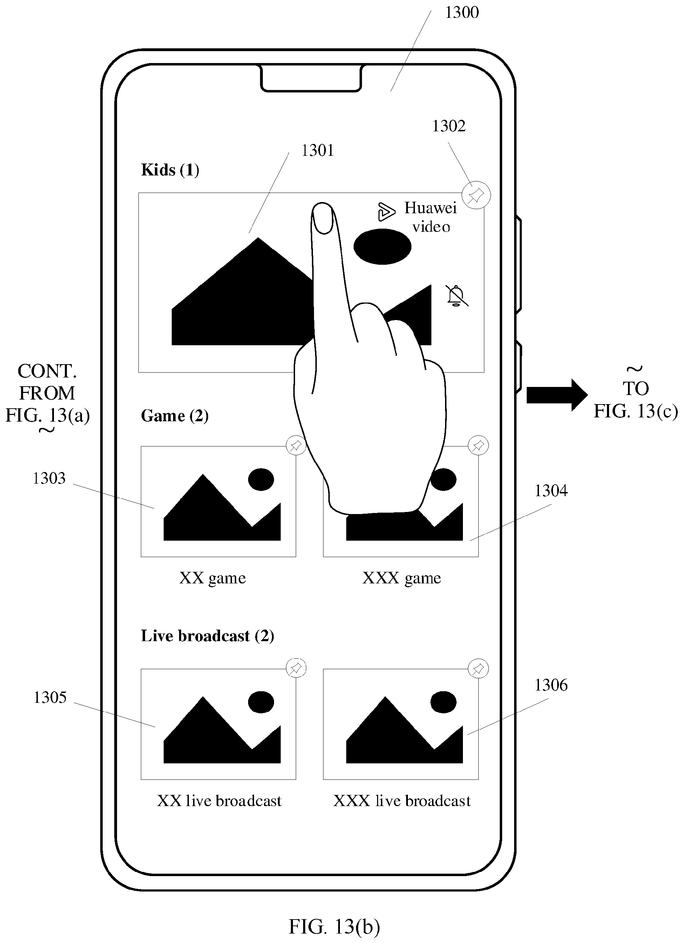

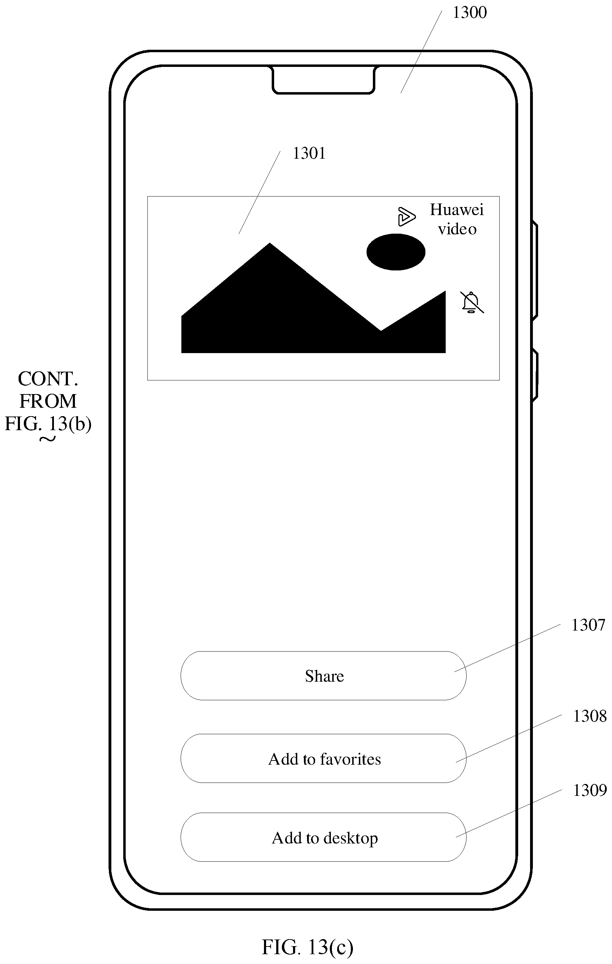

As shown in FIG. 13(a) to FIG. 13(c), a display interface of an electronic device 1300 is Home of a video application, tabs at the top of the display interface include titles: Kids, Animation & Comic, Games, Variety show, and Live broadcast, and content below the title "Kids" is displayed on a current page (as shown in FIG. 13(a)). In this interface state, a user does not know specific service cards in the current application. When the user wants the display interface of the electronic device 1300 to display all service cards in the current application (that is, filter the service cards in the current application), the user may slide two fingers down on a screen of the electronic device 1300, so that all the service cards in the current application are displayed on a card panel (as shown in FIG. 13(b)). It can be learned from FIG. 13(b) that the current application has a plurality of service cards, and five service cards can be seen on an interface shown in FIG. 13(b). The five service cards are a service card 1301 (associated with a push pin control 1302) below the title "Kids", a service card 1303 below the title "Games", a service card 1304 below the title "Games", a service card 1305 below the title "Live broadcast", and a service card 1306 below the title "Live broadcast". Each service card is associated with a push pin control. When the user wants to use the service card 1301, the user taps the service card 1301, so that the electronic device 1300 displays an interface shown in FIG. 13(c). A control 1307, a control 1308, and a control 1309 are displayed below the interface. The user can share the service card 1301 by tapping the control 1307. The user can also add the service card 1301 to favorites by tapping the control 1308. The user can also add the service card 1301 to a desktop of the electronic device 1300 by tapping the control 1309.

Optionally, the user may pin the service card 1301 on the desktop of the electronic device 1300 by directly tapping the push pin control 1302 shown in FIG. 13(b).

Optionally, a form of adding the service card 1301 to the desktop is not limited. The form may be default, or may be determined based on a user input, or may be automatically determined by a system. This is not limited in this application.

It should be further understood that a size and an arrangement manner of each service card are not limited in the solutions of this application. For example, the size of each service card may be determined based on a size of a placeable location in a target placement location, and the arrangement manner of each service card may be determined based on a priority; or the size and the arrangement manner may be determined based on a case in which the user is using the electronic device 1300. This is not limited in this application.

It should be understood that, in this embodiment of this application, an example in which the application is Huawei video is used for description. However, this does not constitute any limitation on this application. When the foregoing application is replaced with another application, the solutions in this embodiment of this application are still effective.

It should be understood that, in this embodiment of this application, filtering the service card in the current application by using the gesture of sliding down with two fingers is merely an example for description. The user may also filter the service card in the current application by using another gesture or another method. This is not limited in this application.

In this embodiment of this application, the user can use a specific gesture or the like to access all the service cards in the current application (filter all the service cards in the current application), and select a target service card to perform a subsequent operation. This provides a new triggering manner and a new adding manner of the service card for the user, and can further improve user experience.

It should be noted that the embodiment shown in FIG. 10(a) to FIG. 10(c) and the embodiment shown in FIG. 12(a) to FIG. 12(c) may be implemented simultaneously; and when the two embodiments are implemented simultaneously, triggering manners (for example, gestures) corresponding to the two embodiments are different. Similarly, the embodiment shown in FIG. 11(a) to FIG. 11(c) and the embodiment shown in FIG. 13(a) to FIG. 13(c) may be implemented simultaneously; and when the two embodiments are implemented simultaneously, triggering manners (for example, gestures) corresponding to the two embodiments are different.

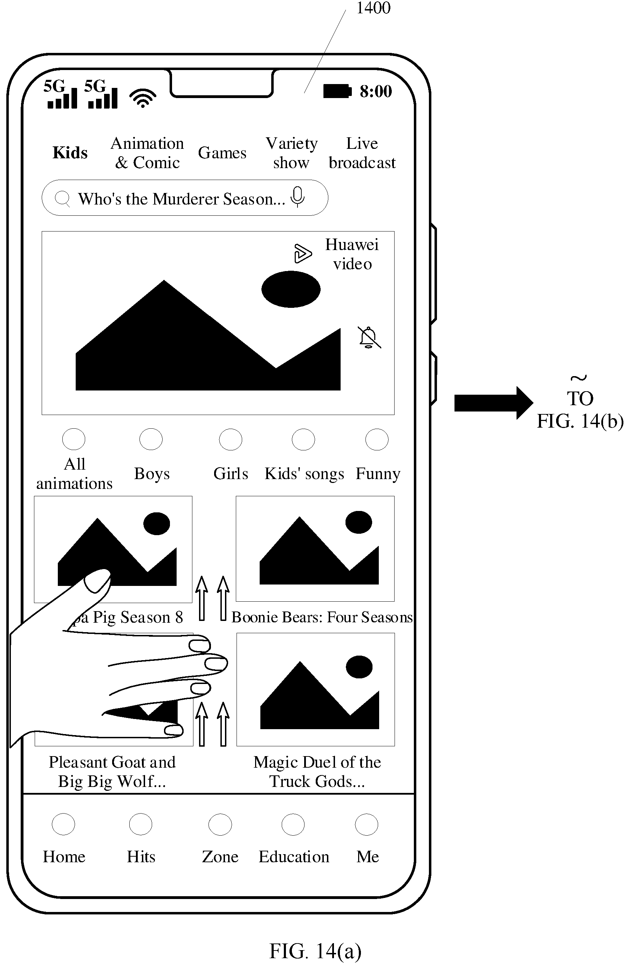

For example, FIG. 14(a) to FIG. 14(c) are a diagram of another interface for managing a service card according to an embodiment of this application. This example is a scenario in which a gesture is used to trigger all service cards in a current application to be displayed in a semi-modal form.

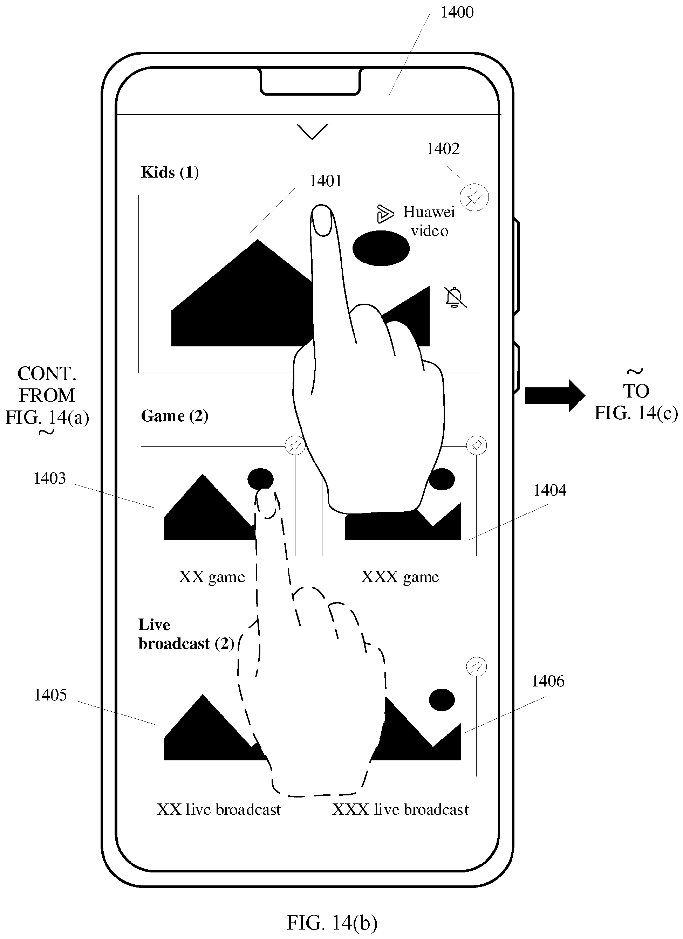

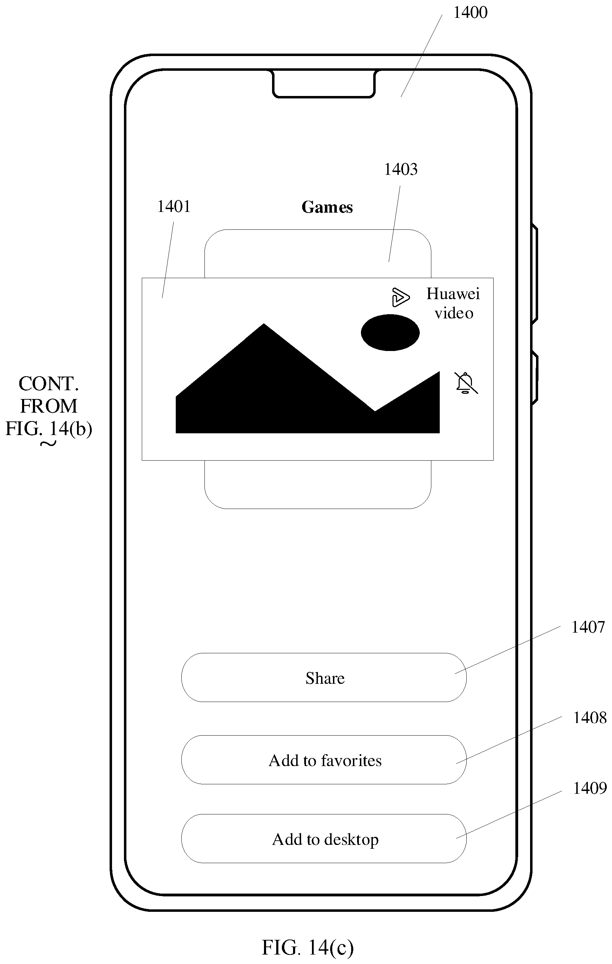

As shown in FIG. 14(a) to FIG. 14(c), a display interface of an electronic device 1400 is Home of a video application, tabs at the top of the display interface include title options: Kids, Animation & Comic, Games, Variety show, and Live broadcast, and content below the title "Kids" is displayed on a current page (as shown in FIG. 14(a)). In this interface state, a user does not know specific service cards in the current application. When the user wants the display interface of the electronic device 1400 to display all service cards in the current application in a semi-modal form (that is, filter the service cards in the current application), the user may slide two fingers up on a screen of the electronic device 1400, so that all the service cards in the current application are displayed in a semi-modal form on a card panel (as shown in FIG. 14(b)). It can be learned from FIG. 14(b) that the current application has a plurality of service cards, and five service cards can be seen on an interface shown in FIG. 14(b). The five service cards are a service card 1401 (associated with a push pin control 1402) below the title "Kids", a service card 1403 below the title "Games", a service card 1404 below the title "Games", a service card 1405 below the title "Live broadcast", and a service card 1406 below the title "Live broadcast". Each service card is associated with a push pin control. The user may view another service card of the application (not shown in the figure) by sliding up or down, or turn off display of a service card in the current application by pulling down. When the user wants to use both the service card 1401 and the service card 1403, the user sequentially taps the service card 1401 and the service card 1403, so that the electronic device 1400 displays an interface shown in FIG. 14(c). A control 1407, a control 1408, and a control 1409 are displayed below the interface. The user can share the service card 1401 and the service card 1403 by tapping the control 1407. The user can also add the service card 1401 and the service card 1403 to favorites by tapping the control 1408. The user can also add the service card 1401 and the service card 1403 to a desktop of the electronic device 1400 by tapping the control 1409.

Optionally, the user may pin a corresponding service card on the desktop of the electronic device 1400 by directly tapping a push pin control shown in FIG. 14(b).

Optionally, a form of adding the service card to the desktop is not limited. The form may be default, or may be determined based on a user input, or may be automatically determined by a system. This is not limited in this application.

It should be further understood that a size and an arrangement manner of each service card are not limited in the solutions of this application. For example, the size of each service card may be determined based on a size of a placeable location in a target placement location, and the arrangement manner of each service card may be determined based on a priority; or the size and the arrangement manner may be determined based on a case in which the user is using the electronic device 1400. This is not limited in this application.

It should be understood that, in this embodiment of this application, an example in which the application is Huawei video is used for description. However, this does not constitute any limitation on this application. When the foregoing application is replaced with another application, the solutions in this embodiment of this application are still effective.

Optionally, the user may further use another gesture or another method, for example, a gesture determined based on a user input, or another gesture or another method, to display the service card in the current application in a half-modal form. This is not limited in this application.

In this embodiment of this application, the user can use a specific gesture or the like to display all the service cards in the current application in a half-modal form. In this mode, the user can browse the service card in the current application by sliding up or down, and select a target service card to perform a subsequent operation. This provides a new triggering manner and a new adding manner of the service card for the user, and can further improve user experience.

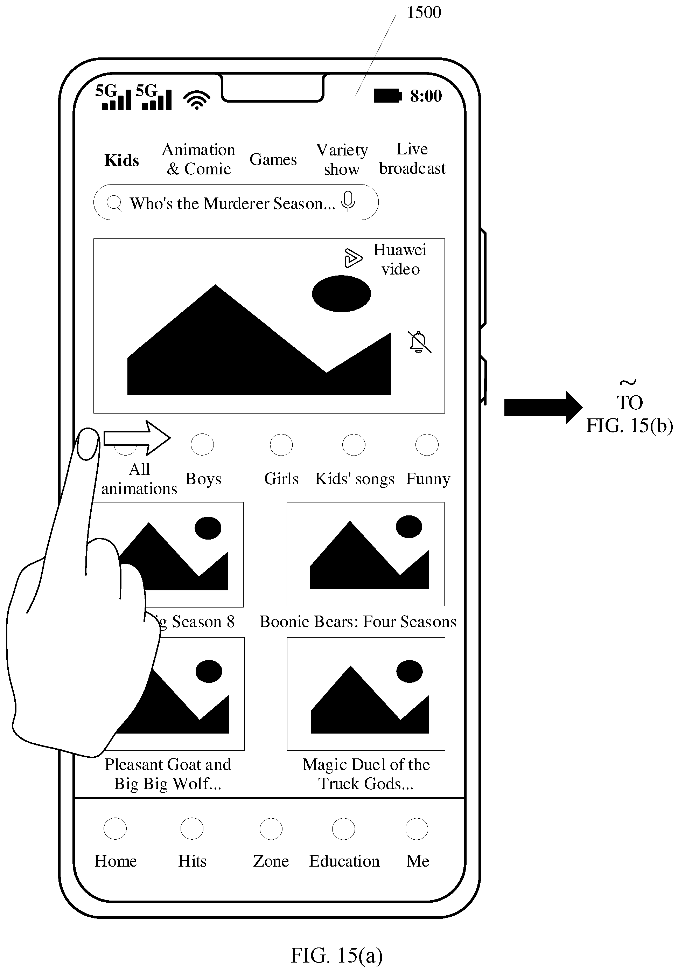

For example, FIG. 15(a) to FIG. 15(c) are a diagram of another interface for managing a service card according to an embodiment of this application. This example is a scenario in which all service cards in a current application are triggered by using a side-slide gesture.

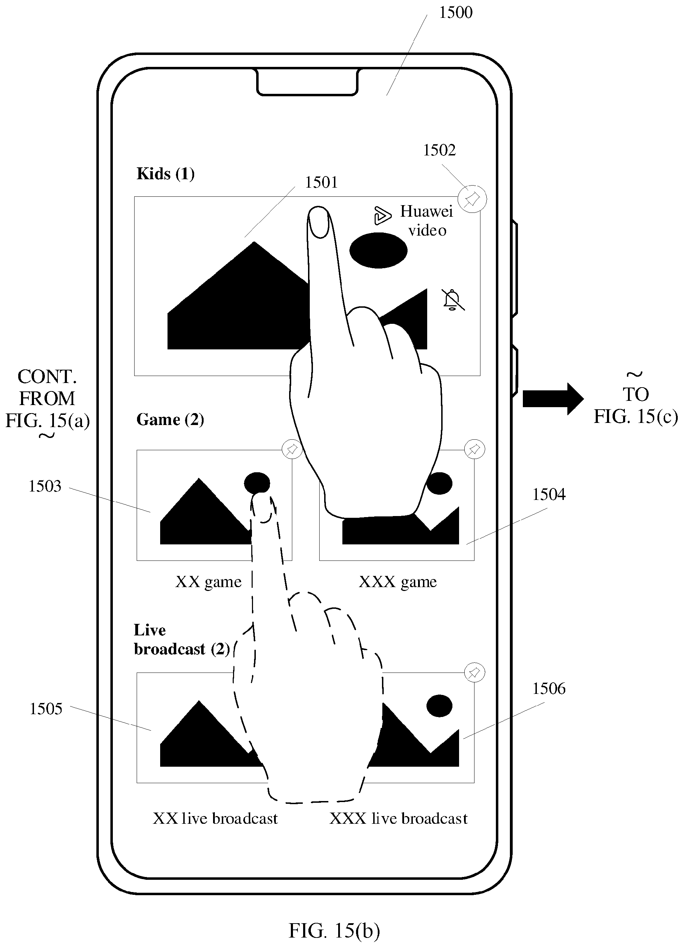

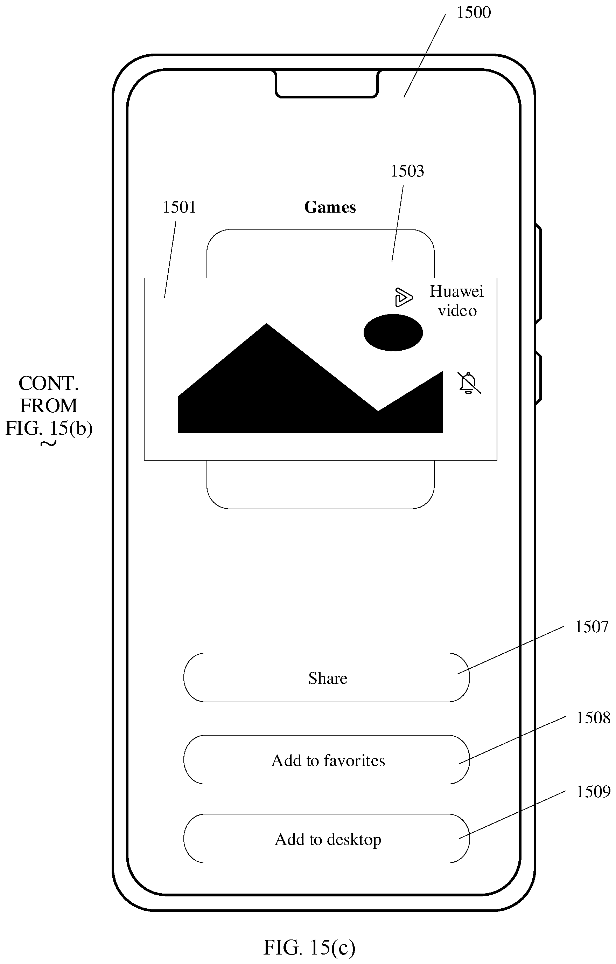

As shown in FIG. 15(a) to FIG. 15(c), a display interface of an electronic device 1500 is Home of a video application, tabs at the top of the display interface include title options: Kids, Animation & Comic, Games, Variety show, and Live broadcast, and content below the title "Kids" is displayed on a current page (as shown in FIG. 15(a)). In this interface state, a user does not know specific service cards in the current application. When the user wants the display interface of the electronic device 1500 to display all service cards in the current application (that is, filter the service cards in the current application), the user may perform side sliding on a screen of the electronic device 1500, so that all the service cards in the current application are displayed on a card panel (as shown in FIG. 15(b)). It can be learned from FIG. 15(b) that the current application has a plurality of service cards, and five service cards can be seen on an interface shown in FIG. 15(b). The five service cards are a service card 1501 (associated with a push pin control 1502) below the title "Kids", a service card 1503 below the title "Games", a service card 1504 below the title "Games", a service card 1505 below the title "Live broadcast", and a service card 1506 below the title "Live broadcast". Each service card is associated with a push pin control. When the user wants to use both the service card 1501 and the service card 1503, the user sequentially taps the service card 1501 and the service card 1503, so that the electronic device 1500 displays an interface shown in FIG. 15(c). A control 1507, a control 1508, and a control 1509 are displayed below the interface. The user can share the service card 1501 and the service card 1503 by tapping the control 1507. The user can also add the service card 1501 and the service card 1503 to favorites by tapping the control 1508. The user can also add the service card 1501 and the service card 1503 to a desktop of the electronic device 1500 by tapping the control 1509.

Optionally, the user may pin a corresponding service card on the desktop of the electronic device 1500 by directly tapping a push pin control shown in FIG. 15(b).

Optionally, a form of adding the service card to the desktop is not limited. The form may be default, or may be determined based on a user input, or may be automatically determined by a system. This is not limited in this application.

It should be further understood that a size and an arrangement manner of each service card are not limited in the solutions of this application. For example, the size of each service card may be determined based on a size of a placeable location in a target placement location, and the arrangement manner of each service card may be determined based on a priority; or the size and the arrangement manner may be determined based on a case in which the user is using the electronic device 1500. This is not limited in this application.

It should be understood that, in this embodiment of this application, an example in which the application is Huawei video is used for description. However, this does not constitute any limitation on this application. When the foregoing application is replaced with another application, the solutions in this embodiment of this application are still effective.

Optionally, the user may further use another gesture or another method, for example, a gesture determined based on a user input, or another gesture or another method, to display the service card in the current application. This is not limited in this application.

In this embodiment of this application, the user can use a specific gesture or the like to display all the service cards in the current application, and select a target service card to perform a subsequent operation. This provides a new triggering manner and a new adding manner of the service card for the user, and can further improve user experience.

In some embodiments, switching of a service card between different scenarios can be implemented.

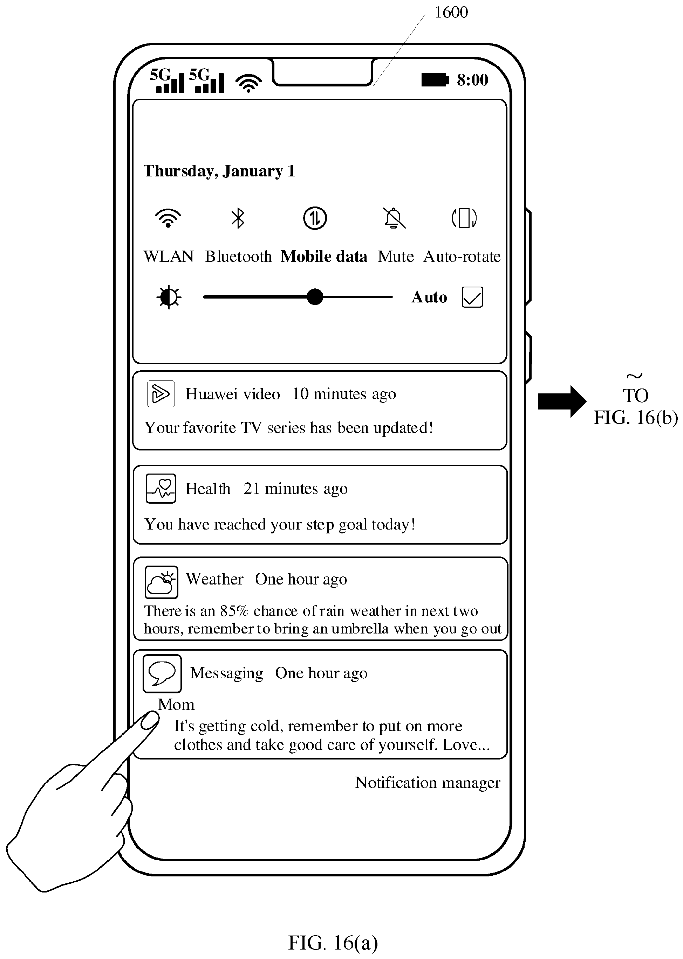

With reference to FIG. 16(a) to FIG. 21(c), the following describes diagrams of display interfaces for service card conversion between different scenarios according to an embodiment of this application.

For example, FIG. 16(a) to FIG. 16(c) are a diagram of an interface for service card conversion between different scenarios according to an embodiment of this application. In this example, a service card is converted between a notification center of an electronic device and a desktop of the electronic device.

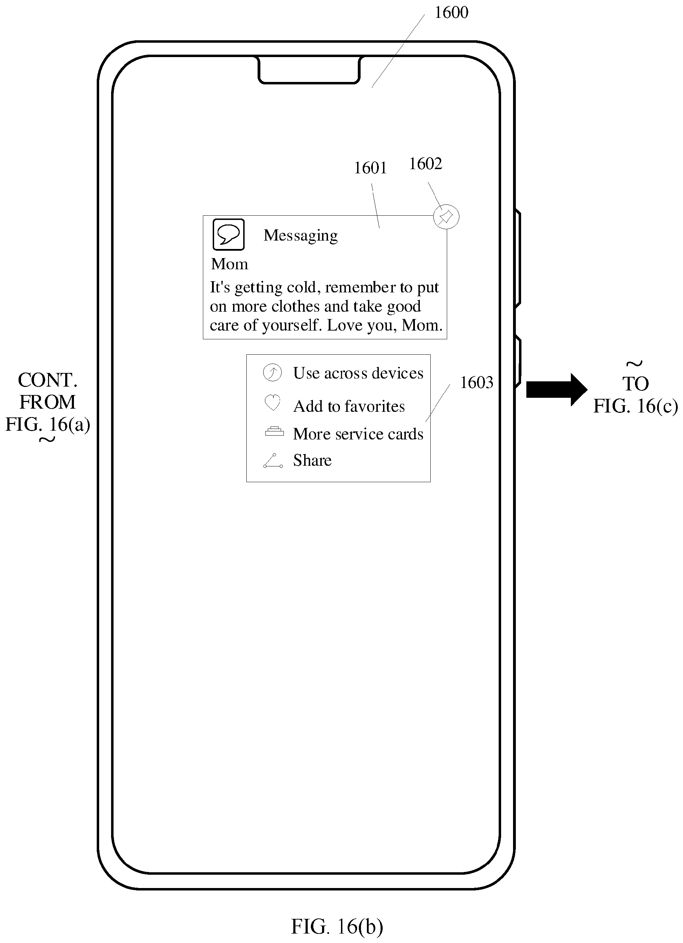

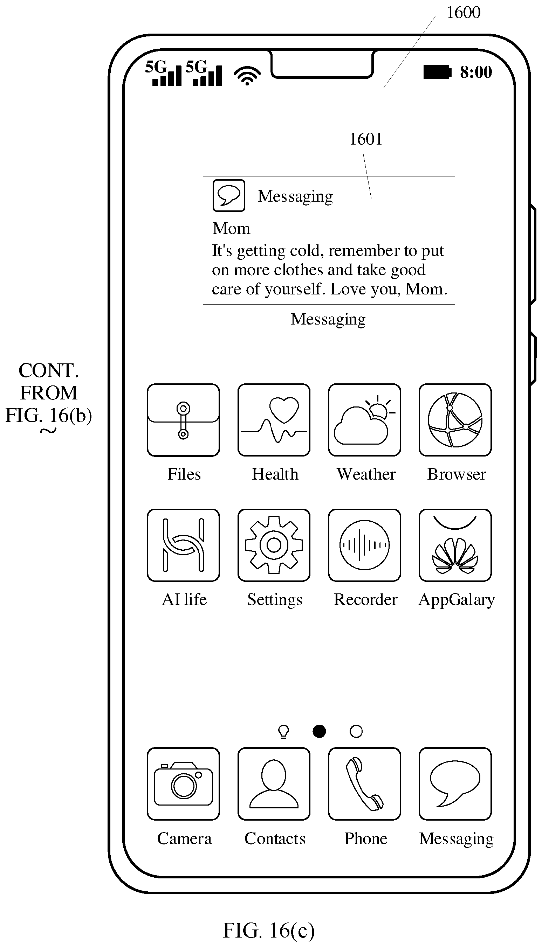

As shown in FIG. 16(a) to FIG. 16(c), a display screen of the electronic device 1600 is on a display interface of a notification bar. The notification bar separately displays a notification related to a Huawei video application, a notification related to a Huawei health application, a notification related to a weather application, and a notification related to a messaging application. When a user wants to view the notification related to the messaging application at any time, the user may touch and hold the notification related to the messaging application in the notification bar (as shown in FIG. 16(a)). In this case, a service card 1601 associated with the notification related to the messaging application is displayed on a display interface of the electronic device 1600 (as shown in FIG. 16(b)). The service card 1601 is associated with a push pin control 1602 and an option box 1603. The user can pin the service card 1601 to a blank location of a desktop of the electronic device 1600 by tapping the push pin control 1602 (as shown in FIG. 16(c)).

Optionally, when the notification related to the messaging application is displayed on the desktop in a form of the service card 1601, the notification related to the messaging application in the notification bar list is no longer displayed, and a new message subsequently received by the messaging application is displayed in the service card 1601 rather than displayed in the notification center.

Optionally, when the user closes the service card 1601 on the desktop, a new message subsequently received by the messaging application is displayed in the notification center again.

Optionally, the service card 1601 includes a text. The text is messaging, a part of the text further includes content of a notification, and the text is from an application name corresponding to the notification and content of the notification. In addition, an icon of the messaging application is displayed before the text, and the application name "Messaging" is displayed under the service card.

Optionally, the service card 1601 includes a text and an image. The text is messaging, a part of the text further includes content of a notification, the image is from the notification, and the text is from an application name corresponding to the notification and the content of the notification. In addition, an icon of the messaging application is displayed before the text, and the application name "Messaging" is displayed under the service card 1601.

It should be understood that a generation rule of the service card 1601 may be default, or may be specified based on a user input, or may be automatically selected by a system. This is not limited in this application.

It should be further understood that a size of the service card 1601 is not limited in the solutions of this application. For example, the size of the service card 1601 may be determined based on a size of a placeable location in a target placement location, or may be determined based on a situation in which the user uses the electronic device 1600. This is not limited in this application.

Optionally, the user may further manage the service card 1601 by tapping a related option in the option box 1603. For example, the user may tap an option of adding to favorites to add the service card 1601 to a favorites list. When the service card 1601 needs to be used subsequently, the user may directly view the favorites list and perform a further operation, without a need to specially start a corresponding application.

Optionally, after the service card 1601 is initiated, an option "Add to desktop" is displayed in the option box 1603. The user can directly tap the option "Add to desktop", to add the service card 1601 to a blank area of the desktop.

In this embodiment of this application, a specific notification card of the application in the notification center can be converted into a service card displayed on the desktop, so that the user can receive content of a latest notification in real time by using the service card displayed on the desktop, and perform an operation on the content of the latest notification. This improves user experience.

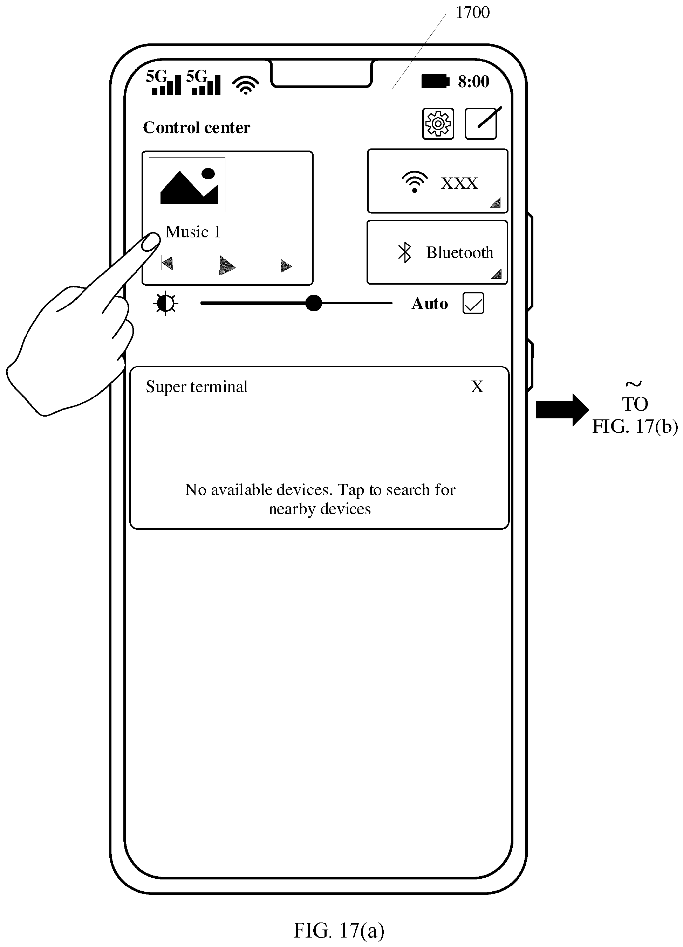

For example, FIG. 17(a) to FIG. 17(c) are a diagram of another interface for service card conversion between different scenarios according to an embodiment of this application. In this example, a service card is converted between a control center of an electronic device and a desktop of the electronic device.

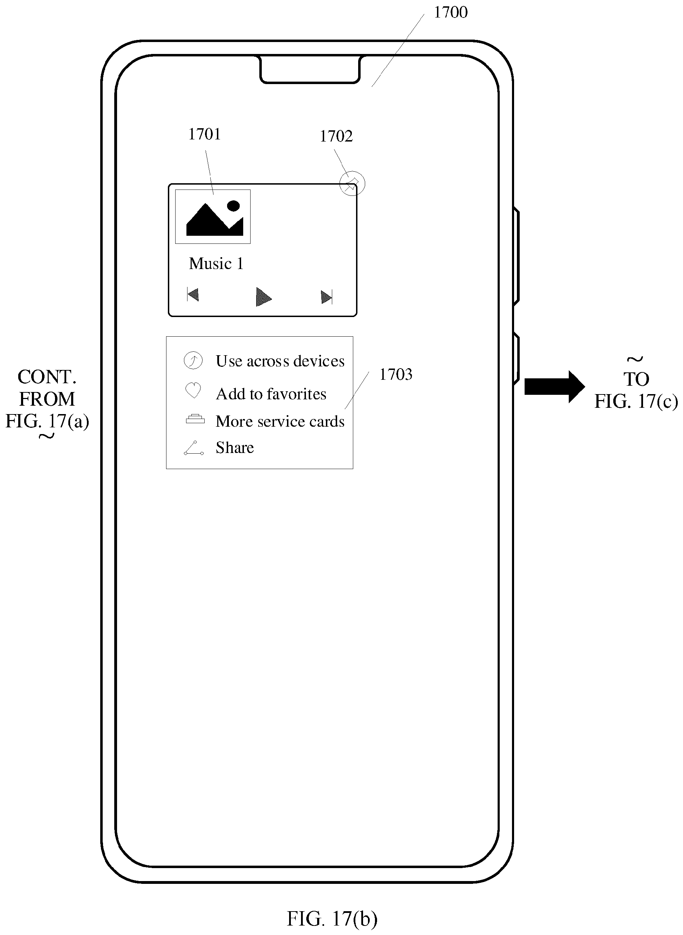

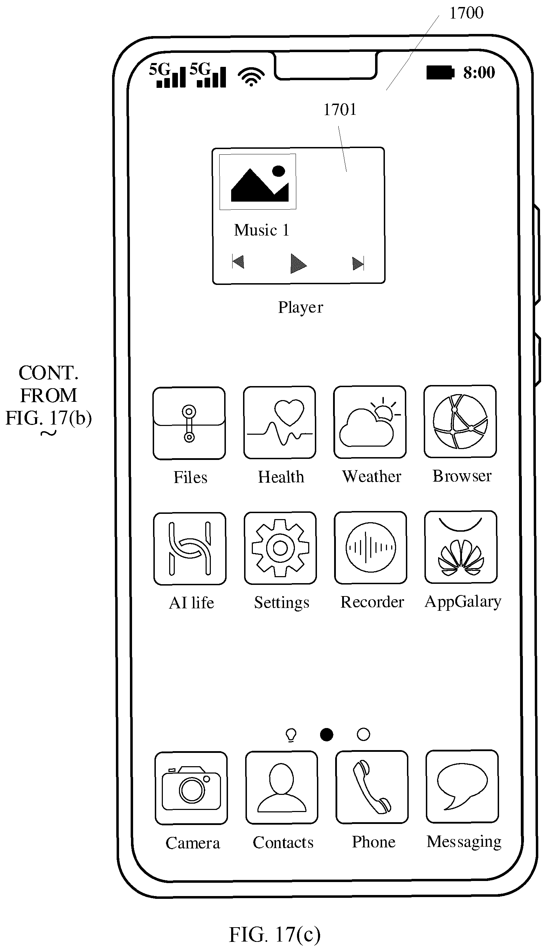

As shown in FIG. 17(a) to FIG. 17(c), a display screen of the electronic device 1700 is on a display interface of a control center. A control interface of a music application, a Bluetooth control interface, a Wi-Fi control interface, and a screen brightness control interface are separately displayed on the interface of the control center. When a user wants to control the music application at any time, the user may touch and hold the control interface of the music application in the control center (as shown in FIG. 17(a)). In this case, a service card 1701 associated with the control interface of the music application is displayed on a display interface of the electronic device 1700 (as shown in FIG. 17(b)). The service card 1701 is associated with a push pin control 1702 and an option box 1703. The user can pin the service card 1701 to a blank location of a desktop of the electronic device 1700 by tapping the push pin control 1702 (as shown in FIG. 17(c)).

Optionally, when the service card 1701 is displayed on the desktop, the control interface of the music application in the control center is no longer displayed.

Optionally, when the user cancels display of the service card 1701 on the desktop, the control center displays the control interface of the music application again.

It should be understood that a generation rule of the service card 1701 may be default, or may be specified based on a user input, or may be automatically selected by a system. This is not limited in this application.

It should be further understood that a size of the service card 1701 is not limited in the solutions of this application. For example, the size of the service card 1701 may be determined based on a size of a placeable location in a target placement location, or may be determined based on a situation in which the user uses the electronic device 1700. This is not limited in this application.

Optionally, the user may further manage the service card 1701 by tapping a related option in the option box 1703. For example, the user may tap an option of adding to favorites to add the service card 1701 to a favorites list. When the service card 1701 needs to be used subsequently, the user may directly view the favorites list and perform a further operation, without a need to specially start a corresponding application.

Optionally, after the service card 1701 is initiated, an option "Add to desktop" is displayed in the option box 1703. The user can directly tap the option "Add to desktop", to add the service card 1701 to a blank area of the desktop.

In this embodiment of this application, a control card of an application in the control center can be converted into a service card displayed on the desktop, so that the user can control a related application by using the service card, without a need to specially open the control center or the related application. This improves user experience.

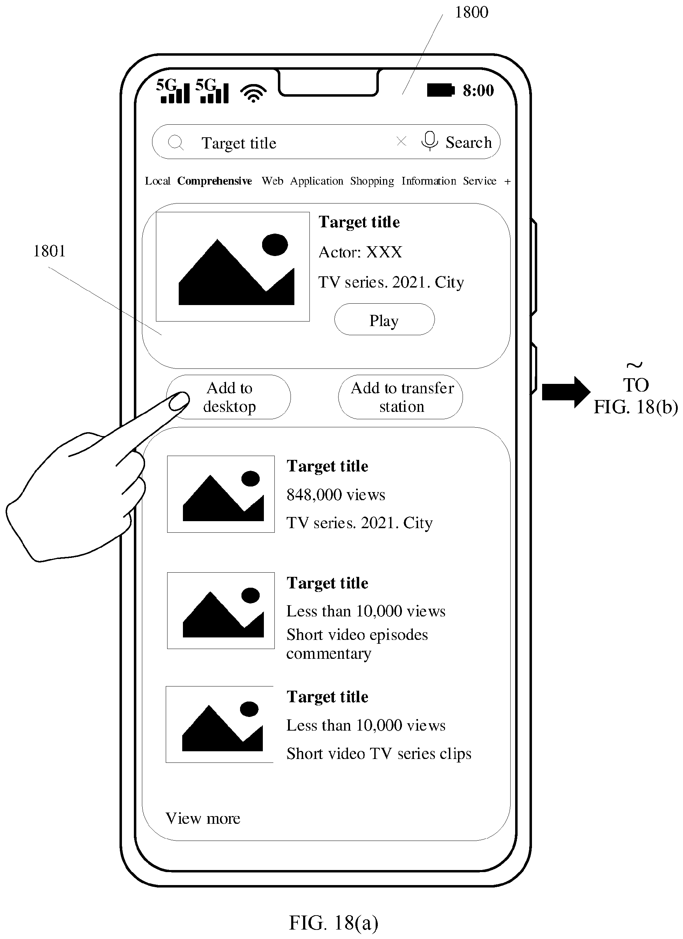

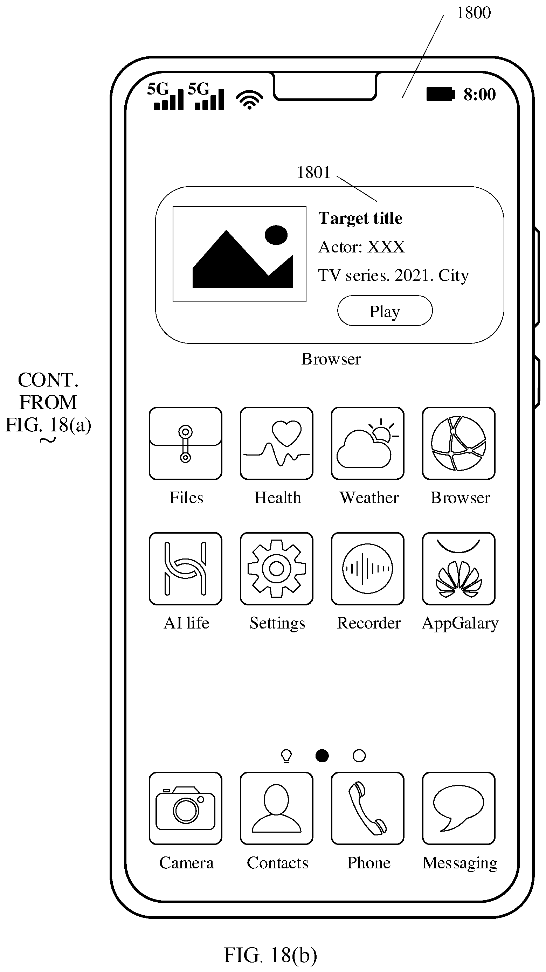

For example, FIG. 18(a) and FIG. 18(b) are a diagram of another interface for service card conversion between different scenarios according to an embodiment of this application. In this example, a service card is converted between a search result page and a desktop of a service card.

As shown in FIG. 18(a) and FIG. 18(b), a display screen of an electronic device 1800 is on a search interface in a browser application. More specifically, a user searches for a target title on a comprehensive tab of the browser application, and a search result page of the target title is displayed on the interface of the electronic device 1800 (as shown in FIG. 18(a)). A service card 1801 associated with the target title is displayed at the top of the search result page. Two selection controls are distributed below the service card 1801: "Add to desktop" and "Add to transfer station". Other found results (not a service card) about the target title are displayed below the search result page. Further, when the user taps the selection control "Add to desktop" and the user returns to a desktop of the electronic device 1800, the user can see that the service card 1801 is displayed on the desktop of the electronic device 1800, and an application name "Browser" is displayed below the service card 1801 (as shown in FIG. 18(b)).

Optionally, when the service card 1801 is displayed on the desktop, the service card 1801 is no longer displayed on the search result page.

Optionally, when the user cancels display of the service card 1801 on the desktop, the service card 1801 is displayed on the search result page again.

A generation rule, a size, a layout manner, and the like of the service card 1801 are similar to those of the service card in the foregoing embodiments. For brevity, details are not described herein again.

It should be understood that, in this embodiment of this application, an example in which the application is a browser is used for description. However, this does not constitute any limitation on this application. When the foregoing application is replaced with another application, the solutions in this embodiment of this application are still effective.

In this embodiment of this application, a service card on a search result page of an application can be converted into a service card displayed on the desktop, so that the user can implement a subsequent operation by using the service card, without a need to specially open or stay on the search result page. This improves user experience.

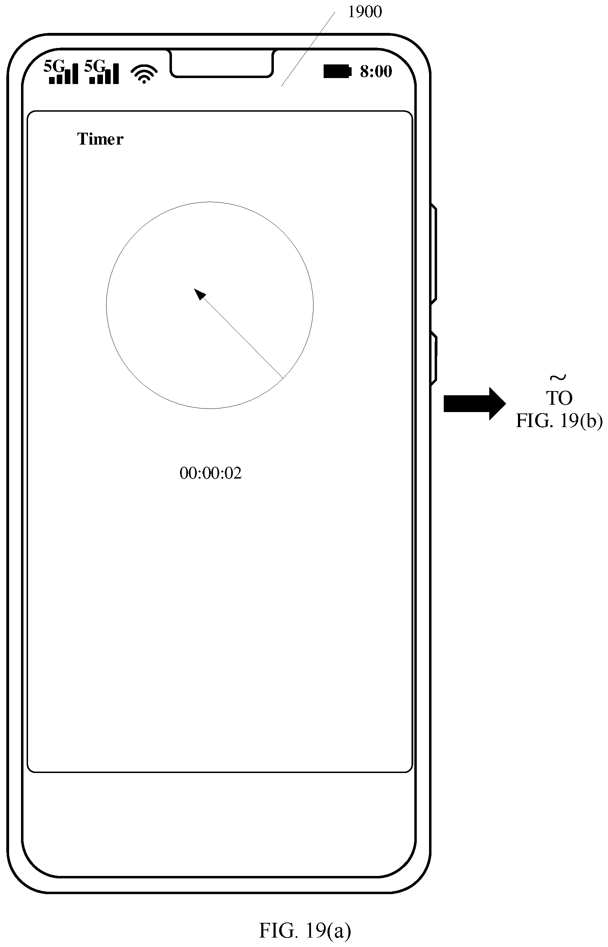

For example, FIG. 19(a) to FIG. 19(c) are a diagram of another interface for service card conversion between different scenarios according to an embodiment of this application. In this example, a page on which an application is recording real-time data is converted into a service card displayed on a current page of an electronic device.

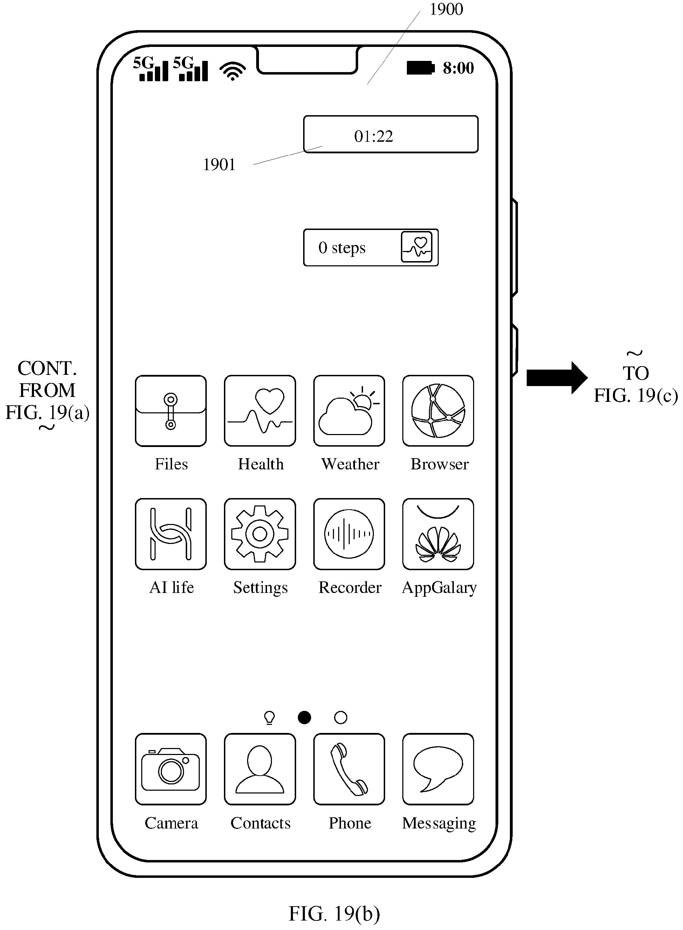

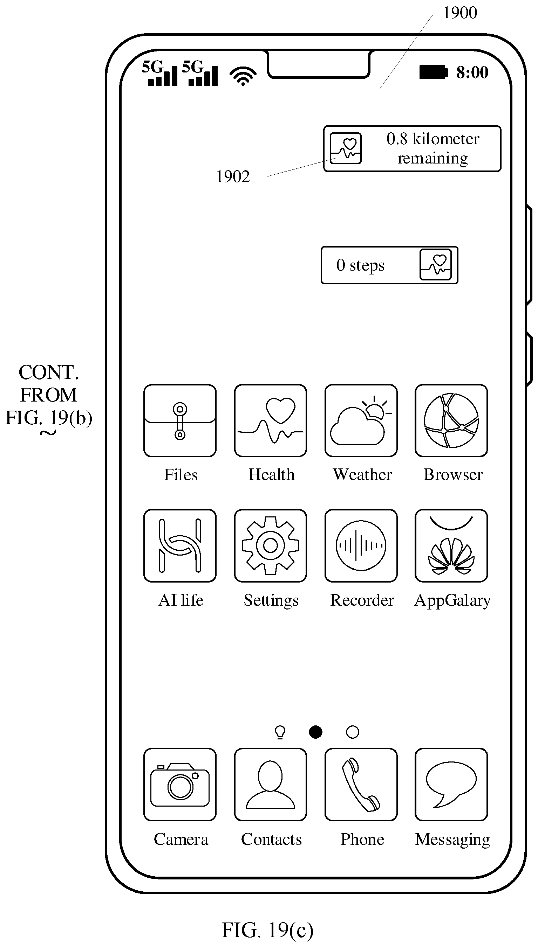

As shown in FIG. 19(a) to FIG. 19(c), a display screen of the electronic device 1900 is on a search interface in the clock application, and more specifically, a timer function use interface in the clock application (as shown in FIG. 19(a)). When a user wants to use another function of the electronic device 1900 during this time, the clock application may be returned to a background. For example, when the user performs a timing function by using a timer, the electronic device 1900 may be returned to a desktop or enter an interface of another application. In this case, a timing progress is displayed in real time on a current page of the electronic device 1900 in a form of a floating service card 1901 (as shown in FIG. 19(b)). In addition, it is assumed that a plurality of applications performs a data recording function in the background of the electronic device 1900. In this case, on the current page of the electronic device 1900, service cards related to real-time data of the plurality of applications may present an automatic stacking effect and may be displayed in turn, for example, the floating service card 1901 and a floating service card 1902 are displayed in a stacked manner (as shown in FIG. 19(c)).

Optionally, the service card displayed in a floating form may be pined to the desktop, so that the service card is not displayed in a floating manner. A generation rule, a size, a layout manner, and the like of the service card are similar to those of the service card in the foregoing embodiments. For brevity, details are not described herein again.

It should be understood that, in this embodiment of this application, an example in which the application is a clock is used for description. However, this does not constitute any limitation on this application. When the foregoing application is replaced with another application, the solutions in this embodiment of this application are still effective.

It should be understood that, in this embodiment of this application, a function of displaying real-time data by using a service card during background running is preset in the application.

Optionally, the service card in this embodiment of this application is used to display corresponding real-time data. In one case, after a real-time data function ends, the service card automatically sends a message. For example, when the service card is used for timing, the service card sends a message after the timing ends. In another case, the service card can switch between a plurality of states. For example, when the service card is a card related to a ride-hailing application, the service card can switch among a state in which a driver accepts an order, a state in which the order is running, and a state in which the order is ended.

In this embodiment of this application, a real-time data recording status of one or more applications running in the background can be displayed on the current page of the electronic device in a form of a service card. In this way, when using another function of the electronic device, the user can also timely view the real-time data recording status of the one or more applications running in the background, without a need to specially start a corresponding application or stay on a corresponding interface. This can further improve user experience.

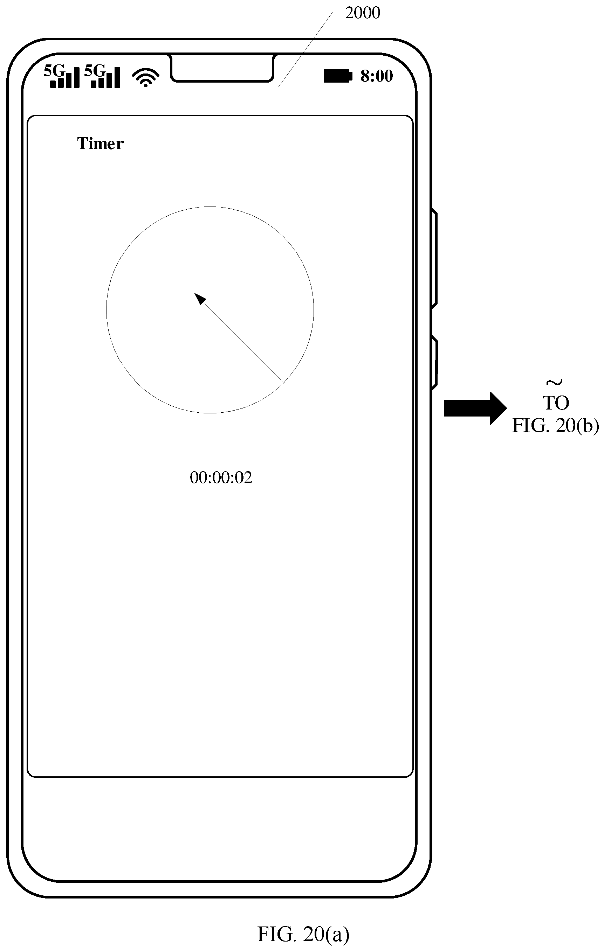

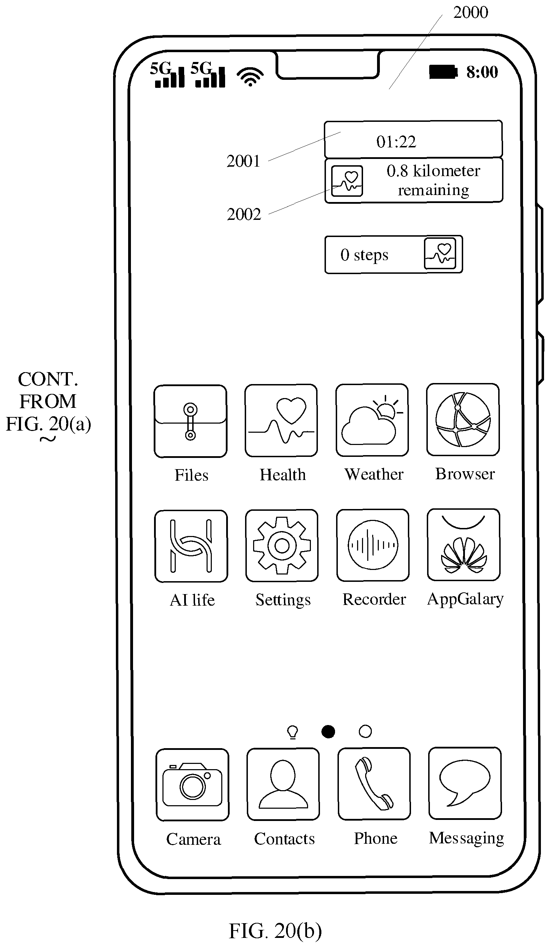

In parallel with the embodiment shown in FIG. 19(a) to FIG. 19(c), for example, FIG. 20(a) and FIG. 20(b) are a diagram of another interface for service card conversion between different scenarios according to an embodiment of this application. In this example, a page on which an application is recording real-time data is converted into a service card displayed on a current page of an electronic device.

A difference between FIG. 20(a) and FIG. 20(b) and FIG. 19(a) to FIG. 19(c) lies in that a plurality of service cards in a floating form may be displayed in combination. In this way, the user can simultaneously view real-time data that is being recorded in a plurality of applications.

It should be understood that the floating card display methods described in FIG. 19(a) to FIG. 20(b) are merely examples for description. There may be another floating card display method. This is not limited in this application.

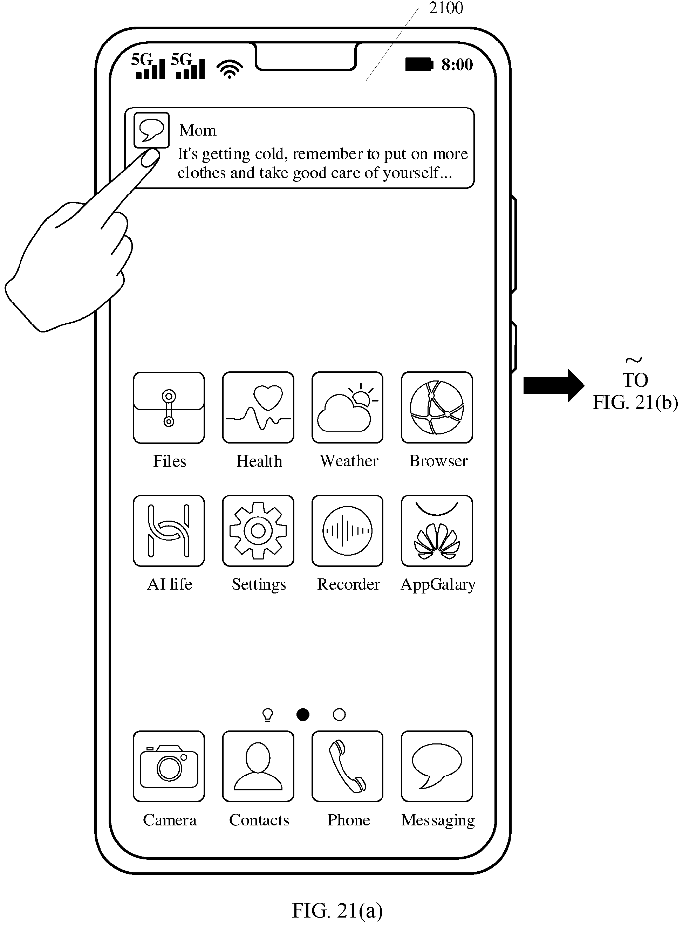

For example, FIG. 21(a) to FIG. 21(c) are a diagram of another interface for service card conversion between different scenarios according to an embodiment of this application. In this example, a banner notification is pined to a desktop for display as a service card.

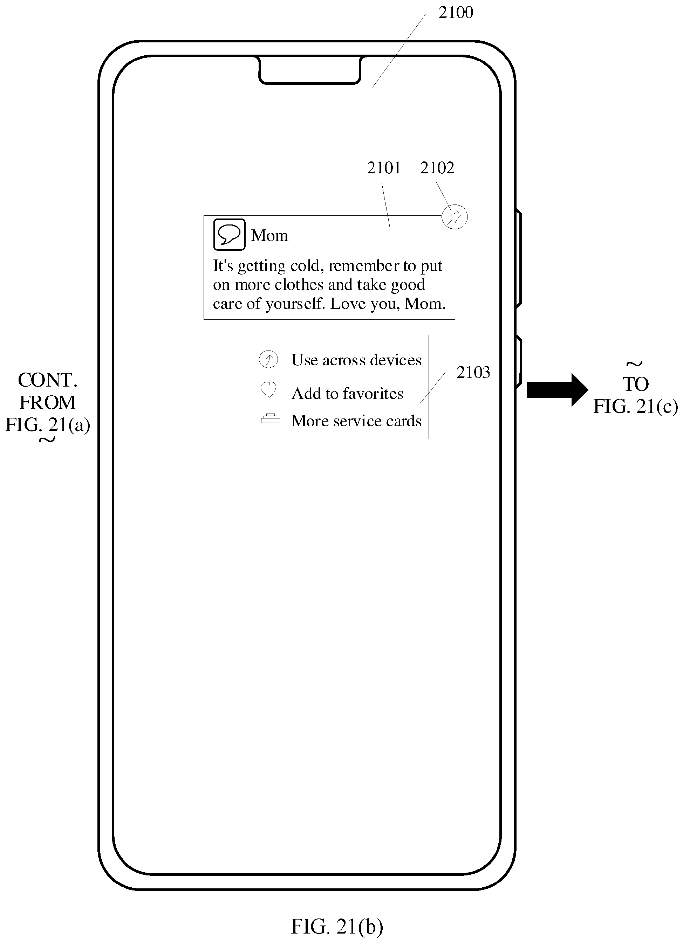

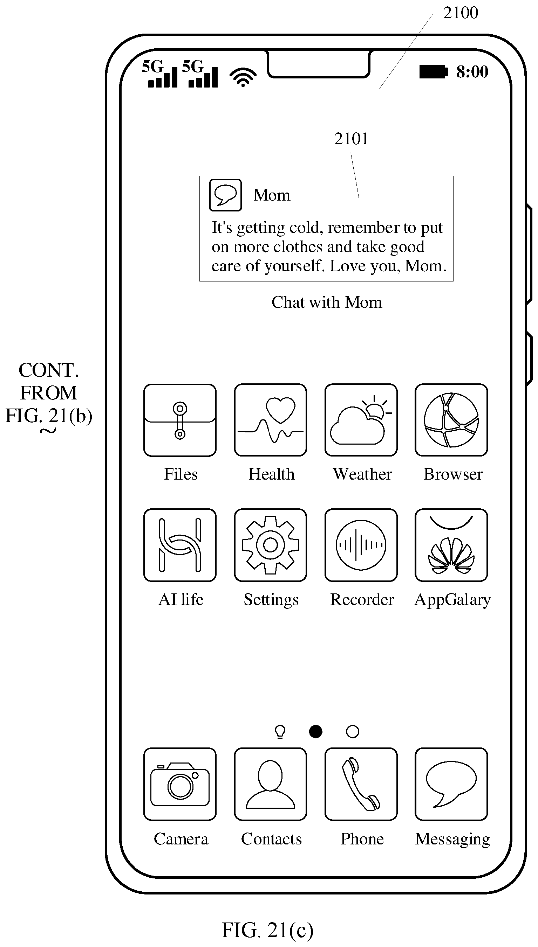

As shown in FIG. 21(a) to FIG. 21(c), a display screen of an electronic device 2100 is on a desktop (or may be on another application interface). In this case, the electronic device 1900 receives a banner message related to a chat application. When a user wants to process the message notification on a current page, the user may touch and hold the banner message notification (as shown in FIG. 21(a)). In this case, a service card 2101 corresponding to the message notification is displayed on a card panel (as shown in FIG. 21(b)). The service card 2101 located on the card panel is associated with a push pin control 2102 and an option box 2103. The user can pin the service card 2101 to a blank location of the desktop of the electronic device 2100 by tapping the push pin control 2102 (as shown in FIG. 21(c)).

Optionally, in this embodiment of this application, the service card 2101 may be pined to a current display interface of the electronic device 2100. To be specific, after the service card is pined to the current display interface of the electronic device 2100, when the user switches the page of the electronic device 2100 to another page, the service card 2101 is also switched to be displayed on the another page.

Optionally, after the service card 2101 is pined to the current display interface or the desktop of the electronic device 2100, a new banner notification message is directly displayed by using the service card 2101.

Optionally, after the service card 2101 is pined to the current display interface or the desktop of the electronic device 2100, when a new banner notification is received, if the user taps the new banner notification, the new banner notification message is displayed by using the service card 2101.

It should be understood that the user can perform an operation such as replying to the banner notification message by using the service card 2101.

Optionally, the service card 2101 added to the desktop includes a text. The text is a name of a message sender and content of a message notification. In addition, an icon of a message application is displayed before the text, and a remark of the service card is displayed below the service card 2101.

A generation rule, a size, a layout manner, and the like of the service card 2101 are similar to those of the service card in the foregoing embodiments. For brevity, details are not described herein again.

In this embodiment of this application, when the banner notification is received, the banner notification can be converted into the service card displayed on the desktop or the current page of the electronic device, so that the user can view the banner notification message in time by using the service card, and can further process the received message on the service card without a need to specially start an application corresponding to the message. This can further improve user experience.

It should be understood that the embodiments shown in FIG. 16(a) to FIG. 21(c) are merely examples for description. The user may further implement service card conversion between other scenarios according to a similar method. This is not limited in this application.

In some embodiments, a service card can be shared between a plurality of electronic devices, and the plurality of electronic devices can interact with each other by using the service card.

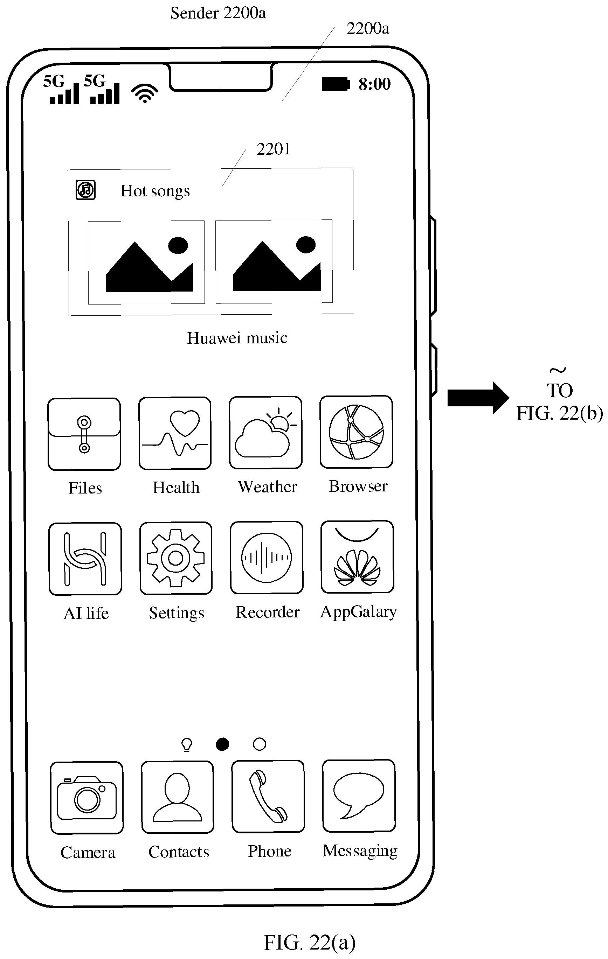

With reference to FIG. 22(a) to FIG. 25(e), the following describes diagrams of display interfaces for sharing a service card between electronic devices according to an embodiment of this application.

For example, FIG. 22(a) to FIG. 22(f) are a diagram of a display interface for sharing a service card between different electronic devices according to this embodiment of this application. The example is a scenario in which a service card of a first electronic device is shared to a second electronic device, so that the second electronic device can view the service card of the first electronic device.

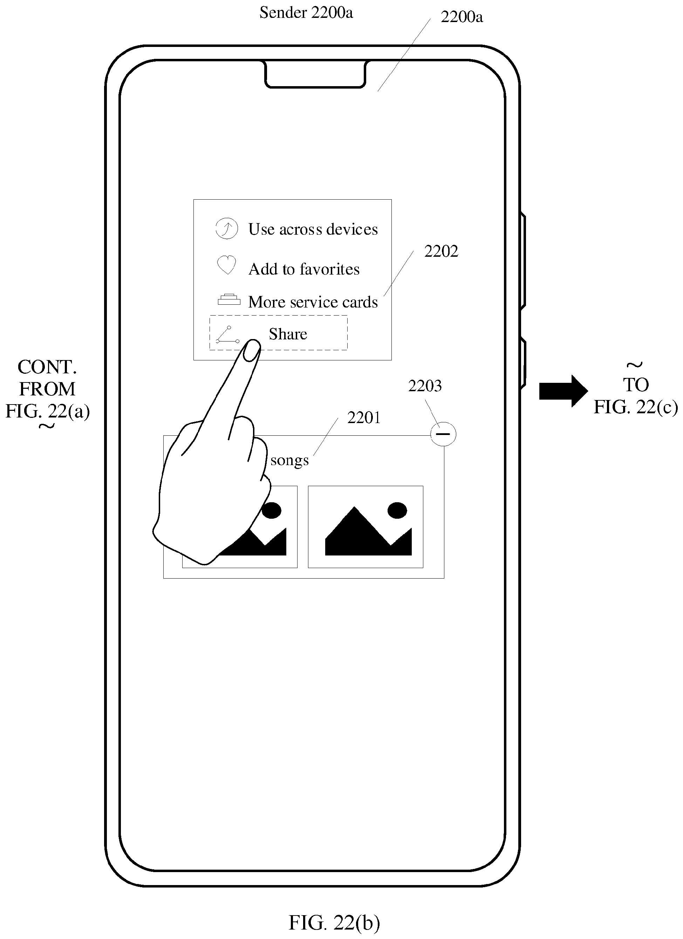

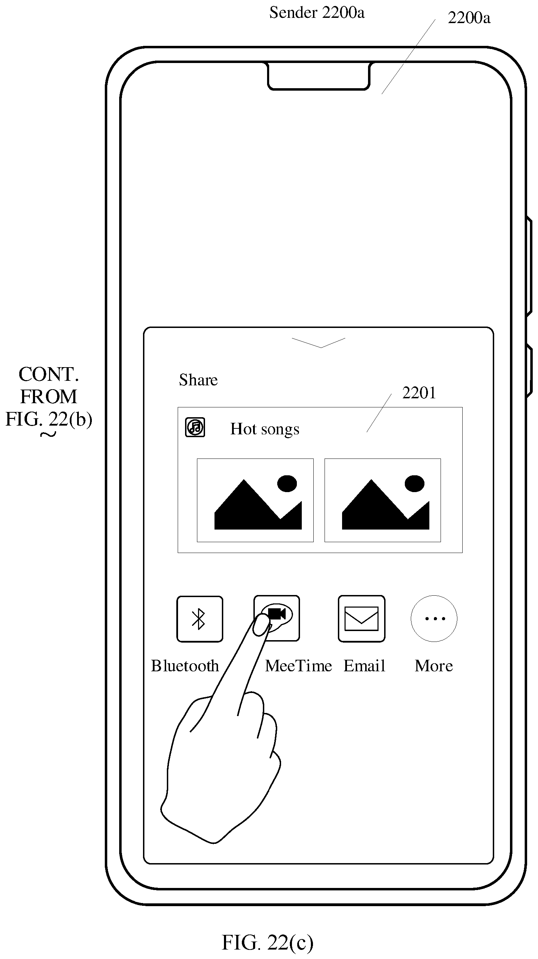

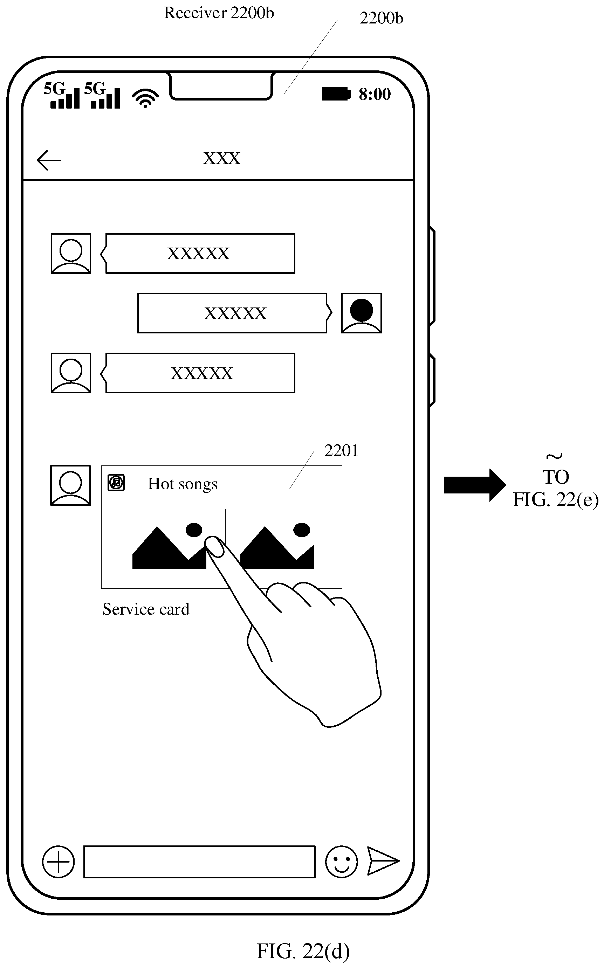

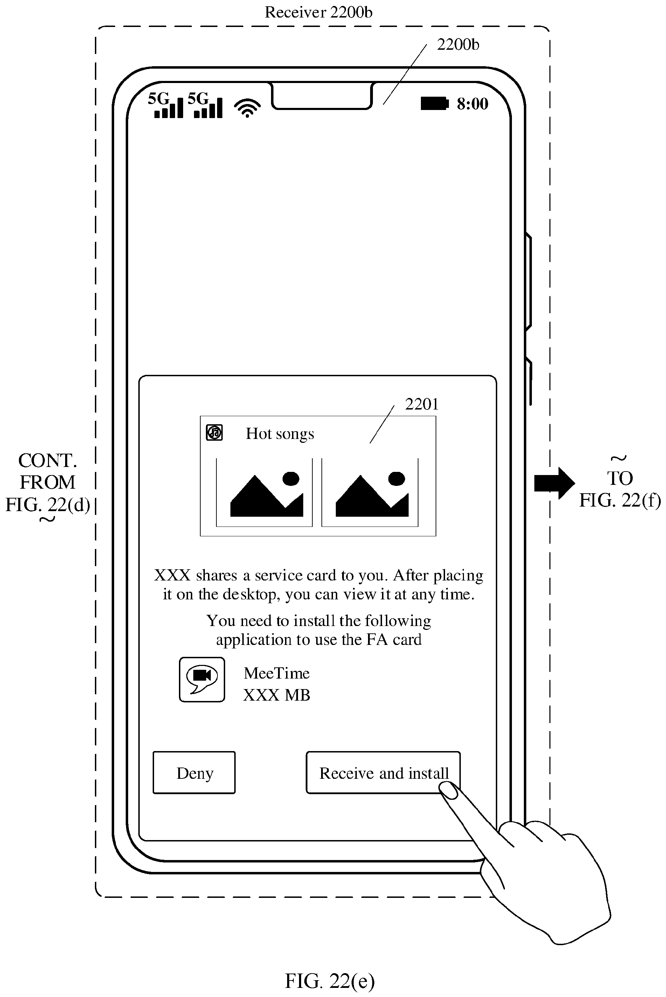

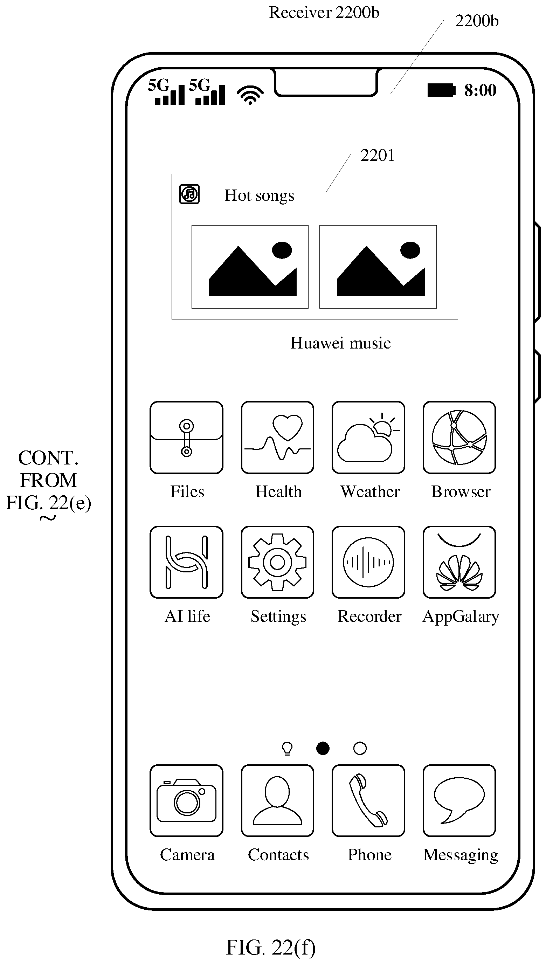

As shown in FIG. 22(a) to FIG. 22(f), a service card 2201 related to a subtitle "Hot songs" in a Huawei music application is displayed on a display screen of an electronic device 2200a (as shown in FIG. 22(a)). After a user touches and holds the service card 2201, an option box 2202 is displayed on a display interface of the electronic device 2200a. In this case, the service card 2201 is associated with a control 2203 (configured to cancel the option box 2202). The user continues to tap a control "Share" in the option box 2202 (as shown in FIG. 22(b)). Then, the display interface of the electronic device 2200a is shown in FIG. 22(c). The user shares the service card 2201 to an electronic device 2200b on the interface by using MeeTime. Correspondingly, after a MeeTime application of the electronic device 2200b receives the service card 2201 sent by the electronic device 2200a, the user taps the service card 2201 on the electronic device 2200b (as shown in FIG. 22(d)). When the Huawei music application is not installed on the electronic device, the electronic device 2200b displays a display interface shown in FIG. 22(e). The service card 2201 and a prompt that the service card can be used only after the Huawei music application is installed are displayed on the interface. The user may choose to deny receiving the service card or choose to receive and install the service card on the interface. After the user chooses to receive and install the service card, the electronic device 2200b displays a final display interface shown in FIG. 22(f). In this case, the service card 2201 is displayed on a desktop of the electronic device 2200b.

A generation rule, a size, a layout manner, and the like of the service card 2201 are similar to those of the service card in the foregoing embodiments. For brevity, details are not described herein again.

Optionally, in this embodiment of this application, the user may share the service card 2201 to the electronic device 2200b through a social platform in a form of a link or a file, or may share the service card 2201 in another form. This is not limited in this application.

It should be understood that this embodiment of this application is merely an example for describing sharing of a service card between electronic devices, and does not constitute a limitation on a specific sharing manner. Other similar solutions that can implement sharing of a service card between electronic devices fall within the disclosure scope of this application.

In this embodiment of this application, sharing of a service card between different electronic devices can be implemented, so that information such as a status of the user can be shared between the different electronic devices, and a sense of familiarity experience between users can be improved. This further improves user experience.

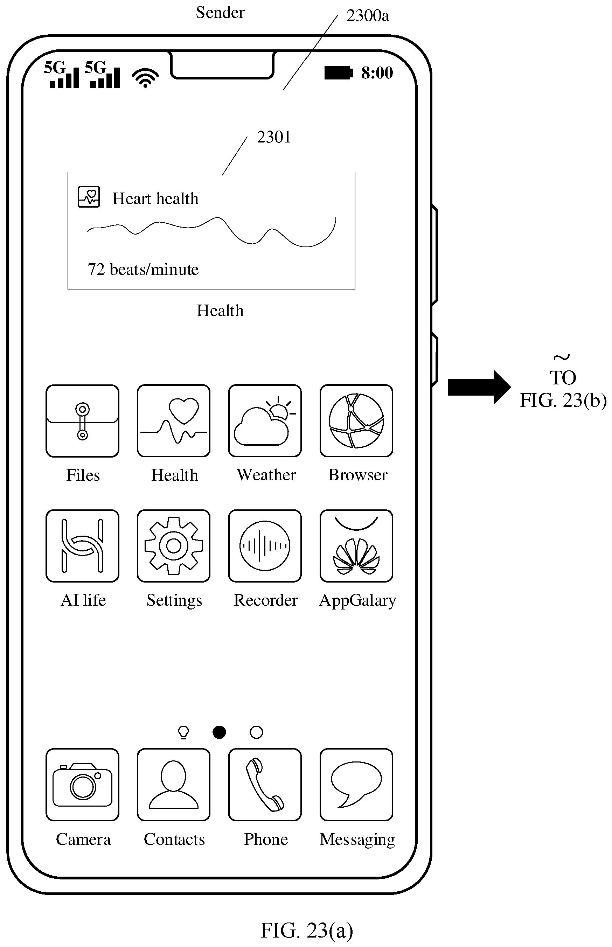

For example, FIG. 23(a) to FIG. 23(e) are a diagram of another interface for sharing a service card between different electronic devices according to this embodiment of this application. The example is a scenario in which a service card of a first electronic device with data is shared to a second electronic device, so that a user can view the service card and the data in the service card on a second electronic device end.

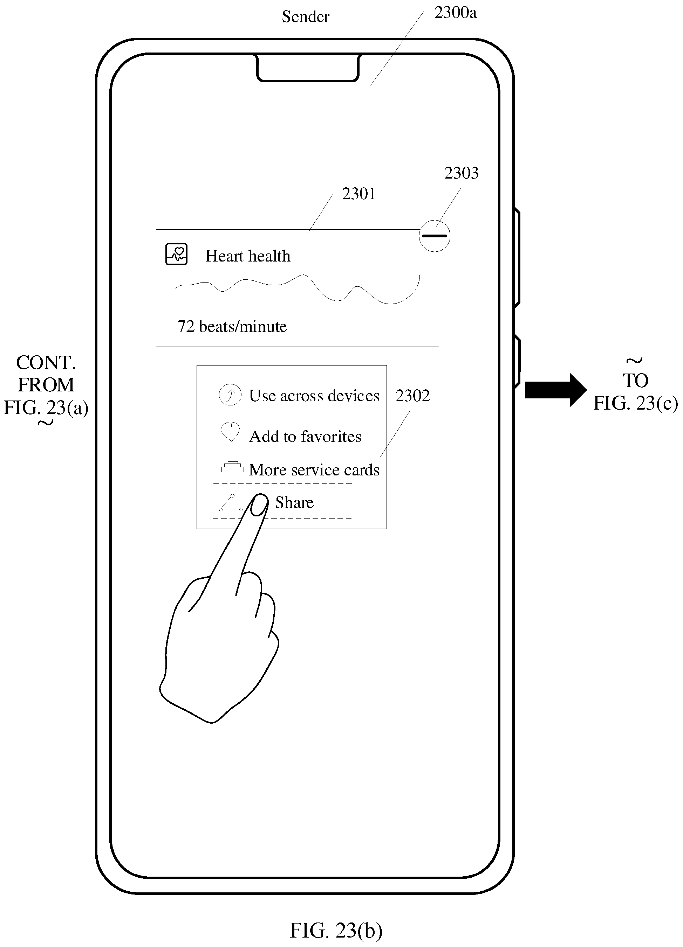

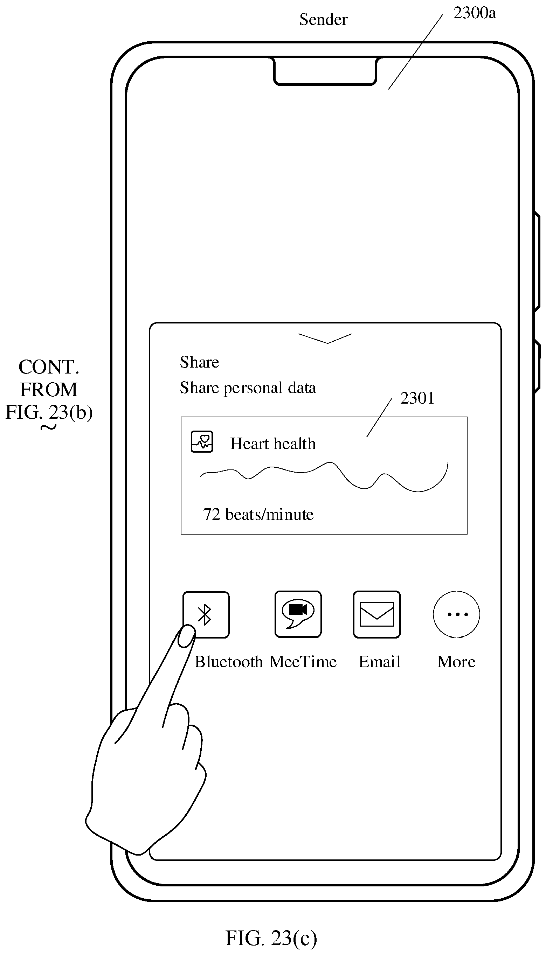

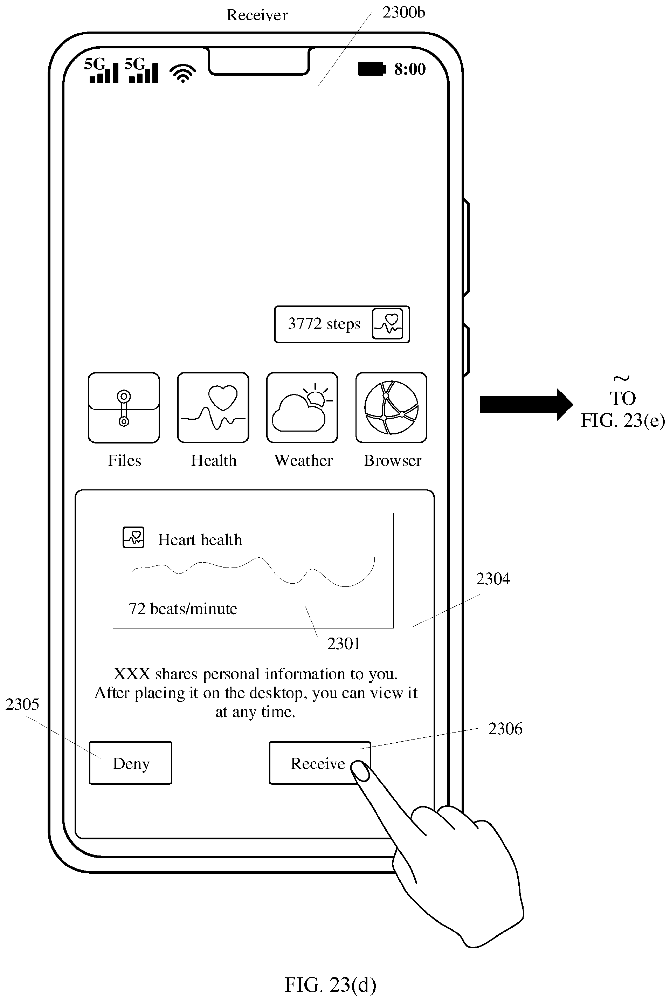

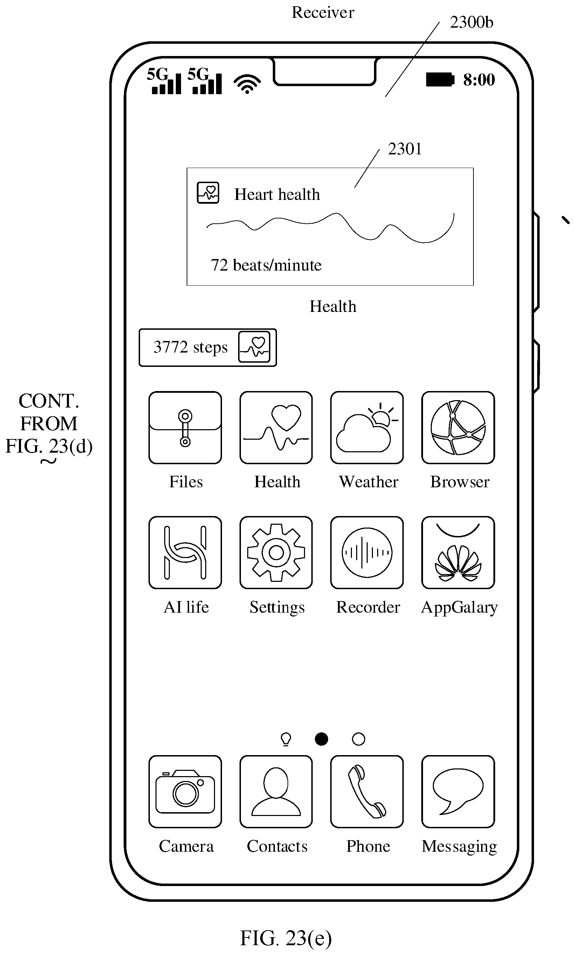

As shown in FIG. 23(a) to FIG. 23(e), a service card 2301 that is in a sports and health application and that is related to a title "Heart health" is displayed on a display screen of an electronic device 2300a (as shown in FIG. 23(a)). The service card displays a heart rate of a user associated with the electronic device 2300a in real time. After the user touches and holds the service card 2301, an option box 2302 is displayed on a display interface of the electronic device 2300a. In this case, the service card 2301 is associated with a control 2303 (configured to cancel the option box 2302). The user continues to tap a control "Share" in the option box 2302 (as shown in FIG. 23(b)). Then, the display interface of the electronic device 2300a is shown in FIG. 23(c). The user shares the service card 2301 to an electronic device 2300b on the interface by using Bluetooth. Correspondingly, a prompt box 2304 pops up on a display page of the electronic device 2300b (as shown in FIG. 23(d)). The prompt box 2304 displays the service card 2301, a control 2305 (configured to deny receiving the service card 2301), and a control 2306 (configured to receive the service card 2301). When the user taps the control 2306, the service card 2301 is displayed on a desktop of the electronic device 2300b (as shown in FIG. 23(e)). In this case, a user associated with the electronic device 2300b may view real-time heart rate data of the user associated with the electronic device 2300a at any time by using the service card 2301.

A generation rule, a size, a layout manner, and the like of the service card 2301 are similar to those of the service card in the foregoing embodiments. For brevity, details are not described herein again.

It should be understood that this embodiment of this application is merely an example of describing sharing of a service card with data between electronic devices, and does not constitute a limitation on a specific sharing manner. Other similar solutions that can implement sharing of a service card with data between electronic devices fall within the disclosure scope of this application.

In this embodiment of this application, sharing of a service card with data between different electronic devices can be implemented, so that a real-time status of the user can be shared between the different electronic devices, and a sense of familiarity experience between users can be further improved. This further improves user experience.

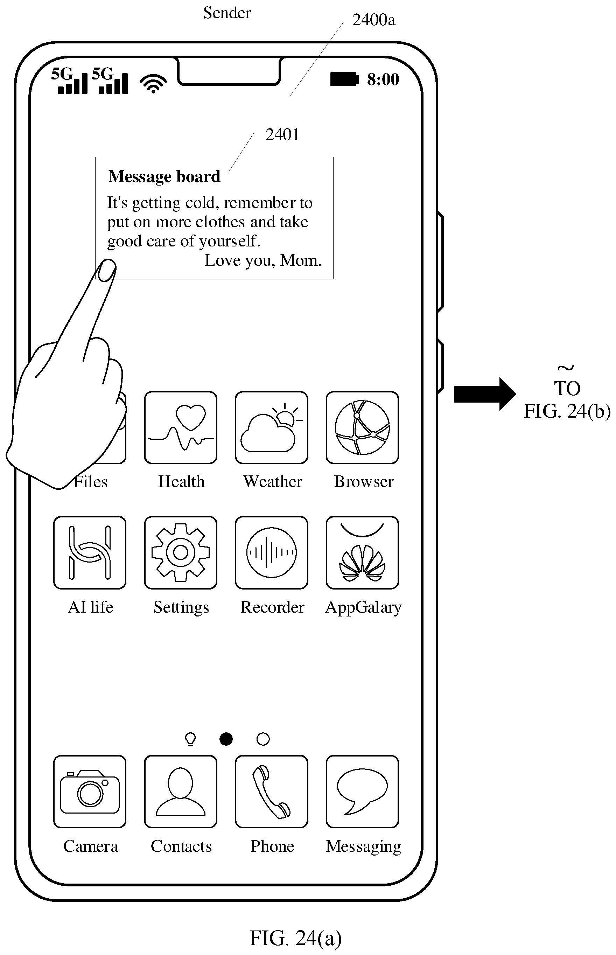

For example, FIG. 24(a) to FIG. 24(e) are a diagram of another interface for sharing a service card between different electronic devices according to this embodiment of this application. The example is a scenario in which a service card of a first electronic device is shared to a second electronic device, so that the second electronic device can view the service card of the first electronic device.

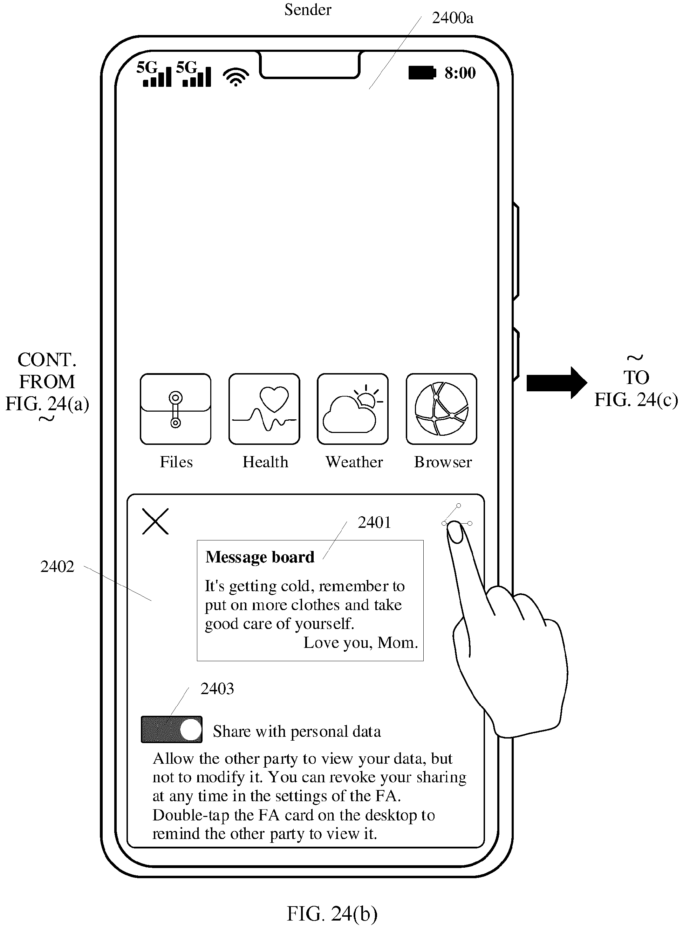

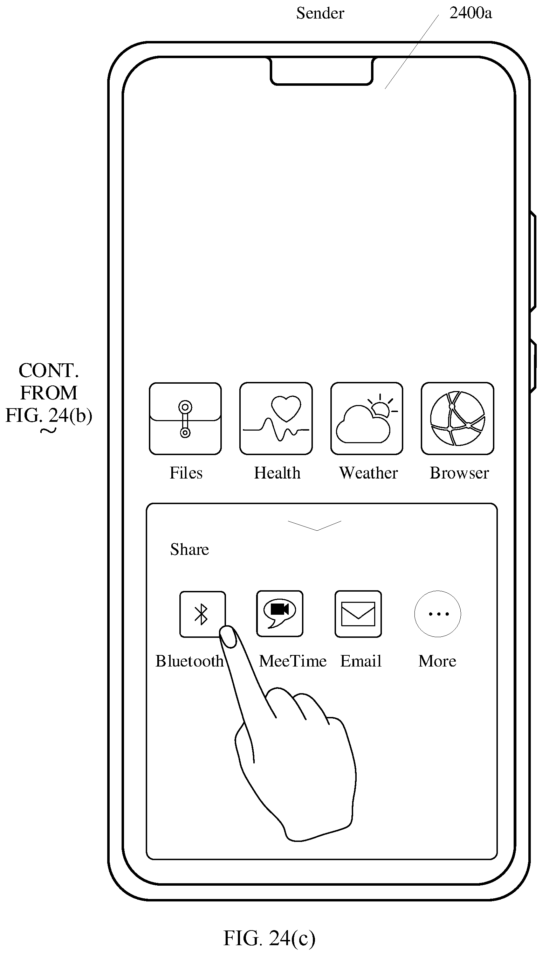

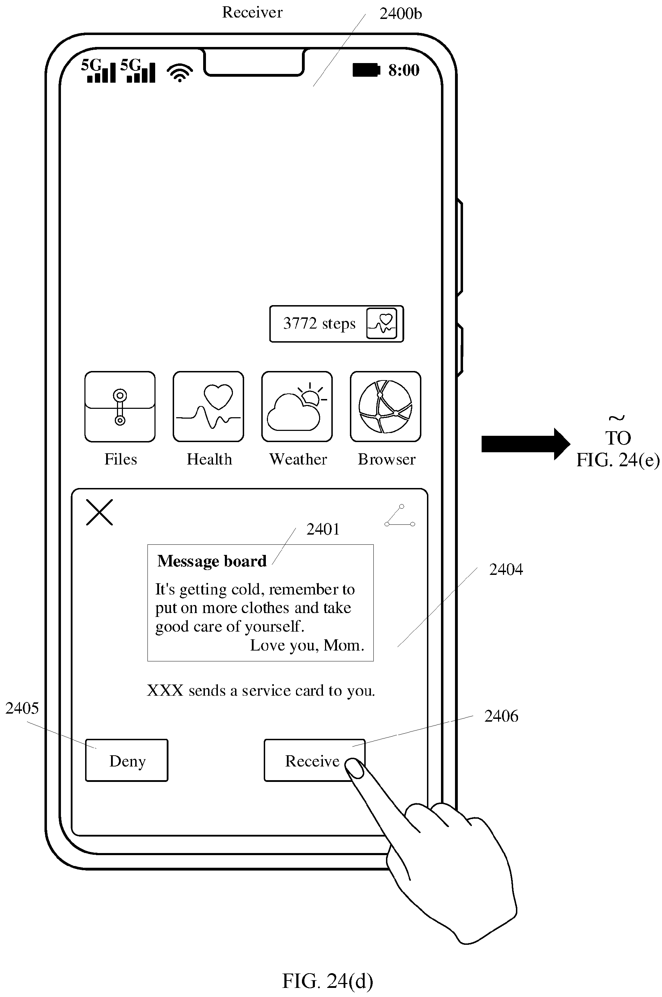

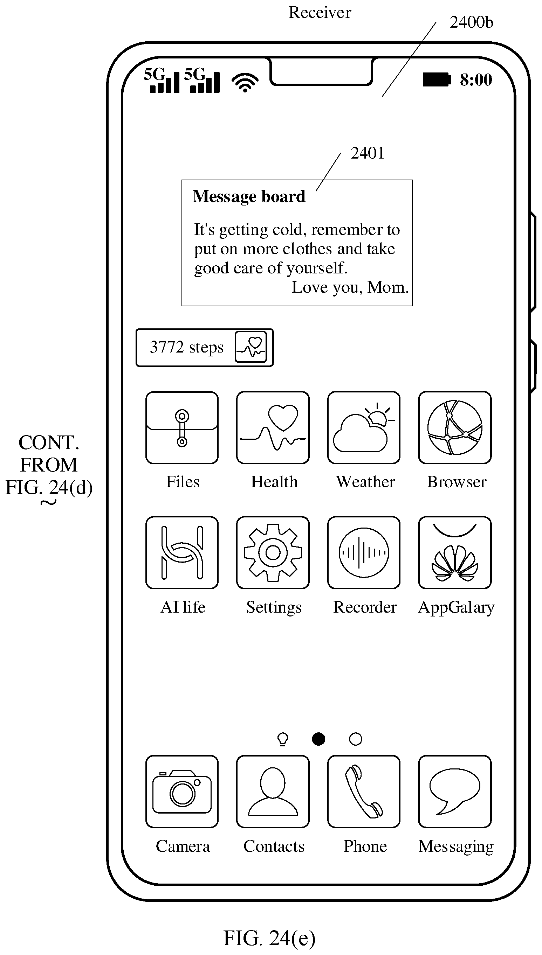

As shown in FIG. 24(a) to FIG. 24(e), a service card 2401 related to a message board is displayed on a display screen of an electronic device 2400a (as shown in FIG. 24(a)). The service card 2401 displays a message received from the message board of the electronic device 2400a. A display interface, displayed after the user touches and holds the service card 2401, of the electronic device 2400a, is shown in FIG. 24(b). On the interface, the user may share the service card 2401 by tapping a sharing icon 2402, and the user may select, by using a control 2403, whether to share the service card together with personal data. A display interface, displayed after the user taps the control 2402, of the electronic device 2400a is shown in FIG. 24(c). The user selects a sharing manner on the interface. After the user selects Bluetooth for sharing, correspondingly, a prompt box 2404 pops up on a display page of an electronic device 2400b (as shown in FIG. 24(d)). The prompt box 2404 displays the service card 2401, a control 2405 (configured to deny receiving the service card 2401), and a control 2406 (configured to receive the service card 2401). When the user taps the control 2406, the service card 2401 is displayed on a desktop of the electronic device 2400b (as shown in FIG. 24(e)).

A generation rule, a size, a layout manner, and the like of the service card 2401 are similar to those of the service card in the foregoing embodiments. For brevity, details are not described herein again.

It should be understood that this embodiment of this application is merely an example for describing sharing of a service card between electronic devices, and does not constitute a limitation on a specific sharing manner. Other similar solutions that can implement sharing of a service card between electronic devices fall within the disclosure scope of this application.

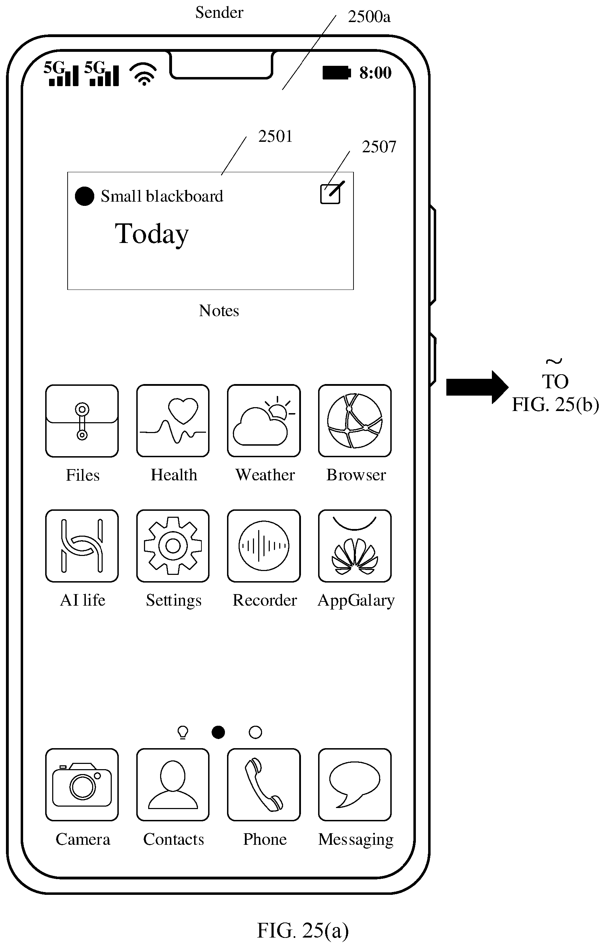

For example, FIG. 25(a) to FIG. 25(e) are a diagram of another interface for sharing a service card between different electronic devices according to this embodiment of this application. This example is a scenario in which a service card of a first electronic device is shared to a second electronic device, to implement collaborative work between the first electronic device and the second electronic device by using the service card.

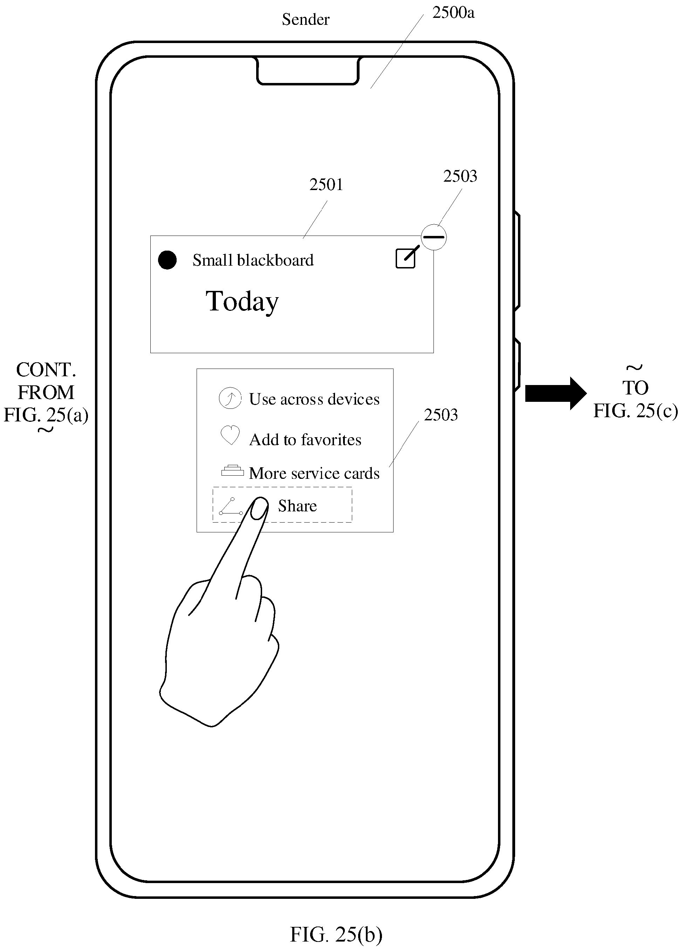

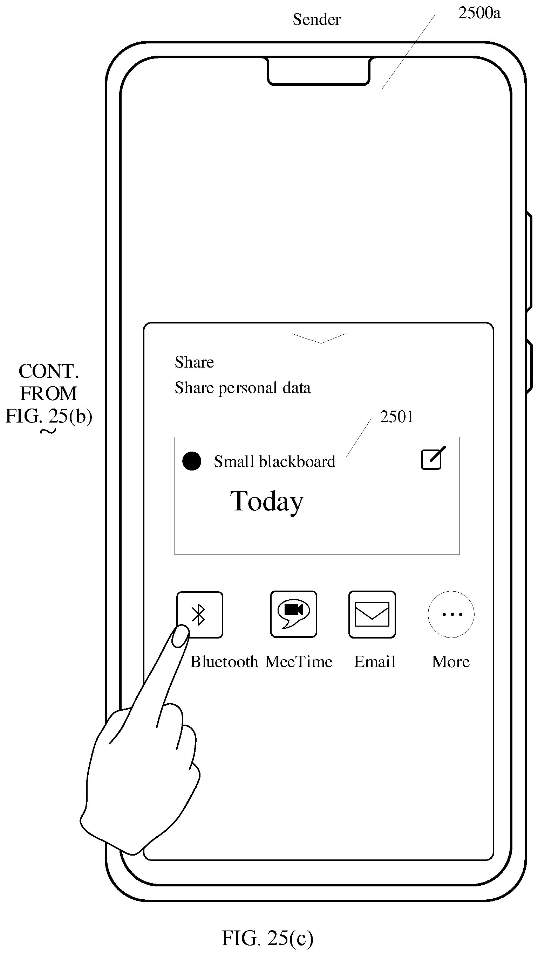

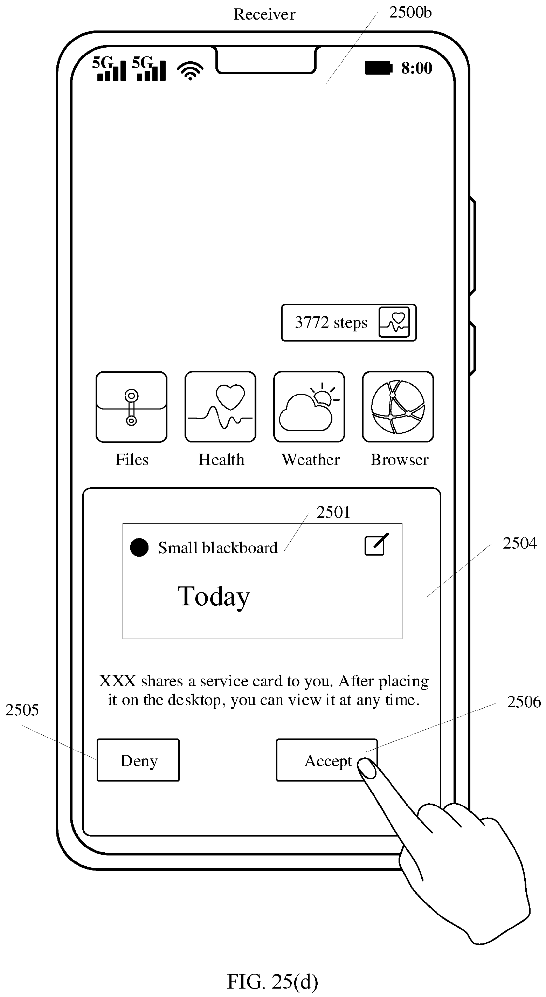

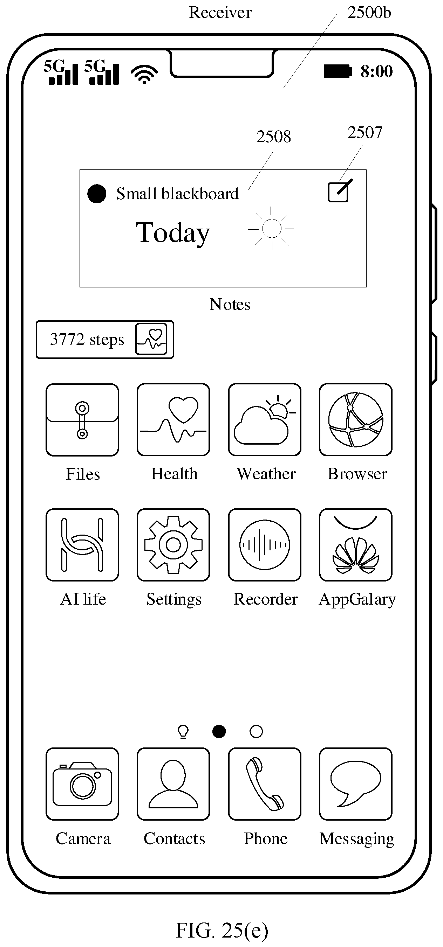

As shown in FIG. 25(a) to FIG. 25(e), a service card 2501 related to a small blackboard in a notes application is displayed on a display screen of an electronic device 2500a (as shown in FIG. 25(a)). The service card 2501 displays a mark 1 recorded by a user on the small blackboard (for example, "Today" shown in FIG. 25(a) to FIG. 25(e)). A display interface, displayed after the user touches and holds the service card 2501, of the electronic device 2500a is shown in FIG. 25(b). On the interface, the user may share the service card 2501 by tapping a sharing icon 2502. The service card 2501 is associated with a control 2503 (configured to cancel sharing of the service card 2501). A display interface, displayed after the user taps the control 2502, of the electronic device 2500a is shown in FIG. 25(c). The user selects a sharing manner on the interface. After the user selects Bluetooth for sharing, correspondingly, a prompt box 2504 pops up on a display page of an electronic device 2500b (as shown in FIG. 25(d)). The prompt box 2504 displays the service card 2501, a control 2505 (configured to deny receiving the service card 2501), and a control 2506 (configured to receive the service card 2501). When the user taps the control 2506, the service card 2501 is displayed on a desktop of the electronic device 2500b. On the interface, the service card 2501 is associated with a control 2507 (configured to continue to edit the service card 2501). When a user associated with the electronic device 2500b taps the control 2507 to write a mark 2 on the small blackboard (for example, a sun icon shown in FIG. 25(a) to FIG. 25(e)), a service card 2508 is displayed on a display interface of the electronic device 2500b (as shown in FIG. 25(e)).

It should be understood that the service card 2508 is obtained based on the received service card 2501.

A generation rule, a size, a layout manner, and the like of the service card 2501 are similar to those of the service card in the foregoing embodiments. For brevity, details are not described herein again.

It should be understood that this embodiment of this application is merely an example of implementing collaborative work between electronic devices by using a service card, and does not constitute a limitation on a specific implementation. Other similar solutions that can implement collaborative work between electronic devices by using a service card fall within the disclosure scope of this application.

In this embodiment of this application, collaborative work between different electronic devices can be implemented by using a service card, so that working efficiency and convenience can be improved. This further improves user experience.

In some embodiments, a plurality of electronic devices can share a service card with each other. A service provided by the service card may be provided after different services are assembled, or a service provided by the service card may be jointly provided by one or more applications.

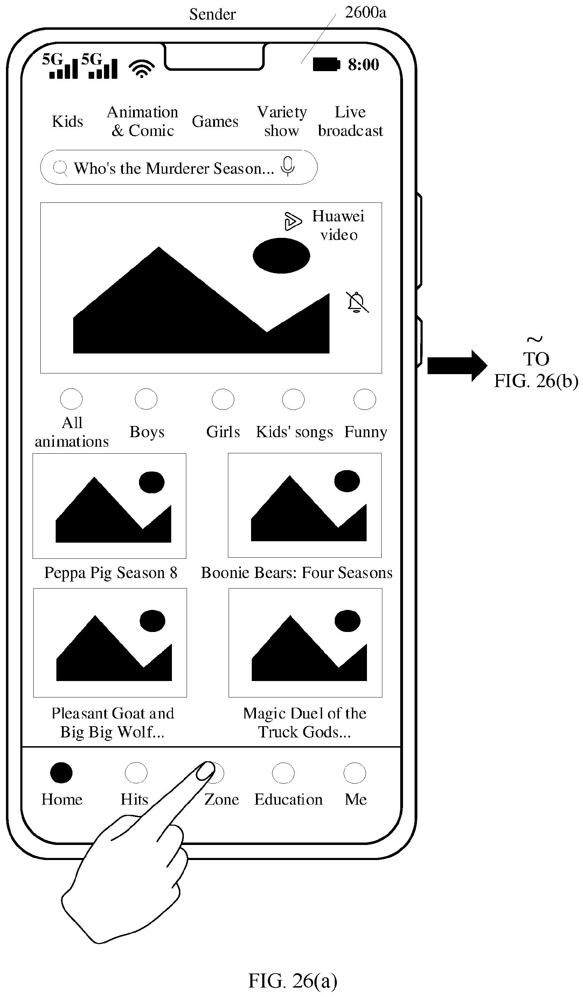

With reference to FIG. 26(a) to FIG. 27(e), the following describes a process of implementing application distribution between devices by using a service card according to an embodiment of this application.

For example, FIG. 26(a) to FIG. 26(e) are a diagram of an interface for sharing a service card between electronic devices according to an embodiment of this application. In this example, a service provided by the service card is provided after different services are assembled.

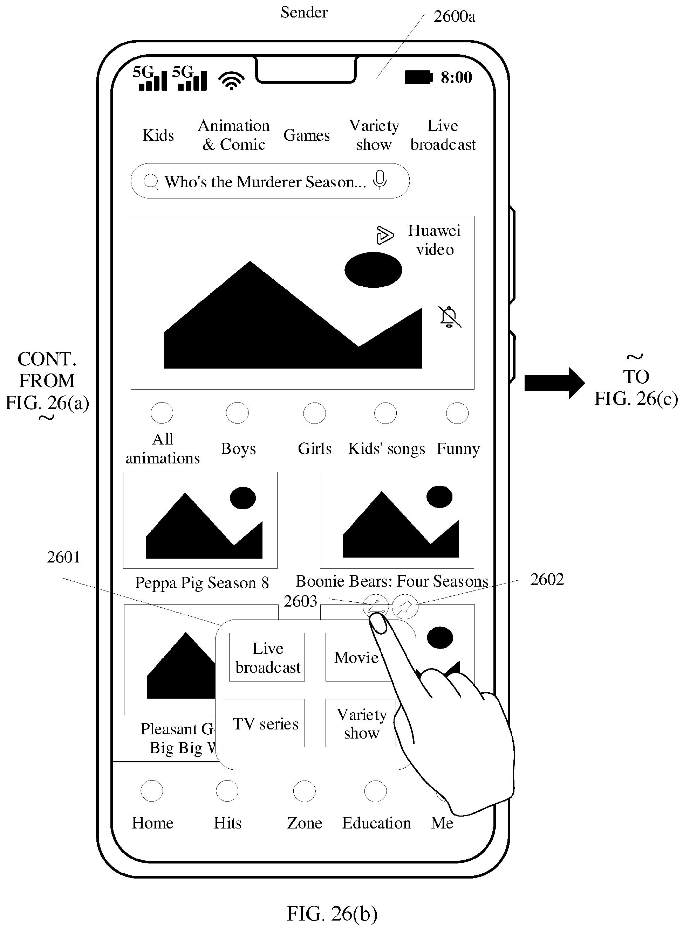

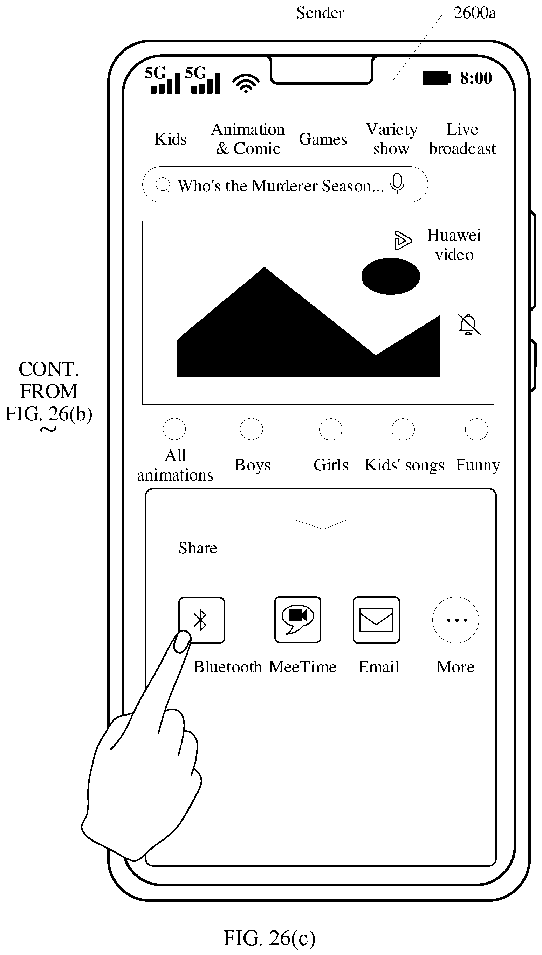

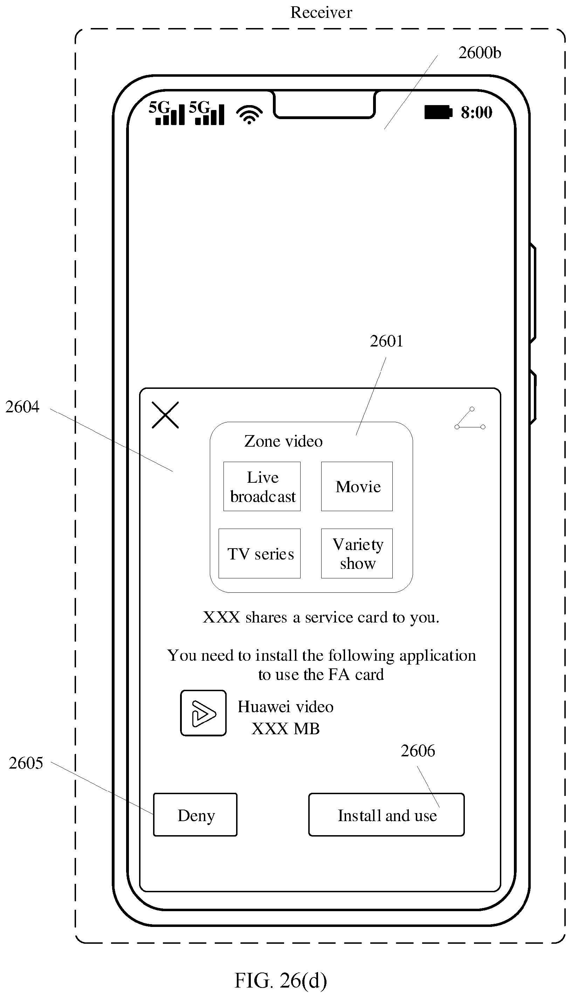

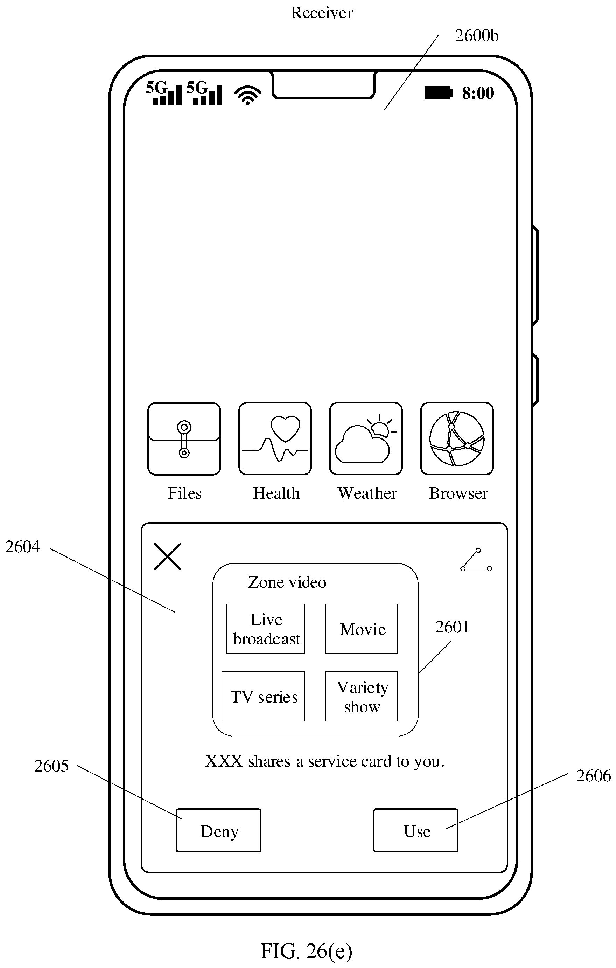

As shown in FIG. 26(a) to FIG. 26(e), a display interface of an electronic device 2600a is Home of a Huawei video application, a tab is displayed at the bottom of the display interface, and the tab includes title options: Home, Hits, Zone, Education, and Me. When a user wants to use a service card associated with the title "Zone", the user may touch and hold the title "Zone" (as shown in FIG. 26(a)). In this case, a service card 2601 is displayed on the interface of the electronic device 2600a. The service card 2601 is associated with a push pin 2602 (used to pin the service card 2601 to a desktop) and a control 2603 (used to share the service card 2601), and the service card 2601 includes different services: Live broadcast, Movie, TV series, and Variety show. When the user wants to share the service card 2601 to an electronic device 2600b, the user taps the control 2603 (as shown in FIG. 26(b)). In this case, the display interface of the electronic device 2600a is shown in FIG. 26(c). The user selects a sharing manner on the interface. After the user selects Bluetooth for sharing, correspondingly, if the Huawei video application associated with the service card 2601 is not installed on the electronic device 2600b, a prompt box 2604 pops up on a display page of the electronic device 2600b (as shown in FIG. 26(d)). The prompt box 2604 displays the service card 2601 and an installation reminder of the associated application (used to remind the user that the service card 2601 can be used only after the Huawei video application is installed). The prompt box 2604 further includes a control 2605 (configured to deny receiving the service card 2601) and a control 2606 (configured to agree to install and use the service card 2601). When the user taps the control 2606, the electronic device 2500b installs the Huawei video application, and displays the service card 2501 on the desktop. If the Huawei video application associated with the service card 2601 is installed on the electronic device 2600b, the prompt box 2604 pops up on a display page of the electronic device 2600b (as shown in FIG. 26(e)). The prompt box 2604 displays the service card 2601, the control 2605 (configured to deny receiving the service card 2601), and the control 2606 (configured to agree to use the service card 2601). When the user taps the control 2606, the service card 2601 is displayed on the desktop of the electronic device 2600b.

A generation rule, a size, a layout manner, and the like of the service card 2601 are similar to those of the service card in the foregoing embodiments. For brevity, details are not described herein again.

In an example, when the user taps the control 2606, the electronic device 2500b downloads and installs the Huawei video application. Whether an application associated with the service card needs to be downloaded before installation depends on a definition of the service card. For example, the application associated with the service card needs to be downloaded only when the service card is greater than a first threshold. The first threshold may be 5 M, 10 M, or another value.

It should be understood that the service card in this embodiment of this application is merely an example for description, and a service of the service card may alternatively be provided after any other services are assembled.

In this embodiment of this application, a plurality of electronic devices can share a service card with each other, and a service provided by the service card may be provided after different services are assembled. In addition, when an application associated with the service card is not installed at a receive end, one-tap installation may be performed by using a receive control, and the user does not need to separately install the application. This improves operation convenience, and can avoid a case in which the service card cannot be normally used due to an application version, to further improve user experience.

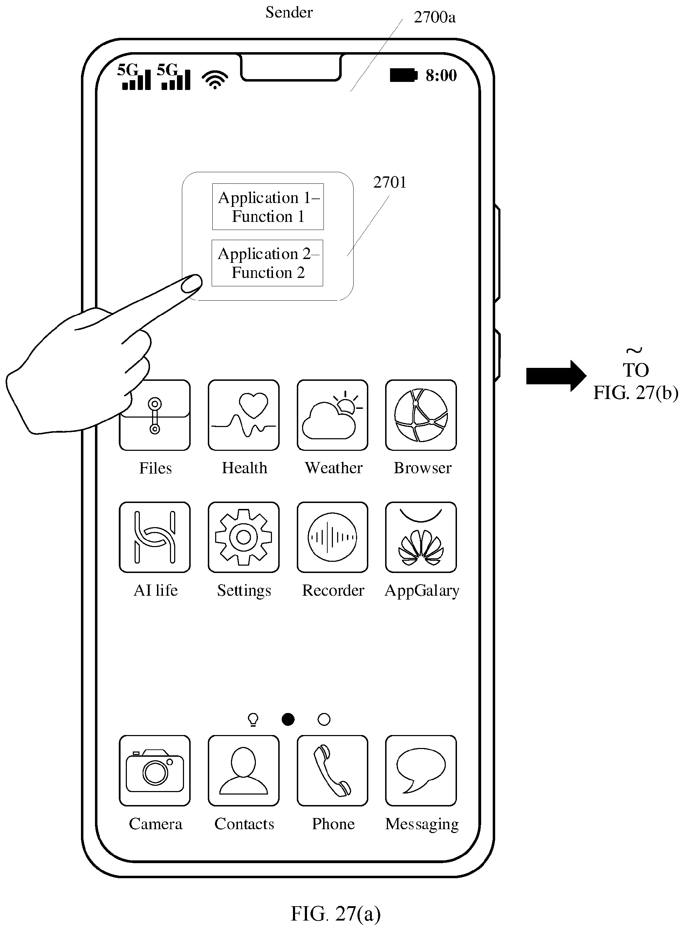

For example, FIG. 27(a) to FIG. 27(e) are a diagram of another interface for sharing a service card between electronic devices according to an embodiment of this application. In this example, a service provided by the service card is provided by a combination of different applications.

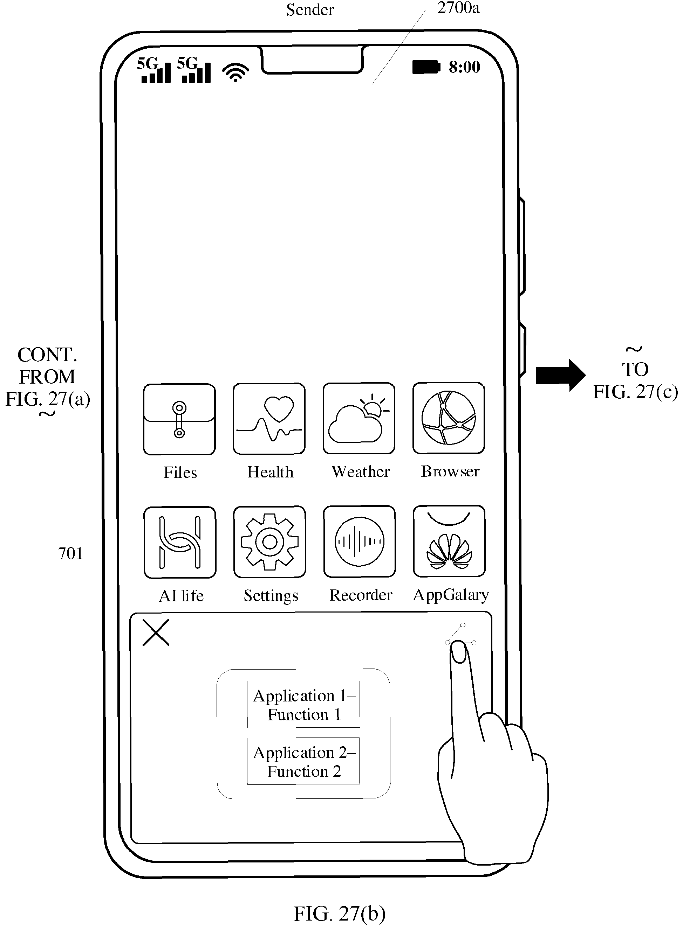

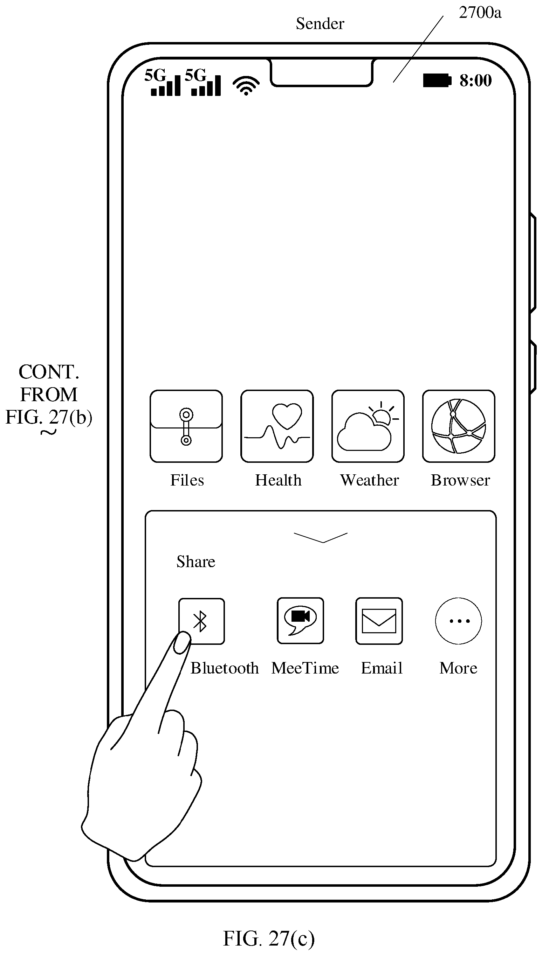

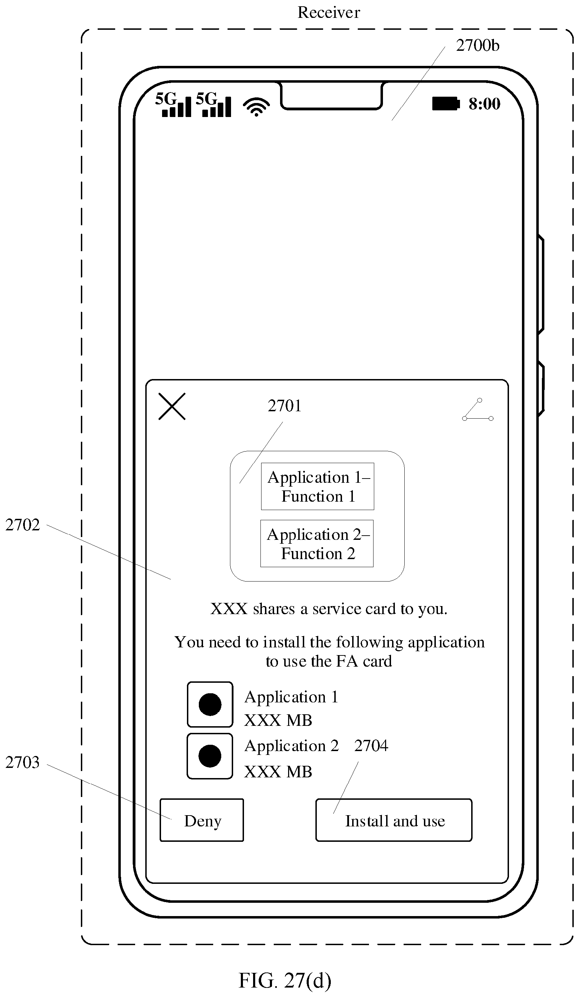

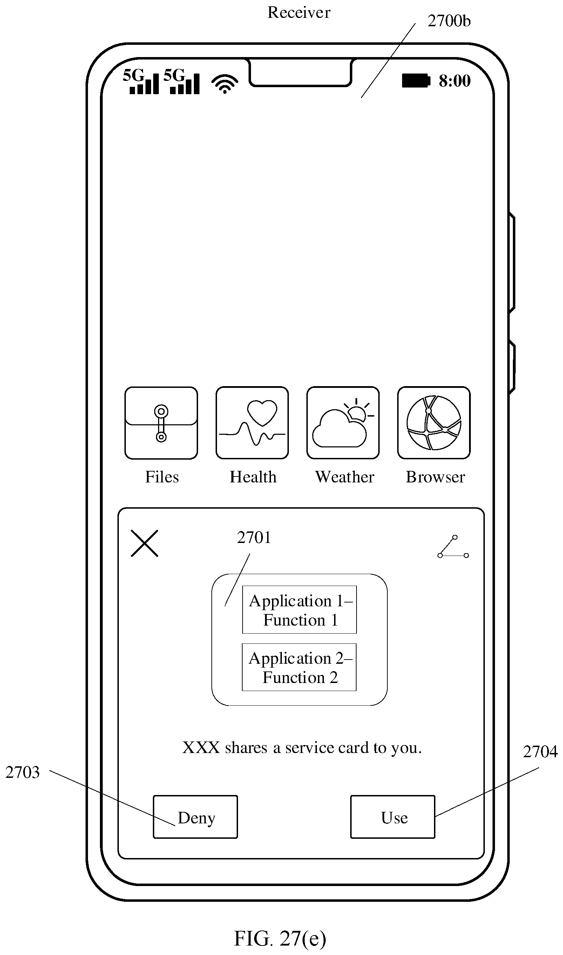

As shown in FIG. 27(a) to FIG. 27(e), a service card 2701 is displayed on a desktop of the electronic device 2700a. The service card 2701 includes a function 1 of an application 1 and a function 2 of an application 2 (that is, a service of the service card 2701 is provided by a combination of the application 1 and the application 2). When the user wants to share the service card 2702 to an electronic device 2700b, the user touches and holds the service card 2701 (as shown in FIG. 27(a)). Then a display interface of the electronic device 2600a is shown in FIG. 27(b). The user taps a sharing icon on the interface. In this case, the display interface of the electronic device 2600a is switched to that shown in FIG. 27(c). The user selects a sharing manner on the interface. After the user selects Bluetooth for sharing, correspondingly, if applications associated with the service card 2701, namely, the application 1 and the application 2, are not installed on the electronic device 2700b, a prompt box 2702 pops up on a display page of the electronic device 2700b (as shown in FIG. 27(d)). The prompt box 2702 displays the service card 2701 and an installation reminder of the associated application (used to remind the user that the service card 2701 can be used only after the application 1 and the application 2 are installed). The prompt box 2702 further includes a control 2703 (configured to deny receiving the service card 2701) and a control 2704 (configured to agree to install and use the service card 2701). When the user taps the control 2704, the electronic device 2700b installs the application 1 and the application 2, and displays the service card 2701 on a desktop. If applications associated with the service card 2701, namely, the application 1 and the application 2, are installed on the electronic device 2700b, the prompt box 2702 pops up on a display page of the electronic device 2700b (as shown in FIG. 27(e)). The prompt box 2702 displays the service card 2701, the control 2703 (configured to deny receiving the service card 2701), and the control 2704 (configured to agree to use the service card 2701). When the user taps the control 2704, the service card 2701 is displayed on the desktop of the electronic device 2700b.

A generation rule, a size, a layout manner, and the like of the service card 2701 are similar to those of the service card in the foregoing embodiments. For brevity, details are not described herein again.

It should be understood that the service card in this embodiment of this application is merely an example for description, and a service of the service card may alternatively be provided by any other combination of applications.

In this embodiment of this application, a plurality of electronic devices can share a service card with each other, and a service provided by the service card may be provided by a combination of different applications. In addition, when an application associated with the service card (the foregoing different application) is not installed at a receive end, one-tap installation may be performed by using a receive control, and the user does not need to separately install the application. This improves operation convenience, and can avoid a case in which the service card cannot be normally used due to an application version, to further improve user experience.

In some embodiments, the plurality of electronic devices can interact with each other by using the service card.

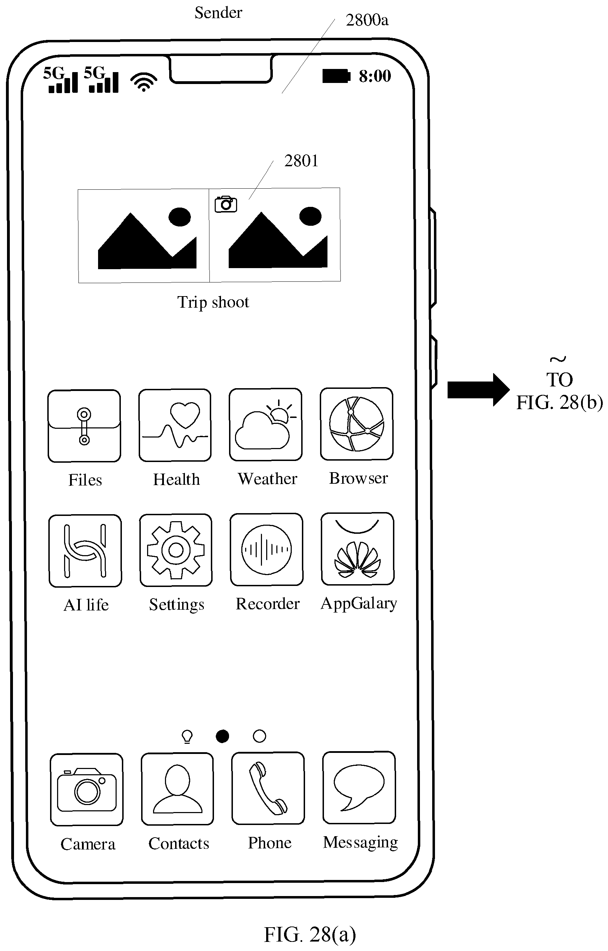

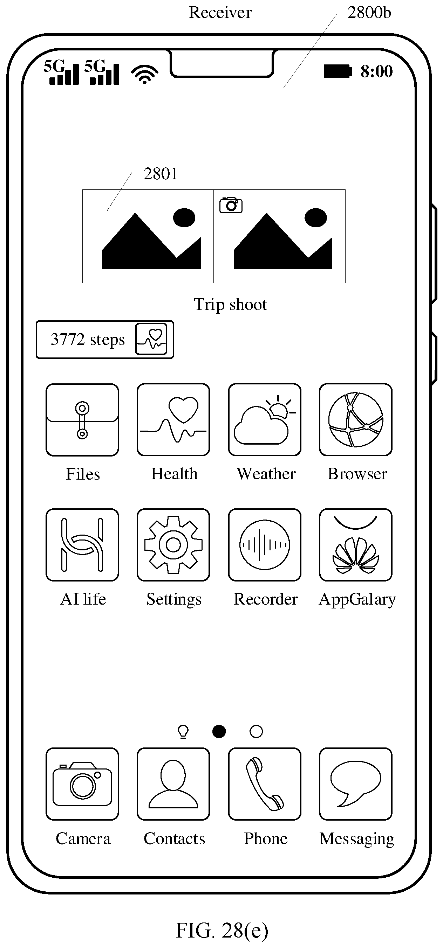

With reference to FIG. 28(a) to FIG. 29(b), the following describes a display interface for implementing interaction between electronic devices by using a service card according to an embodiment of this application.

For example, FIG. 28(a) to FIG. 29(b) are a diagram of interfaces for implementing interaction between electronic devices by using a service card according to an embodiment of this application.

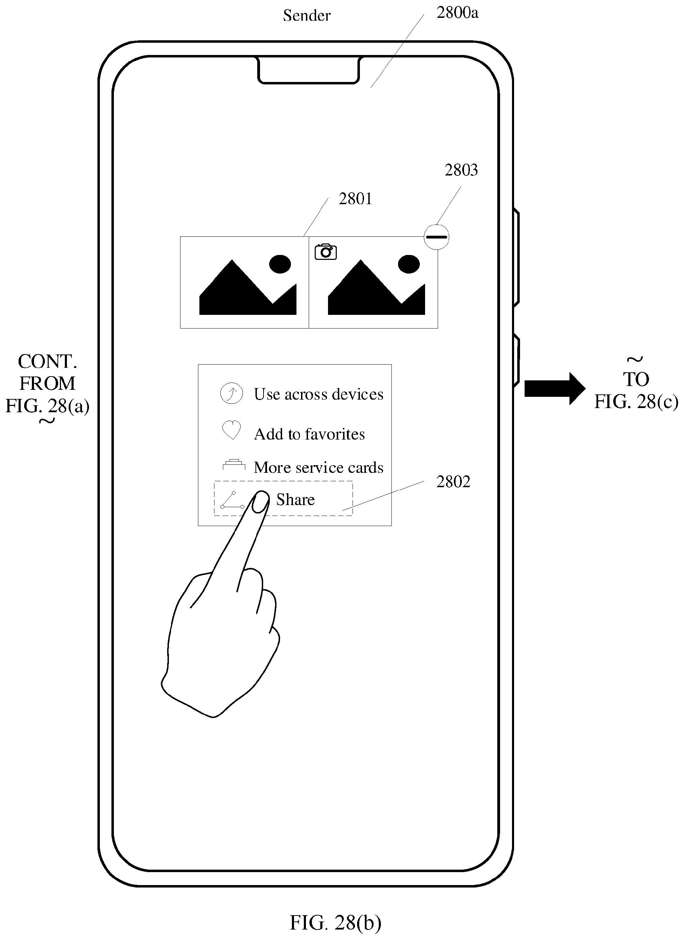

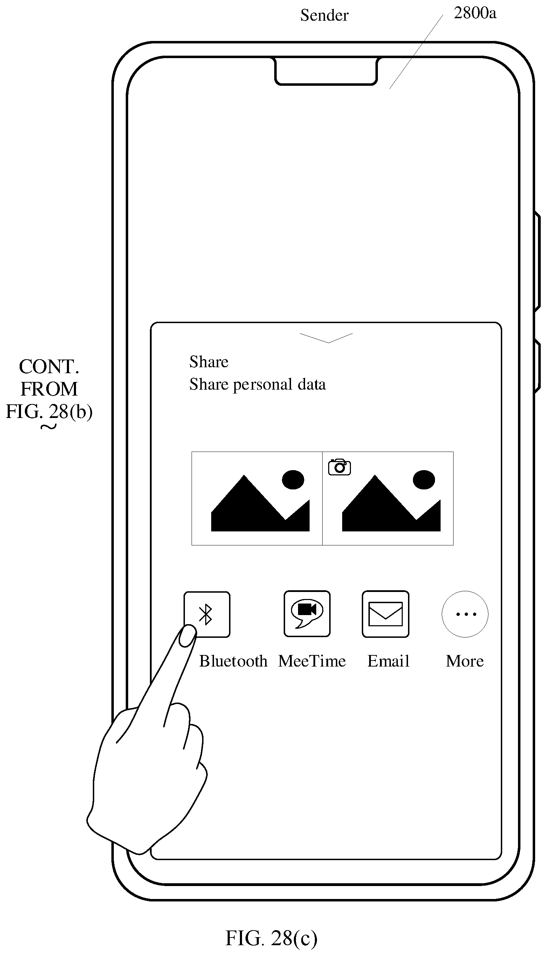

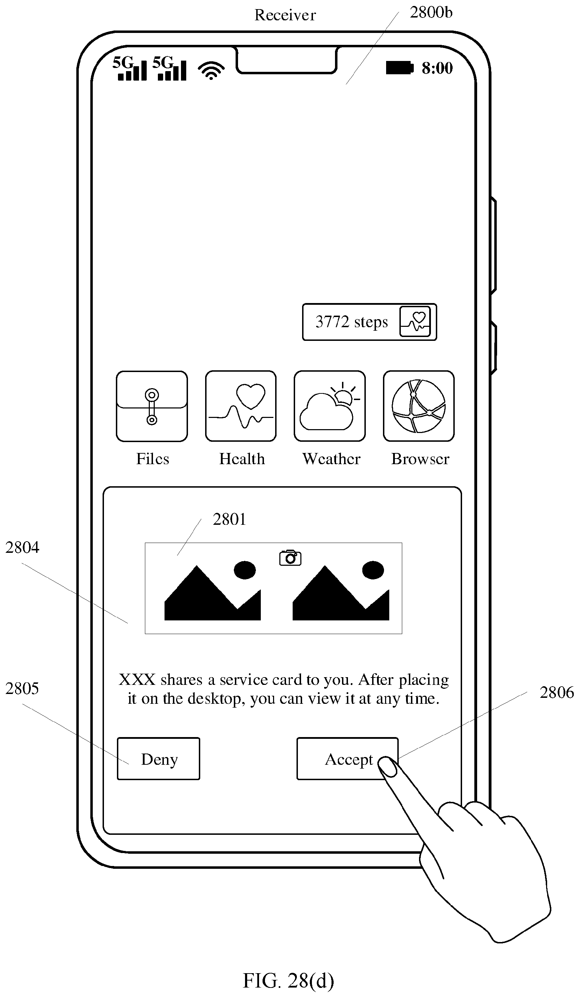

As shown in FIG. 28(a) to FIG. 28(e), a service card 2801 related to a trip shoot application is displayed on a desktop of an electronic device 2800a (as shown in FIG. 28(a)). A display interface, displayed after the user touches and holds the service card 2801, of the electronic device 2800a is shown in FIG. 28(b). On the interface, the user may share the service card 2801 by tapping a sharing icon 2802. The service card 2801 is associated with a control 2803 (configured to cancel sharing of the service card 2801). A display interface, displayed after the user taps the control 2802, of the electronic device 2800a is shown in FIG. 28(c). The user selects a sharing manner on the interface. After the user selects Bluetooth for sharing, correspondingly, a prompt box 2804 pops up on a display page of an electronic device 2800b (as shown in FIG. 28(d)). The prompt box 2804 displays the service card 2801, a control 2805 (configured to deny receiving the service card 2801), and a control 2806 (configured to receive the service card 2801). When the user taps the control 2806, the service card 2801 is displayed on a desktop of the electronic device 2800b.

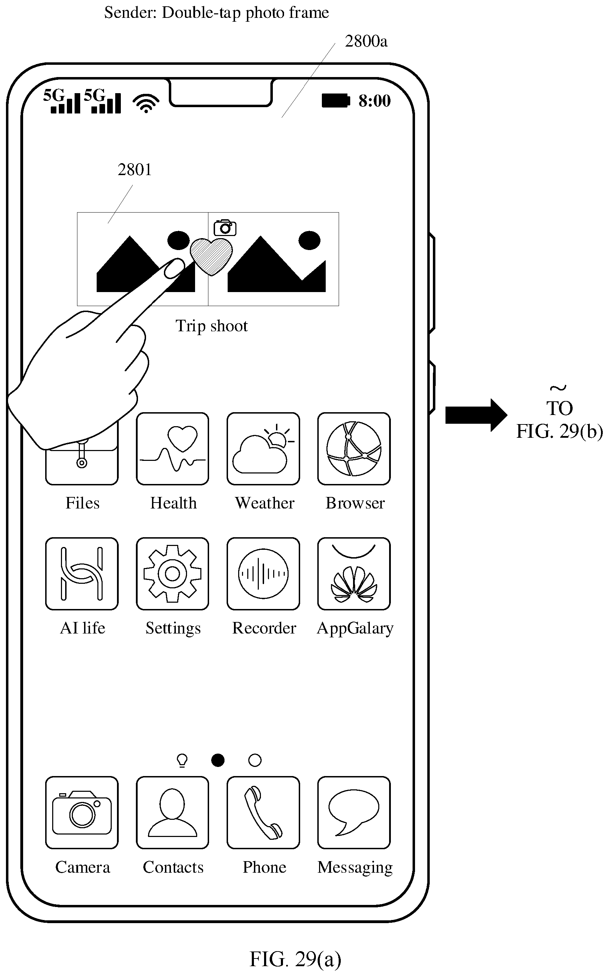

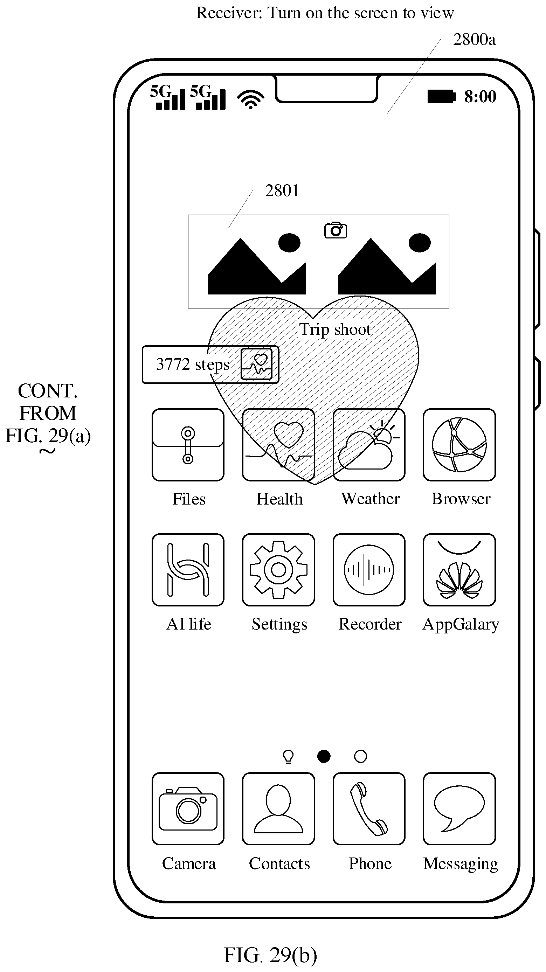

In this case, when the user double-taps the service card 2801 on a screen of the electronic device 2800a (as shown in FIG. 29(a)), a heart pattern appears on the screen of the electronic device 2800a, and at the same time, a heart pattern is also dynamically displayed on a screen of the electronic device 2800b (as shown in FIG. 29(b)).

Optionally, when the screen of the electronic device 2800b is turned on, the heart pattern is displayed.

It should be understood that this embodiment of this application merely describes an example of implementing interaction between electronic devices by using a service card, and does not constitute a limitation on this application. There may be a plurality of specific implementations of interaction between the electronic devices by using the service card, and any other method similar to the implementation method falls within the scope disclosed in this application.

A generation rule, a size, a layout manner, and the like of the service card 2801 are similar to those of the service card in the foregoing embodiments. For brevity, details are not described herein again.

In this embodiment of this application, application data of a plurality of electronic devices can be combined to form a complete service card, so that interaction between the plurality of electronic devices can be implemented by using the service card. This further improves user experience.

In some embodiments, a plurality of service cards can be combined for display.

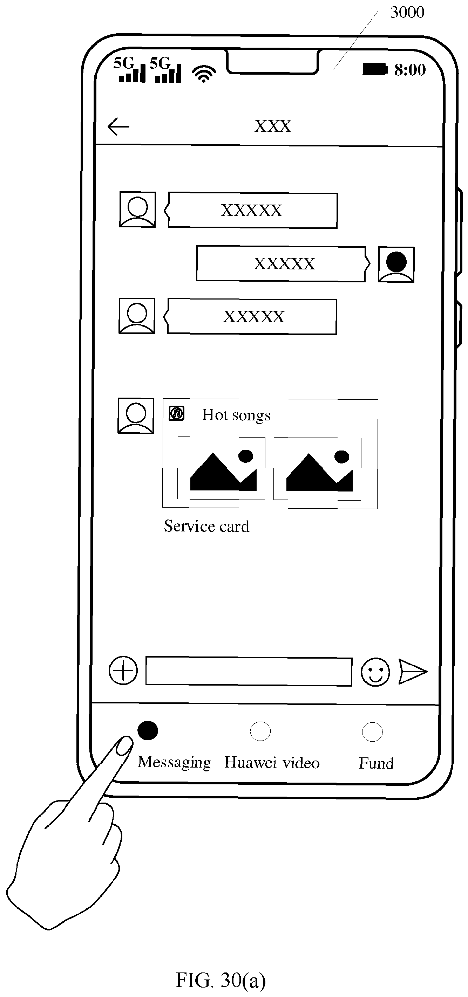

For example, FIG. 30(a) to FIG. 30(c) are a diagram of an interface for combining a plurality of service cards for display according to an embodiment of this application. This method is applicable to a scenario in which different service cards or even service cards of different applications are combined for display.

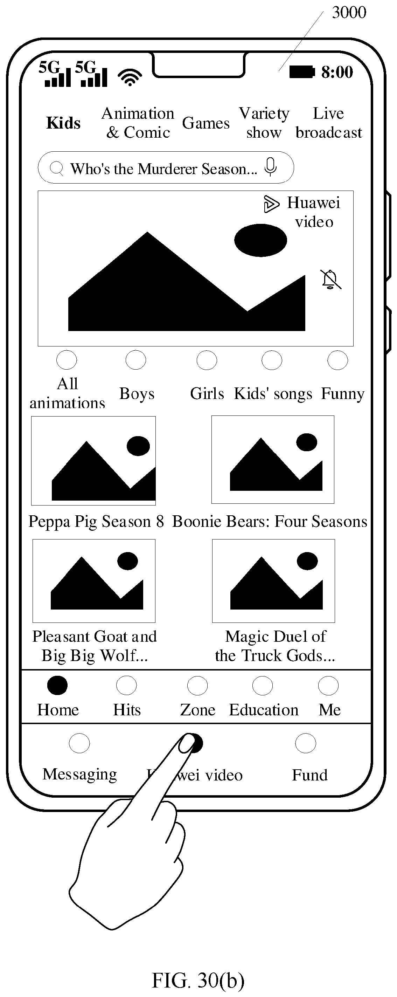

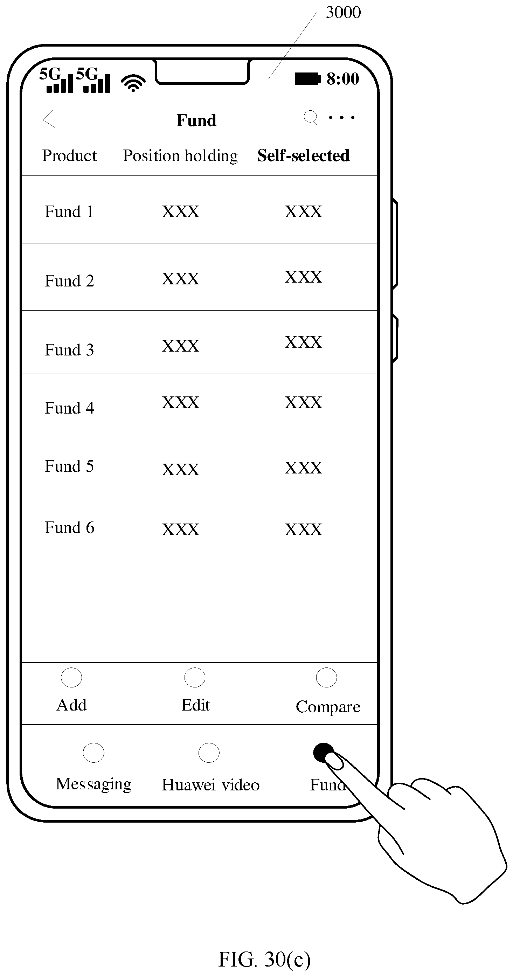

As shown in FIG. 30(a) to FIG. 30(c), a tab is displayed below the electronic device 3000. The tab includes names of a plurality of service cards, for example, Messaging, Huawei video, and Fund. The user may implement switching between the plurality of service cards by tapping the names of the service cards. For example, a display interface, displayed when the user taps the title "Messaging", of an electronic device 3000 is shown in FIG. 30(a); a display interface, displayed when the user taps the title "Huawei video", of the electronic device 3000 is shown in FIG. 30(b); and a display interface, displayed when the user taps the title "Fund", of the electronic device 3000 is shown in FIG. 30(c).

Optionally, a list of service cards in the tab in this embodiment of this application may be customized by the user.

In another implementation, the different service cards may be combined into a large service card, and the large service card is simultaneously displayed on the screen of the electronic device 3000.

In this embodiment of this application, different service cards or even service cards of different applications can be combined for display, so that the user can simultaneously view content of a plurality of service cards. This further improves user experience.

It should be understood that, in the embodiments shown in FIG. 4(a) to FIG. 30(c), each embodiment may be independently implemented, or a plurality of embodiments may be implemented in combination.

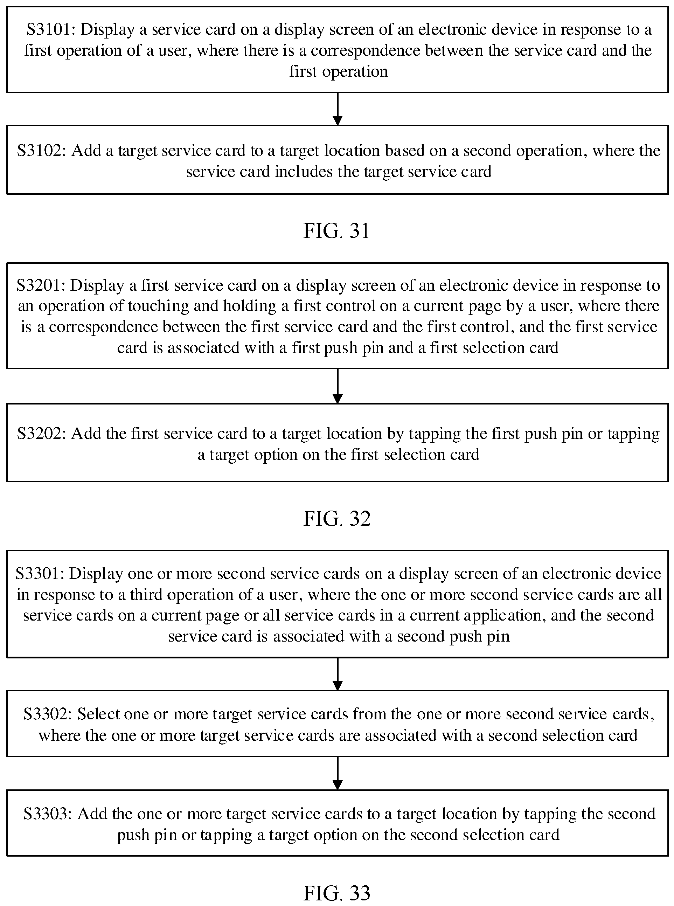

To understand a service card management method provided in embodiments of this application more clearly, for example, FIG. 31 is a schematic flowchart of a service card management method 3100 according to an embodiment of this application. As shown in FIG. 31, the method is applied to an electronic device, and a screen of the electronic device is on an application interface. The method 3100 includes the following steps.

S3101: Display a service card on the display screen of the electronic device in response to a first operation of a user.

Optionally, the service card is displayed on a card panel of the electronic device.

Optionally, the first operation may be an operation of touching and holding a target control, or may be a specific gesture operation, or may be a voice input, or may be another operation. This is not limited in this application.

There is an association relationship between the service card displayed on the card panel and the first operation. Different operations may trigger different service cards. In addition, one or more service cards may be displayed.

S3102: Add a target service card to a target location based on a second operation.

Optionally, the second operation may be an operation option associated with the service card displayed on the card panel, or may be understood as an operation of adding the target service card to the target location.

Optionally, the target location may be a desktop of the electronic device, or may be favorites of the electronic device, or may be sharing to another electronic device, or may be another location. This is not limited in this application.

In this embodiment of this application, the user can trigger, based on a specific operation, initiation of a service card related to the specific operation; and after the service card is initiated, the user can add the service card to a location such as the desktop by using a push pin, selecting an option, or the like. In this solution, more triggering manners and adding manners of the service card are provided for the user, making the triggering manners and the adding manners of the service card more flexible and convenient. This can improve user experience.

Based on the embodiment shown in FIG. 31, for example, FIG. 32 shows a service card management method 3200 according to an embodiment of this application. The method 3200 is applied to an electronic device, and a screen of the electronic device is on an application interface. As shown in FIG. 32, the method 3200 includes the following steps.

S3201: Display a first service card on the display screen of the electronic device in response to an operation of touching and holding a first control on a current page by a user, where there is a correspondence between the first service card and the first control, and the first service card is associated with a first push pin and a first selection card.

Optionally, the first service card is displayed on a card panel of the electronic device.

Optionally, the first control may be any one of a large title, a small title, a tab, a subtab, a subtitle, a search result, an entry in a list, a banner advertisement, a banner message notification, a message notification in a notification bar, or a card. In addition, the first control may be another control, for example, a shortcut key specified by a system. This is not limited in this application.

The correspondence between the first service card and the first control may be that the first service card is a service card related to content corresponding to the first control, and a service provided by the service card is a service included in the first control. For example, when the first control is a small title, the first service card is a service card associated with content below the small title, and the provided service is a service below the small title.

The first push pin is used to pin the first service card to a desktop of the electronic device, so that the first service card is displayed on the desktop of the electronic device.

Optionally, the first push pin may be replaced with any other icon having a same or similar function.

Optionally, the first selection card may include one or more of the following options: Use across devices, Add to favorites, More service cards, Share, Add to desktop, and More. In addition, the first selection card may further include another option. This is not limited in this application.

S3202: Add the first service card to a target location by tapping the first push pin or tapping a target option on the first selection card.

In an example, the user may pin the first service card to the desktop of the current electronic device by tapping the first push pin.

In another example, the user may add the first service card to favorites by tapping the option "Add to favorites" on the first selection card.

In another example, the user may share the first service card to another electronic device by tapping the option "Share" on the first selection card.

In this embodiment of this application, the user can trigger, by touching and holding a control or the like, initiation of a service card related to the control; and after the service card is initiated, the user can add the service card to a location such as the desktop by using a push pin, selecting an option, or the like. In this solution, there are various types of controls, and different controls correspond to different service cards, so that more triggering manners and adding manners of the service cards are provided for the user, making the triggering manners and the adding manners of the service cards more flexible and convenient. This can improve user experience.

Based on the embodiment shown in FIG. 31, for example, FIG. 33 shows another service card management method 3300 according to an embodiment of this application. The method 3300 is applied to an electronic device, and a screen of the electronic device is on an application interface. As shown in FIG. 33, the method 3300 includes the following steps.

S3301: Display one or more second service cards on a display screen of the electronic device in response to a third operation of a user, where the one or more second service cards are all service cards on a current page, or the one or more second service cards are all service cards in a current application.

Optionally, the second service card is associated with a second push pin.

Optionally, the second service card may be displayed on a card panel of the electronic device.

Optionally, the third operation may be an operation of performing a first gesture by the user, or may be an operation controlled by the user by using a voice, or may be another operation. This is not limited in this application.

Optionally, the first gesture operation may be any one or more of the following gesture operations: shaking the electronic device (for example, shaking up and down or shaking left and right), a gesture of sliding down with two fingers (or sliding up with two fingers) on the screen of the electronic device, and a gesture of sliding side (for example, sliding from left to right or sliding from right to left) on the screen of the electronic device. In addition, the first gesture operation may be another gesture, for example, sliding up or down with a single finger on the screen of the electronic device, or drawing an S shape on the screen of the electronic device. A specific gesture may be input by the user based on an actual situation or a habit of the user. This is not limited in this application.

Optionally, the one or more second service cards may be all service cards on the current page, or may be all service cards in the current application, or may be service cards in a partial range of the current application, for example, may be service cards related to a current title of the current application. This is not limited in this application.

It should be understood that there is a correspondence between a specific presentation status of the one or more second service cards and the first gesture.

In an example, the one or more second service cards presented when the first gesture is sliding down with two fingers of the user on the screen of the electronic device are all the service cards on the current page.

In another example, the one or more second service cards presented when the first gesture is sliding up with two fingers of the user on the screen of the electronic device are all the service cards in the current application.

Optionally, the one or more second service cards may be displayed in a half-modal form.

The second push pin (which may be replaced with a second icon) is used to pin the second service card to a desktop of the electronic device.

S3302: Select one or more target service cards from the one or more second service cards, where the one or more target service cards are associated with a second selection card.

Optionally, the second selection card may include one or more of the following options: Use across devices, Add to favorites, More service cards, Share, Add to desktop, and More. In addition, the second selection card may further include another option. This is not limited in this application.

Optionally, selecting the one or more target service cards may be sequentially tapping the target service cards, and after the selection is completed, tapping an OK icon or a complete icon.

S3303: Add the one or more target service cards to a target location by tapping the second push pin or tapping a target option on the second selection card.

In an example, the user may pin the one or more target service cards to the desktop of the current electronic device by tapping the second push pin.

In another example, the user may add the one or more target service cards to favorites by tapping an option "Add to favorites" on the second selection card.

In another example, the user may share the one or more target service cards to another electronic device by tapping an option "Share" on the second selection card.

In this embodiment of this application, the user can trigger, by using a specific gesture or the like, initiation of all service cards on the current page or in the current application, and after the service card is initiated, the user can add one or more service cards to a location such as the desktop by using a push pin, selecting an option, or the like. In this solution, more triggering manners and adding manners of the service card are provided for the user, making the triggering manners and the adding manners of the service card more flexible and convenient. This can improve user experience.

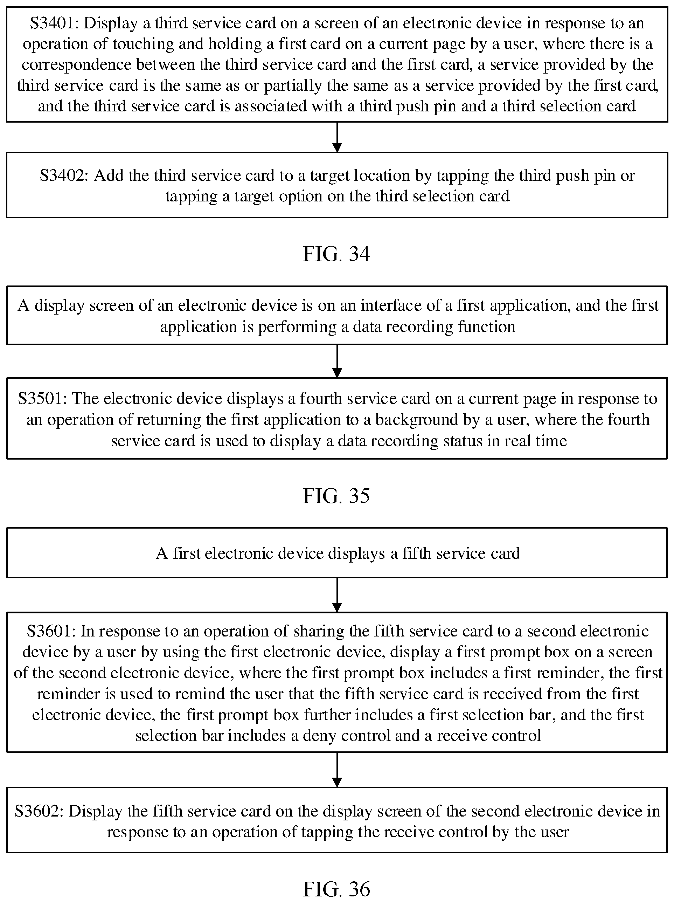

Based on the embodiment shown in FIG. 31, for example, FIG. 34 shows another service card management method 3400 according to an embodiment of this application. The method 3400 is applied to an electronic device, and a first card is displayed on a display interface of the electronic device. As shown in FIG. 34, the method 3400 includes the following steps.

S3401: The electronic device displays a third service card on a display screen of the electronic device in response to an operation of touching and holding the first card on a current page by a user, where there is a correspondence between the third service card and the first card, and a service provided by the third service card is the same as or partially the same as a service provided by the first card.

Optionally, the third service card is associated with a third push pin and a third selection card.

Optionally, the third service card may be displayed on a card panel of the electronic device.

The first card may also be considered as a service card. Optionally, the first card may be any one of the following: a notification card displayed in a notification center of the electronic device (for example, may be a message notification or a system notification), a control card displayed in a control center of the electronic device (for example, may be music playing control, screen brightness adjustment control, Bluetooth switch control, or wireless connection control), a search result card displayed on a search result page after the electronic device performs a search function (for example, may be a movie search result card), a banner notification displayed on the display screen when the electronic device receives a message notification (for example, may be a message notification received by chat software), or the like. In addition, the first card may be a service card in another scenario. This is not limited in this application.

There is a correspondence between the third service card and the first card. More specifically, the service provided by the third service card is the same as or partially the same as the service provided by the first card. For example, when the user triggers the third service card by touching and holding a first notification card (a notification card displayed in the notification center of the electronic device), the user may view a first notification message by using the third service card, and perform a further operation on this basis. For another example, when the user triggers the third service card by touching and holding a first control card (a control card displayed in the control center of the electronic device), the user may control a first control object by using the third service card.

The third push pin (which may also be replaced with a third icon) is used to pin the third service card to a desktop of the electronic device.

Optionally, the third selection card may include one or more of the following options: Use across devices, Add to favorites, More service cards, Share, Add to desktop, and More. **In** addition, the third selection card may further include another option. This is not limited in this application.

S3402: Add the third service card to a target location by tapping the third push pin or tapping a target option on the third selection card.

Optionally, after the user adds the third service card to the target location, the first card is no longer displayed on an original page of the electronic device.

Optionally, after the user cancels the third service card, the first card is displayed on an original page of the electronic device again, or when content of the service card is updated, the first card is displayed on an original page of the electronic device again.

In an example, the user may pin the third service card to the desktop of the current electronic device by tapping the third push pin.

In another example, the user may add the third service card to favorites by tapping an option "Add to favorites" on the third selection card.

In another example, the user may share the third service card to another electronic device by tapping an option "Share" on the third selection card.

In this embodiment of this application, service card conversion between different scenarios can be implemented. This improves user experience.

Based on the embodiment shown in FIG. 31, for example, FIG. 35 shows another service card management method 3500 according to an embodiment of this application. The method 3500 is applied to an electronic device, a screen of the electronic device is on an interface of a first application, and the first application is performing a data recording function. As shown in FIG. 35, the method 3500 includes the following steps.

S3501: The electronic device displays a fourth service card on a current page in response to an operation of returning the first application to a background by a user, where the fourth service card is used to display a data recording status in real time.

Optionally, the first application may be a clock, or may be sports and health (heart rate monitoring, step counting, or the like), or may be another application having a data recording function. This is not limited in this application.

Optionally, the service card in this embodiment of this application is used to display corresponding real-time data. In one case, after a real-time data function ends, the service card automatically sends a message. For example, when the service card is used for timing, the service card sends a message after the timing ends. In another case, the service card can switch between a plurality of states. For example, when the service card is a card related to a ride-hailing application, the service card can switch among a state in which a driver accepts an order, a state in which the order is running, and a state in which the order is ended.

Optionally, when a plurality of applications running in the background are performing the data recording function, a plurality of service cards may be simultaneously displayed on the current page of the electronic device, and the plurality of service cards are used to display, in real time, data recorded by the plurality of applications running in the background.

Optionally, the plurality of service cards may be displayed in an overlapping manner, or may be displayed in a combined manner, or may be displayed independently. This is not limited in this application.

In this embodiment of this application, a real-time data recording status of one or more applications running in the background can be displayed on the current page of the electronic device in a form of a service card. In this way, when using another function of the electronic device, the user can also timely view the real-time data recording status of the one or more applications running in the background, without a need to specially start a corresponding application or stay on an application interface. This can further improve user experience.

For example, with reference to FIG. 36 to FIG. 38, the following describes a method for sharing a service card between electronic devices and implementing interaction between the devices by using a service card according to an embodiment of this application.

For example, FIG. 36 shows a service card management method 3600 according to an embodiment of this application. The method 3600 is applied to an electronic device, and a fifth service card is displayed on a screen of the first electronic device. As shown in FIG. 36, the method 3600 includes the following steps.

S3601: In response to an operation of sharing the fifth service card to a second electronic device by a user by using the first electronic device, display a first prompt box on a screen of the second electronic device, where the first prompt box includes a first reminder, the first reminder is used to remind the user that the fifth service card is received from the first electronic device, the first prompt box further includes a first selection bar, and the first selection bar includes a deny control and a receive control.

The deny control is used by the user to perform an operation of denying receiving the fifth service card, and the receive control is used by the user to perform an operation of agreeing to receive the fifth service card.

Optionally, when an application associated with the fifth service card is not installed on the second electronic device, the first prompt box further includes a second reminder. The second reminder is used to remind the user of the application that needs to be installed to use the fifth service card. In this case, the receive control may be: Install and use.

Optionally, the first electronic device sharing the fifth service card to the second electronic device may be sharing with data, or may be sharing without data.

Optionally, the first electronic device sharing the fifth service card to the second electronic device may be sharing through a link or a file. The link or the file may be sent by the first electronic device to the second electronic device through a social platform.

S3602: Display the fifth service card on a display interface of the second electronic device in response to an operation of tapping the receive control by the user.

In this embodiment of this application, sharing of a service card between different electronic devices can be implemented, so that a status of the user and the like can be shared between the different electronic devices, and a sense of familiarity experience between users can be improved. This further improves user experience.

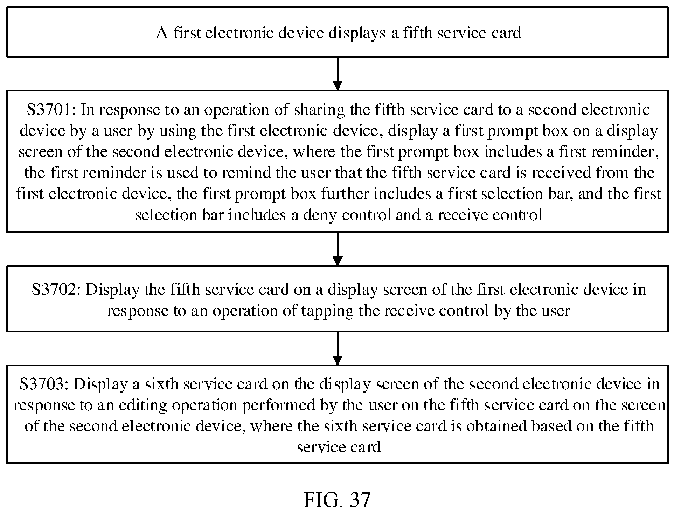

Based on the embodiment shown in FIG. 36, for example, FIG. 37 shows a service card management method 3700 according to an embodiment of this application. The method 3700 is applied to an electronic device, and a fifth service card is displayed on a screen of the electronic device. As shown in FIG. 37, the method 3700 includes the following steps.

S3701 and S3702 are completely the same as S3601 and S3602. For brevity, details are not described herein again.

S3703: Display a sixth service card on a display screen of a second electronic device in response to an editing operation performed by a user on the fifth service card on the screen of the second electronic device.

The fifth service card is associated with an edit control. When the user taps the edit control, the fifth service card enters an editing state.

It should be understood that the sixth service card is obtained based on the fifth service card.

In this embodiment of this application, collaborative work between different electronic devices can be implemented by using a service card, so that working efficiency and convenience can be improved. This further improves user experience.

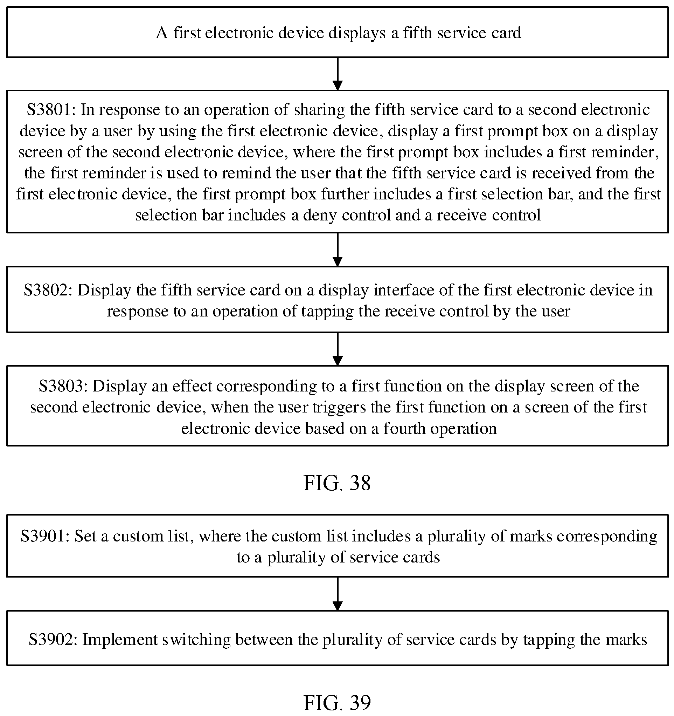

Based on the embodiment shown in FIG. 36, for example, FIG. 38 shows a service card management method 3800 according to an embodiment of this application. The method 3800 is applied to an electronic device, and a fifth service card is displayed on a screen of the electronic device. As shown in FIG. 38, the method 3800 includes the following steps.

S3801 and S3802 are completely the same as S3601 and S3602. For brevity, details are not described herein again.

S3803: Display an effect corresponding to a first function on a screen of a second electronic device, when a user triggers the first function on a screen of a first electronic device based on a fourth operation.

The first function may be, for example, a like function, or may be a function of displaying an emoticon, or may be another function that can be interacted. This is not limited in this application.

In an example, when the user double-taps the screen of the first electronic device, a dynamic heart pattern is displayed on the screen of the second electronic device.

Optionally, after the user triggers the first function on the screen of the first electronic device, when the screen of the second electronic device is turned on, the effect corresponding to the first function is displayed.

In this embodiment of this application, application data of a plurality of electronic devices can be combined to form a complete service card, so that interaction between the devices can be implemented by using the service card. This further improves user experience.

For example, FIG. 39 shows a service card management method 3900 according to an embodiment of this application. The method 3900 is applied to an electronic device. As shown in FIG. 39, the method 3900 includes the following steps.

S3901: Set a custom list, where the custom list includes a plurality of marks corresponding to a plurality of service cards.

S3902: Implement switching between the plurality of service cards by tapping the marks.

In another embodiment, the different service cards may be combined into a large service card, and the large service card is simultaneously displayed on the screen of the electronic device 3000.

In this embodiment of this application, different service cards or even service cards of different applications can be combined for display, so that the user can simultaneously view content of a plurality of service cards. This further improves user experience.

An embodiment of this application further provides an electronic device. The electronic device includes one or more processors, one or more memories, and one or more computer programs. The one or more computer programs are stored in the one or more memories. The one or more computer programs include instructions. When the instructions are executed by the one or more processors, the electronic device is enabled to perform the method according to any one of the embodiments shown in FIG. 31 to FIG. 39.

An embodiment of this application further provides a computer-readable storage medium. The storage medium stores a program or instructions. When the program or the instructions are run, the method according to any one of the embodiments shown in FIG. 31 to FIG. 39 is implemented.

One or more of the modules or units described in this specification may be implemented by software, hardware, or a combination of software and hardware. When any one of the modules or units is implemented by software, the software exists in a form of a computer program instruction, and is stored in the memory. The processor may be configured to execute the program instruction and implement the foregoing method procedure. The processor may include but is not limited to at least one of the following: a central processing unit (central processing unit, CPU), a microprocessor, a digital signal processor (DSP), a microcontroller unit (microcontroller unit, MCU), and a computing device used for running software like an artificial intelligence processor. Each computing device may include one or more cores used to execute software instructions to perform operations or processing. The processor may be built in a SoC (system on chip) or an application-specific integrated circuit (application-specific integrated circuit, ASIC), or may be an independent semiconductor chip. In addition to a core configured to perform calculation or processing by executing a software instruction, the processor may include a necessary hardware accelerator, for example, a field programmable gate array (field programmable gate array, FPGA), a PLD (programmable logic device), or a logic circuit that implements a dedicated logic operation.

When the modules or units described in this specification are implemented by hardware, the hardware may be any one of or any combination of a CPU, a microprocessor, a DSP, an MCU, an artificial intelligence processor, an ASIC, a SoC, an FPGA, a PLD, a dedicated digital circuit, a hardware accelerator, or a non-integrated discrete device. The hardware may run necessary software to execute the foregoing method procedure or execute the foregoing method procedure without software.

When the modules or units described in this specification are implemented by software, a part or all of the modules or units may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in the computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (solid state disk, SSD)), or the like.

A person of ordinary skill in the art may be aware that the units and method steps described with reference to the examples in embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in the computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computing device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A service card management method, wherein the method is applied to an electronic device; and the method comprises:
displaying, by the electronic device, a first service card on a screen of the electronic device in response to an operation of touching and holding a first control on a current page of the electronic device by a user, wherein the first service card is used to display content corresponding to the first control, and is further used to provide, for the user, an operation entry of the content corresponding to the first control; and
displaying, by the electronic device, the first service card at a target location in response to a second operation of the user, wherein the second operation is an operation of determining the target location, and the target location comprises a desktop of the electronic device.

2. The method according to claim 1, wherein the first control comprises any one of the following controls: a large title, a small title, a tab, a subtab, a subtitle, a list, a banner advertisement, and a blank area of a page.

3. The method according to claim 1 or 2, wherein the first service card is associated with a first icon; and the displaying, by the electronic device, the first service card at a target location in response to a second operation of the user comprises:
displaying, by the electronic device, the first service card on the desktop of the electronic device in response to an operation of tapping the first icon by the user.

4. The method according to any one of claims 1 to 3, wherein the first service card is associated with a first selection card; and the displaying, by the electronic device, the first service card at a target location in response to a second operation of the user comprises:
sharing, by the electronic device, the first service card to a second electronic device in response to an operation of tapping a share control on the first selection card by the user.

5. A service card management method, wherein the method is applied to an electronic device, and the electronic device displays an application page; and the method comprises:
displaying, by the electronic device, one or more second service cards on a screen of the electronic device in response to a third operation of a user, wherein the one or more second service cards are all service cards on the application page, or the one or more second service cards are all service cards of the application, and the third operation comprises a first gesture operation;
determining, by the electronic device, one or more target service cards based on an operation of selecting the one or more target service cards from the one or more second service cards by the user; and
displaying, by the electronic device, the one or more target service cards at a target location in response to a second operation of the user, wherein the second operation is an operation of determining the target location, and the target location comprises a desktop of the electronic device.

6. The method according to claim 5, wherein the first gesture operation comprises any one or more of the following gesture operations: shaking the electronic device, a gesture of sliding down with two fingers on the screen of the electronic device, a gesture of sliding up with two fingers on the screen of the electronic device, and a gesture of sliding sideways on the screen of the electronic device.

7. The method according to claim 5 or 6, wherein the one or more target service cards are associated with a second icon; and the displaying, by the electronic device, the one or more target service cards at a target location in response to a second operation of the user comprises:
displaying, by the electronic device, the one or more target service cards on the desktop of the electronic device in response to an operation of tapping the second icon by the user.

8. The method according to any one of claims 5 to 7, wherein the one or more target service cards are associated with a second selection card; and the displaying, by the electronic device, the one or more target service cards at a target location in response to a second operation of the user comprises:
sharing, by the electronic device, the one or more target service cards to a second electronic device in response to an operation of tapping a share control on the second selection card by the user.

9. A service card management method, wherein the method is applied to an electronic device, and a first card is displayed on a current page of the electronic device; and the method comprises:
displaying, by the electronic device, a third service card on a screen of the electronic device in response to an operation of touching and holding the first card by a user, wherein a service provided by the third service card is the same as or partially the same as a service provided by the first card; and
displaying, by the electronic device, the third service card at a target location in response to a second operation of the user, wherein the second operation is an operation of determining the target location, and the target location comprises a desktop of the electronic device.

10. The method according to claim 9, wherein the third service card is associated with a third icon; and the displaying, by the electronic device, the third service card at a target location in response to a second operation of the user comprises:
displaying, by the electronic device, the third service card on the desktop of the electronic device in response to an operation of tapping the third icon by the user.

11. The method according to claim 9 or 10, wherein the third service card is associated with a third selection card; and the displaying, by the electronic device, the third service card at a target location in response to a second operation of the user comprises:
sharing, by the electronic device, the third service card to a second electronic device in response to an operation of tapping a share control on the third selection card by the user.

12. A service card management method, wherein the method is applied to an electronic device, a display screen of the electronic device is on a page of a first application, and the first application is performing a data recording function; and the method comprises:
displaying, by the electronic device, a fourth service card on a current page of the electronic device in response to an operation of switching the first application by the user to run in a background, wherein the fourth service card is used to display, in real time, data recorded by the first application.

13. The method according to claim 12, wherein the fourth service card is associated with a fourth selection card; and the method further comprises:
sharing, by the electronic device, the fourth service card to a second electronic device in response to an operation of tapping a share control on the fourth selection card by the user.

14. A service card management method, wherein a fifth service card is displayed on a screen of an electronic device; and the method comprises:
in response to an operation of sharing the fifth service card to a second electronic device by a user by using the electronic device, displaying, by the second electronic device, a first prompt box on a screen of the second electronic device, wherein the first prompt box comprises a first reminder, the first reminder is used to remind the user that the fifth service card is received from the electronic device, the first prompt box further comprises a first selection bar, and the first selection bar comprises a deny control and a receive control; and
displaying the fifth service card on the screen of the second electronic device in response to an operation of tapping the receive control by the user.

15. The method according to claim 14, wherein the method further comprises:
when detecting that an application associated with the fifth service card is not installed on the second electronic device, displaying, by the second electronic device, a second reminder on the screen of the second electronic device, wherein the second reminder is located in the first prompt box, and the second reminder is used to remind the user that the application associated with the fifth service card needs to be installed to use the fifth service card.

16. The method according to claim 15, wherein the displaying the fifth service card on the screen of the second electronic device in response to an operation of tapping the receive control by the user comprises:
in response to the operation of tapping the receive control by the user, installing, by the second electronic device, the application associated with the fifth service card, and displaying the fifth service card on the screen of the second electronic device.

17. The method according to any one of claims 14 to 16, wherein the fifth service card shared by the electronic device to the second electronic device carries data related to the fifth service card.

18. The method according to any one of claims 14 to 17, wherein the sharing, by the electronic device, the fifth service card to the second electronic device comprises:
sending, by the electronic device, the fifth service card to the second electronic device through a social platform in a form of a link or a file.

19. The method according to any one of claims 14 to 18, wherein the fifth service card is associated with an edit control; and the method further comprises:
displaying, by the second electronic device, the fifth service card in a to-be-edited state on the screen of the second electronic device in response to an operation of tapping the edit control by the user; and
displaying, by the second electronic device, a sixth service card on the screen of the second electronic device in response to an editing operation of the user on the fifth service card, wherein the sixth service card is obtained based on the fifth service card.

20. The method according to claim 19, wherein the sixth service card comprises all content of the fifth service card.

21. The method according to any one of claims 14 to 19, wherein the method further comprises:
displaying a first effect on the screen of the second electronic device in response to a fourth operation performed by the user on the fifth service card on the screen of the electronic device, wherein the fourth operation is an operation of triggering a first function of the fifth service card, and the first effect is an effect corresponding to the first function.

22. The method according to any one of claims 14 to 21, wherein the fifth service card comprises one or more services.

23. The method according to claim 22, wherein the one or more services are services provided by different applications.

24. The method according to any one of claims 1 to 13, wherein the method further comprises:
setting a custom list, wherein the custom list comprises a plurality of marks corresponding to a plurality of service cards; and
implementing switching between the plurality of service cards by tapping the plurality of marks.

25. An electronic device, comprising:
one or more processors;
one or more memories; and
one or more computer programs, wherein the one or more computer programs are stored in the one or more memories, and the one or more computer programs comprise instructions; and when the instructions are executed by the one or more processors, the electronic device is enabled to perform the method according to any one of claims 1 to 24.

26. A computer-readable storage medium, wherein the storage medium stores a program or instructions; and when the program or the instructions are run, the method according to any one of claims 1 to 24 is implemented.

27. A chip, wherein the chip stores instructions; and when the instructions are run, the method according to any one of claims 1 to 24 is implemented.
